(19) Europäisches Patentamt
European Patent Office
Office européen des brevets

(11) **EP 3 146 306 B1**

(12) **FASCICULE DE BREVET EUROPEEN**

(45) Date de publication et mention
de la délivrance du brevet:
**06.11.2019 Bulletin 2019/45**

(21) Numéro de dépôt: **15726081.1**

(22) Date de dépôt: **22.05.2015**

(51) Int Cl.:
**G01M 9/06** (2006.01)

(86) Numéro de dépôt international:
**PCT/EP2015/061464**

(87) Numéro de publication internationale:
**WO 2015/177364 (26.11.2015 Gazette 2015/47)**

(54) **DISPOSITIF ET PROCÉDÉ DE MESURE D'UNE GRANDEUR PHYSIQUE D'UN ÉCOULEMENT DE FLUIDE**

VORRICHTUNG UND VERFAHREN ZUR MESSUNG EINER PHYSIKALISCHEN GRÖSSE EINES FLUIDSTROMES

DEVICE AND METHOD FOR MEASURING A PHYSICAL MAGNITUDE OF A FLUID FLOW

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.05.2014 FR 1454675**

(43) Date de publication de la demande:
**29.03.2017 Bulletin 2017/13**

(73) Titulaires:
• **CENTRE NATIONAL DE LA RECHERCHE SCIENTIFIQUE (CNRS)**
**75016 Paris (FR)**
• **Ecole Normale Supérieure de Cachan**
**94230 Cachan (FR)**

(72) Inventeurs:
• **PLACKO, Dominique**
**F-94000 Creteil (FR)**
• **RIVOLLET, Alain**
**F-78350 Jouy en Josas (FR)**
• **BORE, Thierry**
**F-75014 Paris (FR)**

(74) Mandataire: **IPAZ**
**Parc Les Algorithmes, Bâtiment Platon**
**CS 70003 Saint-Aubin**
**91192 Gif-sur-Yvette Cedex (FR)**

(56) Documents cités:
**WO-A1-2011/092210 FR-A1- 2 895 544**
**US-A- 5 136 881**

• **DAO C M ET AL: "Wave propagation in a fluid wedge over a solid half-space - Mesh-free analysis with experimental verification", INTERNATIONAL JOURNAL OF SOLIDS AND STRUCTURES, NEW YORK, NY, US, vol. 46, no. 11-12, 1 juin 2009 (2009-06-01), pages 2486-2492, XP026062744, ISSN: 0020-7683, DOI: 10.1016/J.IJSOLSTR.2009.01.035 [extrait le 2009-02-11]**
• **TAMAKI YANAGITA ET AL: "Ultrasonic field modeling by distributed point source method for different transducer boundary conditions", THE JOURNAL OF THE ACOUSTICAL SOCIETY OF AMERICA, vol. 126, no. 5, 1 janvier 2009 (2009-01-01), page 2331, XP055180938, ISSN: 0001-4966, DOI: 10.1121/1.3203307**
• **BANERJEE ET AL: "Ultrasonic field modeling in plates immersed in fluid", INTERNATIONAL JOURNAL OF SOLIDS AND STRUCTURES, NEW YORK, NY, US, vol. 44, no. 18-19, 19 juillet 2007 (2007-07-19), pages 6013-6029, XP022164627, ISSN: 0020-7683, DOI: 10.1016/J.IJSOLSTR.2007.02.011**
• **TRIBIKRAM KUNDU ET AL: "Ultrasonic field modeling: a comparison of analytical, semi-analytical, and numerical techniques", IEEE TRANSACTIONS ON ULTRASONICS, FERROELECTRICS AND FREQUENCY CONTROL, IEEE, US, vol. 57, no. 12, 1 décembre 2010 (2010-12-01), pages 2795-2807, XP011340036, ISSN: 0885-3010, DOI: 10.1109/TUFFC.2010.1753**

- **BANERJEE SOURAV ET AL: "ULTRASONIC FIELD MODELING IN MULTILAYERED FLUID STRUCTURES USING THE DISTRIBUTED POINT SOURCE METHOD TECHNIQUE", JOURNAL OF APPLIED MECHANICS, NEW YORK, NY, vol. 73, no. 4, 1 juillet 2006 (2006-07-01), pages 598-609, XP009083281, ISSN: 0021-8936, DOI: 10.1115/1.2164516**
- **TIRUKKAVALLURI RAGHU RAM ET AL: "Ultrasonic Field Modeling of Transient Wave Propagation in Homogenous and Non-Homogenous Fluid Media Using Distributed Point Source Method (DPSM)", INTERNET CITATION, 19 septembre 2008 (2008-09-19), pages 1-113, XP002631009, Extrait de l'Internet: URL:http://dspace.thapar.edu:8080/dspace/b itstream/10266/660/1/raghu+final+thesis.pd f [extrait le 2011-04-01]**

**Description**

Contexte de l'invention

L'invention concerne un procédé de mesure d'une grandeur physique d'un écoulement de fluide.

Le domaine de l'invention est la mécanique des fluides.

Un domaine plus particulier de l'invention concerne la détermination d'une grandeur physique d'un écoulement de fluide autour d'au moins un profil, tel que, par exemple, la pression du fluide et/ou la vitesse du fluide. Un domaine de l'invention concerne également l'optimisation des profils en vue de diminuer les traînées, ainsi que l'amélioration des algorithmes de fonctionnement des simulateurs de vol.

Un domaine de l'invention est également la représentation des écoulements de fluides autour d'objets mobiles.

On peut citer des profils d'ailes d'avion pour lesquels on souhaite évaluer la traînée et la portance.

On connaît des méthodes de calcul en deux dimensions par points singuliers ou analytiquement.

On connaît également les simulations en trois dimensions par éléments finis.

L'une des difficultés en mécanique des fluides est d'acquérir la valeur de la grandeur physique de l'écoulement dans un espace à trois dimensions.

Une autre difficulté est de modéliser en mécanique des fluides des profils ou objets complexes en trois dimensions.

En effet, le fait de devoir mesurer une grandeur physique d'un écoulement de fluide en trois dimensions alourdit considérablement les temps de calcul.

On connaît, par les documents suivants, des cas d'application de la méthode DPSM pour le calcul de la propagation d'une onde dans un espace contenant un fluide et un solide, au moyen du calcul de sources réparties :

- « Wave propagation in a fluid wedge over a solid half-space - Mesh-free analysis with experimental verification »; Cac Minh Dao, Samik Das, Sourav Banerjee, Tribikram Kundu; International Journal of Solids and Structures, New-York, US; vol. 46, n°11-12, 1er juin 2009, pages 2486-2492 (D1),
- « Mesh-free distributed point source method for modeling viscous fluid motion between disks vibrating at ultrasonic frequency »; Yuji Wada, Tribikram Kundu, Kentaro Nakamura; The Journal of the Acoustical Society of America, American Institute of Physics for the Acoustical Society of America, New York, US; vol. 136, n°2, août 2014, pages 466-474 (D2),
- « Ultrasonic field modeling by distributed point source method for different transducer boundary conditions »; Tamaki Yanagita, Tribikram Kundu, Dominique Placko; The Journal of the Acoustical Society of America; vol. 126, n°5, Novembre 2009, page 2331 (D3),
- « Ultrasonic field modeling in plates immersed in fluid »; Sourav Banerjee, Tribikram Kundu; International Journal of Solids and Structures, New York, US; vol. 44, n°18-19, 2007, pages 6013-6029 (D4),
- « Ultrasonic field modeling : a comparison of analytical, semi-analytical, and numerical techniques »; Tribikram Kundu, Dominique Placko, Ehsan Kabiri Rahani, Tamaki Yanagita, Cac Minh Dao; IEEE Transactions on Ultrasonics, Ferroelectrics and Frequency Control, IEEE, US; vol. 57, n°12, décembre 2010, pages 2795-2807 (D5),
- « Ultrasonic field modeling in multilayered fluid structures using the distributed point source method technique »; Sourav Banerjee, Tribikram Kundu, Dominique Placko; vol. 73, n°4, juillet 2006, pages 598-609 (D6),
- WO 2011/092210 A1 (D7),
- FR 2 895 544 A1 (D8),
- « Ultrasonic Field Modeling of Transient Wave Propagation in Homogenous and Non-Homogenous Fluid Media Using Distributed Point Source Method (DPSM) »; Raghu Ram Tirukkavalluri, Dr. Abhijit Mukherjee, Sandeep Sharma; Internet Citation, 2008, pages 1-113 (D9).

Toutefois, les sources calculées dans ces documents ne permettent pas de modéliser correctement un écoulement de fluide. En effet, en mécanique des fluides, les équations sont non linéaires, notamment à cause du terme de convection fluidique n'intervenant pas dans la modélisation d'ondes. Au contraire, pour la propagation des ondes, les équations ont été linéarisées autour d'un point de fonctionnement. Aussi, on ne peut pas assimiler une onde ultrasonore se propageant dans un fluide selon l'état de la technique à un écoulement de fluide. La propagation d'une onde ultrasonore dans un fluide ne fait intervenir qu'un faible déplacement oscillatoire ou alternatif de particules de fluide autour d'une position d'équilibre, c'est-à-dire que certaines particules de fluide qui sont le véhicule de la propagation de l'onde ultrasonore de proche en proche se déplacent chacune d'une faible longueur et reviennent à leur position d'équilibre d'une manière répétitive. La propagation d'une onde ultrasonore dans un fluide relève donc d'un déplacement microscopique alternatif de certaines particules de fluide, et non d'un déplacement macroscopique de l'ensemble du fluide pour un écoulement de fluide.

Ainsi, par exemple dans le cas où le fluide est l'air, les documents D1 à D9 ne permettent pas de tenir compte

EP 3 146 306 B1

de tourbillons à proximité d'une aile d'avion.

L'invention vise à tenir compte des termes de convection ou de turbulence propre à un écoulement de fluide arrivant au voisinage d'une interface.

L'invention vise à obtenir un dispositif et un procédé, qui permettent de mesurer au moins une grandeur physique d'au moins un écoulement de fluide dans un espace tridimensionnel, qui pallient les inconvénients de l'état de la technique, en étant fiables, rapides et directement applicables à la mécanique des fluides.

Résumé de l'invention

A cet effet, un premier mode de réalisation de l'invention prévoit un dispositif de mesure d'au moins une première grandeur physique d'au moins un écoulement de fluide dans un espace tridimensionnel ayant au moins une interface prédéterminée, située entre au moins deux milieux, caractérisé en ce que le dispositif comporte :

au moins un calculateur ayant des moyens de prescription d'au moins deux première et deuxième conditions aux limites concernant la première grandeur physique de l'écoulement de fluide prise au moins en un premier point test prédéterminé de l'interface, associées à respectivement au moins une première source et au moins une deuxième source, différentes l'une de l'autre et réparties respectivement en des positions prescrites, distinctes de l'interface, la première source et la deuxième source étant choisies parmi des sources ponctuelles de débit massique de fluide et/ou de force, le calculateur ayant des moyens de calcul configurés pour calculer, par méthode de calcul des sources ponctuelles réparties, une première valeur de la première grandeur physique à partir de la première condition aux limites et d'au moins la première source et au moins une deuxième valeur de la première grandeur physique à partir d'au moins la deuxième condition aux limites et d'au moins la deuxième source, en au moins un deuxième point de l'espace, différent du premier point test, puis pour combiner les valeurs obtenues respectivement à partir des conditions aux limites et sources afin de calculer la première grandeur physique.

Bien entendu, il peut être prévu comme deuxième condition aux limites au moins une ou plusieurs autres conditions aux limites, différentes ou pas. Bien entendu, il peut être prévu comme deuxième source une ou plusieurs autres sources. Bien entendu, il peut être prévu de calculer comme deuxième valeur une ou plusieurs autres valeurs.

Grâce à l'invention, du fait de la nature différente des première et deuxième sources, par exemple de leurs orientations directionnelles différentes pour l'émission de fluide ou de force, on arrive à calculer la première grandeur physique de l'écoulement de fluide (par exemple sa vitesse en un ou plusieurs points) pour tenir compte des phénomènes de tourbillons. Du fait que les premières et la ou les autres sources calculées sont de natures différentes, on arrive à prendre en compte les variations de vitesse des particules de fluide et la vorticité du fluide. Ainsi, on peut par exemple superposer à la première valeur calculée pour la ou les premières sources, la deuxième valeur pouvant tenir compte de deuxièmes conditions aux limites différentes des premières conditions aux limites, pour avoir une modélisation plus proche de la réalité et ainsi arriver à mesurer un écoulement ayant de la vorticité.

Un deuxième mode de réalisation de l'invention prévoit un procédé de mesure d'au moins une première grandeur physique d'au moins un écoulement de fluide dans un espace tridimensionnel ayant au moins une interface prédéterminée, située entre au moins deux milieux, caractérisé en ce que

au cours d'une première itération on prescrit par au moins un calculateur au moins une première condition aux limites concernant la première grandeur physique de l'écoulement de fluide prise en au moins un premier point test prédéterminé de l'interface, associée à respectivement au moins une première source située en une position associée, prescrite et distincte de l'interface, on calcule par le calculateur par méthode de calcul des sources ponctuelles réparties, en au moins un deuxième point de l'espace, différent du premier point test, une première valeur de la première grandeur physique à partir de la première condition aux limites et d'au moins la première source,

au cours d'une deuxième itération, on prescrit par le calculateur au moins une deuxième condition aux limites concernant la première grandeur physique de l'écoulement de fluide prise au premier point test prédéterminé de l'interface, associée à respectivement au moins une deuxième source située en une position associée, prescrite et distincte de l'interface, on calcule par le calculateur par méthode de calcul des sources ponctuelles réparties, une deuxième valeur de la première grandeur physique en le deuxième point de l'espace à partir de la deuxième condition aux limites et d'au moins la deuxième source,

la première source et la deuxième source étant différentes l'une de l'autre et et étant choisies parmi des sources ponctuelles de débit massique de fluide et/ou de force,

on calcule la première grandeur physique en combinant par le calculateur la première valeur et la deuxième valeur.

Bien entendu, il peut être prévu plusieurs deuxièmes itérations.

Un troisième mode de réalisation de l'invention est un programme d'ordinateur, comportant des instructions pour la mise en œuvre du procédé de mesure tel que décrit ci-dessus, lorsqu'il est mis en œuvre sur un calculateur.

4

Liste des figures des dessins

L'invention sera mieux comprise à la lecture de la description qui va suivre, donnée uniquement à titre d'exemple non limitatif en référence aux dessins annexés, sur lesquels :

- les figures 1A et 1B représentent une interface baignant dans un fluide, dont on cherche à déterminer au moins une grandeur physique par le procédé et le dispositif de mesure suivant un mode de réalisation de l'invention,

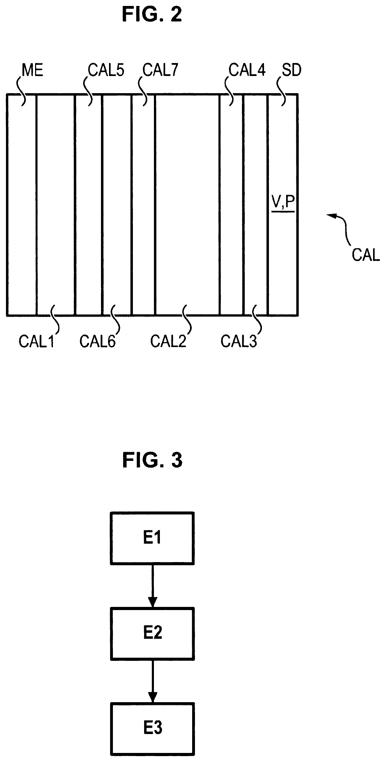

- la figure 2 représente un synoptique modulaire d'un dispositif de mesure permettant la mise en œuvre du procédé de mesure suivant un mode de réalisation de l'invention,
- la figure 3 représente un organigramme du procédé de mesure suivant un mode de réalisation de l'invention,
- les figures 4A, 4B, 15D, 15E, 15F, 19B, 19C, 36B représentent une interface baignant dans un fluide, dont on cherche à déterminer au moins une grandeur physique par le procédé de mesure et le dispositif suivant un mode de réalisation de l'invention,
- les figures 5A, 5B, 6A, 6B, 7A, 7B, 8, 9, 10, 11A, 11B, 12A, 12B, 12C, 12D, 12E, 12F, 12G, 13A, 13B, 14A, 14B, 15A, 15B, 15C, 16A, 16B, 17A, 17B, 17C, 18A, 18B, 19N, 19P, 19O, 19Q, 19R, 19S, 19T, 19U, 19V, 36C, 36D, 37A, 37B, 37C, 37D, 37E, 37F, 37G, 40A, 40B, 40C, 41A, 41B, 41C, 44A, 44b, 44C, 45A, 45B, 45C, 52 à 60 représentent des grandeurs physiques d'un écoulement de fluide, ayant été calculées par des modes de réalisation suivant l'invention,
- les figures 15D, , 16C, 16D, 16E, 16F, 16G, 16H, 18C, 18D, 18E, 18F, 18G, 18H, , 19D, 19E, 19F, 19G, 19H, 19I, 19J, 19K, 19L, 19M, 36A, 42A, 42B, 42C, 42D, 42E, 42F, 42G, 42H, 43A, 43B, 43C, 43D, 43E, 43F, 43G, 43H, 46A, 46B, 46C, 46D, 46E, 46F, 46G, 46H, 47A, 47B, 47C, 47D, 47E, 47F, 47G, 47H, 48A, 48B, 48C, 48D, 49A, 49B, 49C, 49D, représentent la valeur des sources selon différents exemples,
- les figures 19A, 20, 21, 22, 23, 24, 25, 26, 27A, 27B, 27C, 28A, 28B, 28C, 29, 30, 31, 32, 33, 34, 38A, 38B, 38C, 50, 51 représentent des modes de réalisation du procédé de mesure et du dispositif de mesure suivant l'invention,
- la figure 35 représente un organigramme récapitulant 13 cas particuliers qui seront traités dans la suite de la description.

Description détaillée de l'invention

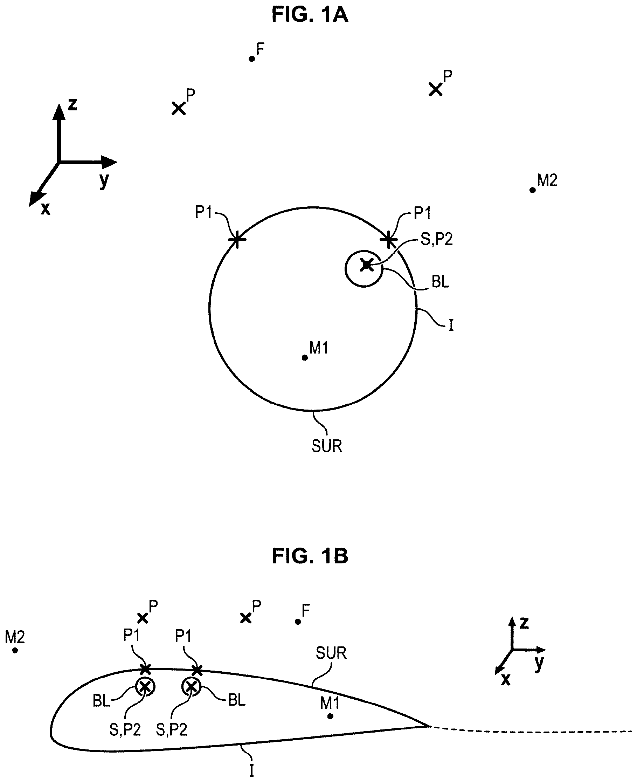

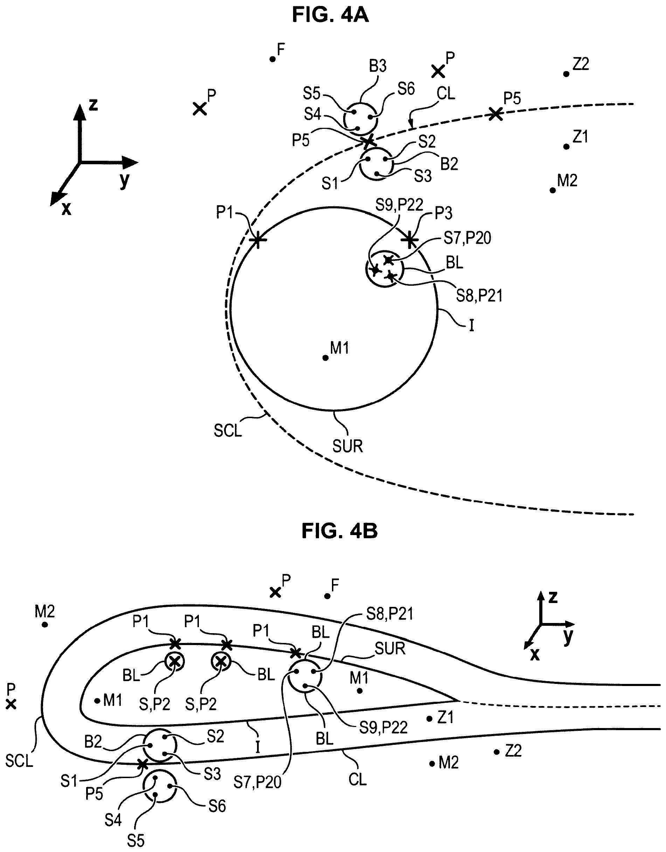

Aux figures 1A, 1B, 4A et 4B est représentée une interface I située entre un premier milieu M1 et un deuxième milieu M2, dont au moins l'un M2 est soumis à l'écoulement de fluide F. Par exemple, le milieu M1 n'est pas soumis à l'écoulement de fluide F. Par exemple, l'interface I peut être ou comprendre une surface SUR imperméable au fluide F. L'interface peut comprendre au moins une surface d'au moins un solide ou plus généralement d'un objet, en étant appelée profil dans ces cas. Par exemple, le premier milieu M1 est constitué par l'intérieur du solide ou de l'objet, délimité par la surface SUR, tandis que le deuxième milieu M2 est constitué par l'extérieur du solide ou de l'objet. Suivant un mode de réalisation, l'interface I sépare le premier milieu M1 par rapport au deuxième milieu M2. Par exemple, la surface SUR est fermée autour du premier milieu M1. Par ailleurs, l'objet ou solide ou interface I peut être mobile, comme par exemple une aile d'avion, représentée à titre d'exemple aux figures 1B, 4B et 36B. Le fluide F et/ou le milieu M2, peut être par exemple l'air, l'eau ou autres. Il peut être prévu plusieurs interfaces I et I' distinctes. Bien entendu, dans ce qui suit, l'interface I et/ou la surface SUR peut être ou comporter une aile d'avion.

On décrit ci-dessous un dispositif et un procédé de mesure d'au moins une grandeur physique d'au moins un écoulement de fluide F dans l'espace tridimensionnel, dans lequel se trouve l'interface I prédéterminée.

On définit par exemple un repère orthonormé x, y, z de l'espace tridimensionnel, ou x et y sont deux directions horizontales et z est une direction verticale ascendante.

Suivant un mode de réalisation, l'écoulement de fluide est stationnaire et/ou incompressible. Par exemple, les sources émettent du fluide ou une force en continu dans le cas d'un fluide stationnaire. Bien entendu le fluide pourrait également être non stationnaire. Bien entendu, il s'agit de sources modélisées pour le calcul de la première grandeur physique.

Suivant un mode de réalisation, les sources émettent des grandeurs de même nature que le milieu environnant, au lieu de créer dans ce milieu un phénomène de nature différente (un exemple d'un phénomène de nature différente dans l'état de la technique est la génération d'uen onde électromagnétique dans un fluide ou un solide).

Suivant un mode de réalisation, le dispositif de mesure comporte au moins un calculateur ayant des moyens E, CAL1 de prescription d'au moins une condition L aux limites concernant la première grandeur physique de l'écoulement de fluide F prise au moins en un premier point test prédéterminé P1 de l'interface I.

Suivant un mode de réalisation, le calculateur CAL a des moyens CAL2 de calcul configurés pour calculer par méthode DPSM à partir de la condition L aux limites, la première grandeur physique de l'écoulement de fluide F en au moins un deuxième point P de l'espace, différent du premier point test P1.

Suivant un mode de réalisation, il est prévu un dispositif de mesure d'au moins une première grandeur physique (V, P) d'au moins un écoulement de fluide (F) dans un espace tridimensionnel ayant au moins une interface (I) prédéterminée, située entre au moins deux milieux (MI, M2), caractérisé en ce que le dispositif comporte :

au moins un calculateur ayant des moyens (E) de prescription d'au moins deux première et deuxième conditions (L) aux limites concernant la première grandeur physique (V, P) de l'écoulement de fluide (F) prise au moins en un premier point test prédéterminé (P1) de l'interface (I), associées à respectivement au moins une première source et au moins une deuxième source, différentes l'une de l'autre et réparties respectivement en des positions prescrites, distinctes de l'interface (I),
la première source et la deuxième source étant choisies parmi des sources ponctuelles de débit massique de fluide et/ou de force, le calculateur (CAL) ayant des moyens de calcul configurés pour calculer, par méthode de calcul des sources ponctuelles réparties, une première valeur de la première grandeur physique à partir de la première condition (L) aux limites et d'au moins la première source et au moins une deuxième valeur de la première grandeur physique à partir d'au moins la deuxième condition aux limites et d'au moins la deuxième source, en au moins un deuxième point (P) de l'espace, différent du premier point test (P1), puis pour combiner les valeurs obtenues respectivement à partir des différentes conditions aux limites et sources afin de calculer la première grandeur physique.

Suivant un mode de réalisation, il est prévu un procédé de mesure d'au moins une première grandeur physique (V, P) d'au moins un écoulement de fluide (F) dans un espace tridimensionnel ayant au moins une interface (I) prédéterminée, située entre au moins deux milieux (M1, M2), caractérisé en ce que
au cours d'une première itération on prescrit par au moins un calculateur au moins une première condition (L) aux limites concernant la première grandeur physique (V, P) de l'écoulement de fluide (F) prise en au moins un premier point test prédéterminé (P1) de l'interface (I), associée à respectivement au moins une première source située en une position associée, prescrite et distincte de l'interface (I), on calcule par le calculateur (CAL) par méthode de calcul des sources ponctuelles réparties, en au moins un deuxième point (P) de l'espace, différent du premier point test (P1), une première valeur de la première grandeur physique à partir de la première condition (L) aux limites et d'au moins la première source,
au cours d'une deuxième itération, on prescrit par le calculateur au moins une deuxième condition (L) aux limites concernant la première grandeur physique (V, P) de l'écoulement de fluide (F) prise au premier point test prédéterminé (P1) de l'interface (I), associée à respectivement au moins une deuxième source située en une position associée, prescrite et distincte de l'interface (I), on calcule par le calculateur (CAL) par méthode de calcul de la source ponctuelle répartie, une deuxième valeur de la première grandeur physique en le deuxième point (P) de l'espace à partir de la deuxième condition (L) aux limites et d'au moins la deuxième source,
la première source et la deuxième source étant différentes l'une de l'autre et et étant choisies parmi des sources ponctuelles de débit massique de fluide et/ou de force,
on calcule la première grandeur physique en combinant par le calculateur la première valeur et la deuxième valeur.
Pour chaque calcul de valeur, les moyens de calculs peuvent mettre en œuvre chacune des étapes décrites ci-dessous.
Le calcul de la première valeur de la première grandeur physique est effectué par exemple au cours d'une première itération des étapes, tandis que le calcul de la deuxième valeur de la première grandeur physique est effectué par exemple au cours d'une deuxième itération des étapes. Bien entendu ces itérations peuvent être effectuées successivement ou simultanément. Les deux itérations peuvent être regroupées en un seul calcul : par exemple, il est possible de regrouper 2 itérations de calculs matriciels successifs en un seul calcul avec une matrice 2 fois plus grande.

$$M_1 * \lambda_1 + M_2 * \lambda_2 = \begin{pmatrix} M_1 & M_2 \end{pmatrix} * \begin{pmatrix} \lambda_1 \\ \lambda_2 \end{pmatrix}$$ Bien entendu, il peut y avoir plus de deux itérations.

Ci-dessous, la source peut être la première source ou la deuxième source.
Il peut être prévu plusieurs premières sources.
Il peut être prévu plusieurs deuxièmes sources.
La position (ou troisième point P2 ci-dessous) de la première source peut être identique ou différente de la position (ou troisième point P2 ci-dessous) de la deuxième source.
Suivant un mode de réalisation, la première condition aux limites est différente de la deuxième condition aux limites.
Suivant un mode de réalisation, les moyens de calcul sont configurés pour calculer la deuxième valeur à partir de la première source et de la deuxième source, et pour calculer la première grandeur physique comme étant la deuxième valeur. Cela est mis en œuvre par exemple dans le cas 7 décrit ci-dessous. Suivant un mode de réalisation, les moyens de calcul sont configurés pour calculer la deuxième valeur à partir de la première valeur de la deuxième source, et pour calculer la première grandeur physique comme étant la deuxième valeur.

Suivant un mode de réalisation, les moyens de calcul sont configurés pour calculer la deuxième valeur à partir de la première source et de la deuxième source, et pour calculer la première grandeur physique comme étant la deuxième valeur. Cela est mis en œuvre par exemple dans le cas 6 décrit ci-dessous.

Ainsi, on peut utiliser les résultats des étapes précédentes pour déterminer les conditions aux limites pour les itérations suivantes. Les résultats obtenus lors d'une itération permettent de calculer une grandeur aux points tests d'une surface et d'utiliser ces grandeurs pour définir les conditions aux limites de l'itération suivante. Par exemple : l'écoulement autour d'un profil d'aile satisfait 2 conditions, la vitesse normale autour de l'aile est nulle et la vitesse au point de fuite est la même pour l'extrados et l'intrados. On fera le calcul en 2 itérations, la première ayant uniquement la normale nulle comme condition aux limites et la deuxième itération, utilisant les vitesses calculées lors de la première itération, et on ajoutera des conditions pour satisfaire l'égalité des vitesses au point de fuite. L'invention permet dans certains modes de réalisation une résolution itérative, en 2 ou 3 étapes, permettant entre chaque étape de déterminer des grandeurs qui sont réinjectées dans les étapes suivantes, comme les vitesses tangentielles ou la définition de la couche limite.

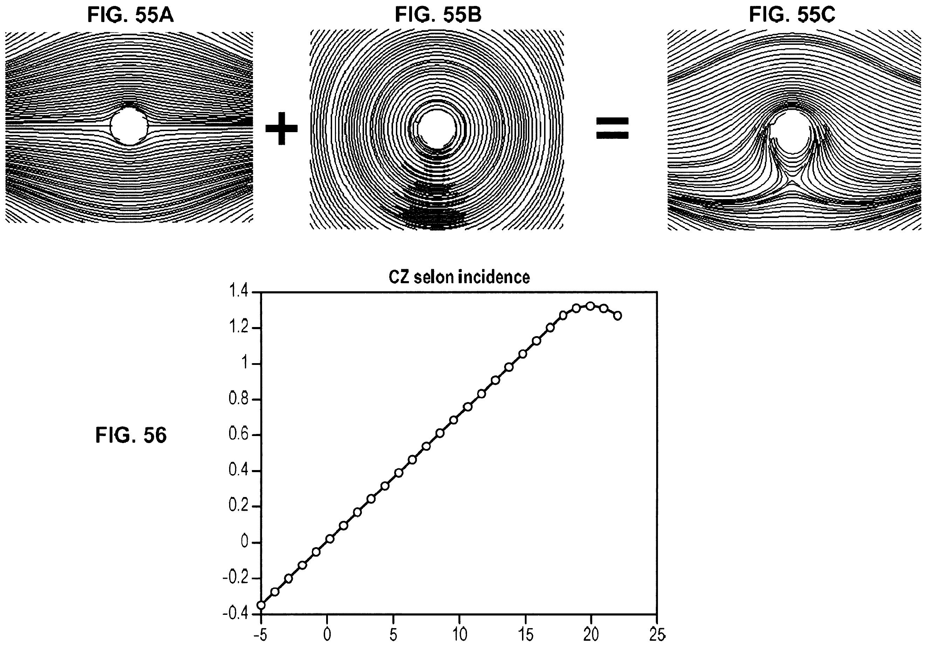

Il est ainsi possible de définir d'une manière non homogène les conditions aux limites sur les surfaces. Il est possible de définir des conditions particulières en certains points seulement, à partir d'éléments calculés précédemment. Par exemple, il est possible de modéliser la perte de portance de certaines zones d'une aile lors de l'amorce du décollement de la couche limite (approche du décrochage d'un profil), en modifiant la valeur des conditions aux limites uniquement dans ces zones. Les conditions appliquées à ces zones peuvent être définies géométriquement (angle supérieur à un certain angle de décrochage) ou physiquement (pression inférieure à un seuil ou valeur de vitesse calculée en dehors d'une valeur réaliste). Par exemple, cela est exploité lors du calcul d'une grandeur macroscopique telle que le coefficient de portance Cz ou de traînée Cx, et permet d'obtenir par exemple une courbe de Cz qui passe par un maximum puis redescend après l'incidence de décrochage, ainsi que cela est illustré ci-dessous en référence à l'exemple 1 pour la figure 56.

Etapes du procédé de mesure

Au cours d'une première étape E1, on prescrit par au moins un calculateur au moins une condition L aux limites concernant la première grandeur physique de l'écoulement de fluide F prise en au moins un premier point test prédéterminé P1 de l'interface I.

Au cours d'une deuxième étape E2, on calcule par le calculateur CAL par méthode DPSM à partir de la condition L aux limites la première grandeur physique de l'écoulement de fluide F en au moins un deuxième point P de l'espace, différent du premier point test P1.

Suivant un mode de réalisation, au cours d'une étape préalable, on détermine les coordonnées de l'interface I dans l'espace.

Suivant un mode de réalisation, la première étape E1 peut comprendre par exemple l'étape préalable, dans laquelle on entre sur des moyens ME d'entrée de données du calculateur CAL, les coordonnées du premier point test prédéterminé P1 de l'interface I, en lequel sont situées les conditions L aux limites prédéterminées.

Suivant un mode de réalisation, le calculateur CAL peut être un ordinateur ayant comme moyens ME d'entrée de données, par exemple d'un clavier ou de tout autre accès d'entrée de données, et comme moyens SD de sortie de données un écran d'affichage ou autre. Le calculateur ou ordinateur CAL comporte un ou plusieurs programmes informatiques prévus pour mettre en oeuvre les étapes et moyens décrits.

Suivant un mode de réalisation, on détermine les coordonnées de l'interface I, et/ou on entre les coordonnées de l'interface I par les moyens ME d'entrée de données du calculateur CAL, et/ou on entre sur les moyens ME d'entrée de données du calculateur CAL les conditions aux limites prédéterminées L en plusieurs points prédéterminés P1 de l'interface I ou en toute l'interface I. Ainsi, le procédé de mesure peut comporter une phase de prétraitement consistant à décrire la géométrie tridimensionnelle du problème et en particulier à en dessiner chacun des objets (interface I, surface SUR).

Suivant un autre mode de réalisation, la ou les condition(s) L aux limites et/ou le ou les premier(s) point(s) test sont prescrits dans le calculateur CAL, par exemple par un programme informatique, ou en étant préenregistrés dans une mémoire ou en provenant d'un autre calculateur.

La méthode DPSM est la méthode des sources ponctuelles réparties. La première grandeur physique peut être par exemple une grandeur macroscopique du fluide.

La première grandeur physique peut être par exemple l'une parmi la vitesse V de l'écoulement de fluide F, la pression P du fluide F et/ou autre. La grandeur physique est par exemple calculée en un ou plusieurs points P du deuxième milieu M2 ou dans tout le milieu M2. La première grandeur physique peut notamment être le vecteur vitesse de l'écoulement de fluide F dans l'espace en un ou plusieurs points P du milieu M2 ou dans tout le milieu M2. Dans ce qui suit, on considère la première grandeur V, P. L'écoulement de fluide peut se situer dans l'air, l'eau ou autres.

Suivant un mode de réalisation, le calculateur CAL comporte des deuxièmes moyens CAL3 de calcul, à partir de la première grandeur physique ayant été calculée, d'une propriété de l'interface I dans l'écoulement de fluide F,

différente de la première grandeur physique.

Suivant un mode de réalisation, la propriété est la traînée induite par l'interface I dans l'écoulement de fluide F et/ou la portance de l'interface I dans l'écoulement de fluide F et/ou une force de frottement de l'interface I dans l'écoulement de fluide F.

Suivant un mode de réalisation, le calculateur CAL comporte des moyens SD de sortie pour fournir la première grandeur physique ayant été calculée et/ou la propriété ayant été calculée. Suivant un mode de réalisation, au cours d'une troisième étape E3 du procédé, on fournit, sur les moyens SD de sortie de données du calculateur CAL, la grandeur physique ayant été calculée par le calculateur CAL et/ou la propriété ayant été calculée.

Suivant un mode de réalisation, le calculateur CAL comporte des troisièmes moyens CAL4 de calcul d'une deuxième grandeur de commande d'un actionneur à partir au moins de la première grandeur physique ayant été calculée et/ou à partir au moins de la propriété ayant été calculée.

Suivant un mode de réalisation, les moyens CAL1 et/ou CAL2 et/ou CAL3 et/ou CAL4 sont automatiques, en étant par exemple chacun mis en œuvre par un programme informatique.

Suivant un autre mode de réalisation, le calculateur envoie sur ses moyens SD de sortie la première grandeur ayant été calculée à un autre calculateur chargé de calculer une grandeur de commande d'un actionneur en fonction au moins de cette première grandeur.

Le dispositif suivant l'invention comporte des moyens correspondants pour la mise en œuvre des étapes du procédé.

Les moyens ME, CAL1, CAL2, CAL3, CAL4 peuvent être répartis sur des ordinateurs ou calculateurs ou processeurs différents, ou être réalisés par un même ordinateur ou calculateur ou processeur.

Suivant un mode de réalisation, lors de la deuxième étape E2, on prescrit la position d'au moins un troisième point P2 distinct de l'interface I, en lequel se trouve au moins une source S de fluide.

On calcule par méthode DPSM au moins un paramètre de la source S de fluide à partir de la condition L aux limites concernant la première grandeur physique de l'écoulement de fluide F prise au premier point test P1 de l'interface I.

On calcule par méthode DPSM la première grandeur physique de l'écoulement de fluide F située au deuxième point P de l'espace, à partir du paramètre de la source S de fluide, ayant été calculé.

Ainsi, l'on positionne au moins une source S de fluide en au moins un deuxième point P2 distinct de l'interface I.

Suivant un mode de réalisation, les moyens CAL2 de calcul sont configurés pour calculer par méthode DPSM :

- au moins un paramètre d'au moins une source S de fluide modélisée, située en au moins un troisième point P2 de position prescrite, distinct de l'interface I, à partir de la condition L aux limites,
- la première grandeur physique de l'écoulement de fluide F située au deuxième point P de l'espace, à partir du paramètre de la source S de fluide, ayant été calculé.

Chaque source est ponctuelle.

Le ou les paramètres peuvent correspondre par exemple à $\lambda$ ou à a dans ce qui suit.

Suivant un mode de réalisation, la source S de fluide est séparée du premier point test prédéterminé P1 de l'interface I.

Il peut être prévu une pluralité de sources S de fluide en respectivement une pluralité de deuxièmes points P2 distincts de l'interface I. Dans ce cas, les sources ont des positions spatiales distinctes les unes des autres aux points P2. Dans le cas de plusieurs sources dans un groupe, les sources de ce groupe ont des positions spatiales distinctes les unes des autres aux points P2.

Suivant un mode de réalisation, l'interface I comprend au moins une surface SUR d'au moins un solide, imperméable au fluide F, au moins une source S de fluide associée au premier point test P1 étant située à distance du premier point test P1 en dessous de la surface SUR du solide, de l'autre côté de l'écoulement de fluide F.

Suivant un mode de réalisation, la source est modélisée pour émettre du fluide ou une force au travers de l'interface I.

Il peut être prévu plusieurs sources S de fluide associées au premier point test P1 et situées à distance du premier point test P1 en dessous de la surface SUR du solide, de l'autre côté de l'écoulement de fluide F. Il peut être prévu, en association avec une pluralité de premiers points tests P1, une pluralité de groupes comprenant chacun une ou plusieurs sources S de fluide, situées à distance du premier point test P1 en dessous de la surface SUR du solide, de l'autre côté de l'écoulement de fluide F. Dans ces modes de réalisation, la ou les sources S de fluide associées au premier point test P1 sont situées dans le premier milieu M1 non soumis à l'écoulement de fluide F. Dans ce cas, la source S est modélisée pour émettre du fluide (ou une force) à travers l'interface I et la surface SUR dans le deuxième milieu M2 soumis à l'écoulement de fluide F. Par exemple, cette ou ces sources S peuvent être à une distance minimale en dessous de la surface SUR. La distance entre cette ou ces sources et la surface SUR peut être différente entre les sources. Ce mode de réalisation peut être pris en combinaison avec tous les autres modes de réalisations décrits. Ces modes de réalisation sont appelés ci-après premier mode de réalisation sous-jacent.

Suivant un mode de réalisation, il est prévu, en plus du ou des premiers points tests de l'interface I, un ou plusieurs autres points tests P5 non situés à l'interface I et situés dans l'écoulement de fluide F.

Suivant un mode de réalisation, les moyens de prescription sont prévus pour prescrire au moins une condition aux limites concernant la première grandeur physique de l'écoulement de fluide F prise en ce ou ces autres points tests P5.

Suivant un mode de réalisation, les moyens de prescription sont prévus pour prescrire en outre au moins une autre condition aux limites de l'écoulement de fluide en au moins un autre point éloigné d'une distance prescrite, non nulle, de l'interface I et un sens d'écoulement global prescrit de l'écoulement de fluide de ce point éloigné vers l'interface I. Cette autre condition aux limites peut être par exemple la première grandeur uniforme dans l'espace à cette distance prescrite de l'interface ou à plus de la distance prescrite de l'interface. Par exemple, cette autre condition aux limites peut être la vitesse du vent et/ou l'orientation du vent à distance de l'interface, ou la différence entre le vent et la vitesse de déplacement de l'interface (par exemple dans le cas d'une interface formée par une aile d'avion).

Suivant un mode de réalisation, les moyens CAL1 de prescription sont prévus pour prescrire une condition aux limites comportant au moins l'une parmi :

- au premier point test P1 à l'interface I une composante normale de vitesse du fluide F nulle,
- au premier point test P1 à l'interface I une composante tangentielle de vitesse du fluide F nulle,
- au premier point test P1 à l'interface I une composante tangentielle de vitesse du fluide F prescrite, pouvant être non nulle,
- à l'autre point test P5 à la surface délimitant la couche limite CL de l'écoulement de fluide F une composante normale de vitesse du fluide F nulle,
- à l'autre point test P5 à la surface délimitant la couche limite CL de l'écoulement de fluide F une composante normale de vitesse du fluide F conservée,
- à l'autre point test P5 à la surface délimitant la couche limite CL de l'écoulement de fluide F une composante normale de vitesse du fluide F conservée modulo la masse volumique du fluide,
- à l'autre point test P5 à la surface délimitant la couche limite CL de l'écoulement de fluide F une continuité de la composante tangentielle de la vitesse du fluide F, par exemple égale à la vitesse initiale du fluide,
- au premier point test P1 à l'interface I, une valeur de pression du fluide,
- à l'autre point test P5 à la surface délimitant la couche limite CL de l'écoulement de fluide, continuité de la pression.

Par exemple, la vitesse est nulle à la surface des objets imperméables.

Suivant un mode de réalisation, il est prévu au moins une source S de fluide non associée au premier point test P1 et située dans l'écoulement de fluide F. Il peut être prévu au moins une source S de fluide en association avec au moins un autre point test P5 prescrit non situé à l'interface I et situé dans l'écoulement de fluide F. Il peut être prévu plusieurs sources S de fluide associées à un autre point test P5 non situé à l'interface I et situé dans l'écoulement de fluide F. Il peut être prévu une pluralité de ces autres points tests P5 non situés à l'interface I et situés dans l'écoulement de fluide F. Il peut être prévu, en association avec une pluralité d'autres points tests P5 non situés à l'interface I et situés dans l'écoulement de fluide F une pluralité de groupes comprenant chacun une ou plusieurs sources S de fluide.

Ce ou ces autres points tests P5 peut être à la surface SCL délimitant la couche limite CL de l'écoulement de fluide F. Par exemple, cette ou ces sources S fluide non associée au premier point test P1, et/ou située dans l'écoulement de fluide F et/ou associée avec au moins un autre point test P5, peuvent être à une distance minimale de la surface SCL. La distance entre cette ou ces sources et la surface SCL peut être différente entre les sources. Des moyens sont prévus pour déterminer les coordonnées de la surface SCL de la couche limite.

On définit une première zone Z1, ou zone intérieure Z1, située entre la surface SCL délimitant la couche limite CL de l'écoulement de fluide F et l'interface I, et une deuxième zone Z2, ou zone extérieure Z2, située au-dessus de la surface SCL et située de l'autre côté par rapport à l'interface I. La ou les sources S fluide non associée au premier point test P1 peuvent être soit dans la première zone Z1, soit dans la deuxième zone Z2, et à distance de la surface SCL délimitant la couche limite CL. Le fluide est visqueux dans la couche limite, c'est-à-dire dans la première zone intérieure Z1, tandis que le fluide est considéré comme parfait au-dessus de la couche limite, c'est-à-dire dans la deuxième zone extérieure Z2. La couche limite CL est délimitée par la surface SCL de glissement. La couche limite CL se prolonge par un sillage. Dans le cas d'une aile d'avion en conditions de vol, la surface SCL de la couche limite CL est à quelques millimètres de la surface SUR de l'aile d'avion, formée dans ce cas par l'interface I.

Ainsi que cela est représenté aux figures 1B, 4B et 20, dans les modes de réalisation prévoyant un groupe BL de sources, pouvant être dans ce qui suit, un doublet de sources S1, S2, trois sources S1, S2, S3, appelées également triplet de sources S1, S2, S3 ou autres, ce groupe BL de sources peut être associé à un point test (premier point test P1 situé à l'interface I ou autre point test P5 non situé à l'interface I). Chaque source S1, S2, S3 du groupe BL se trouve à une position P2 différente, d'une source à l'autre du groupe B. Dans ce qui suit, chaque groupe BL ou BL' est également appelé bloc BL ou BL'.

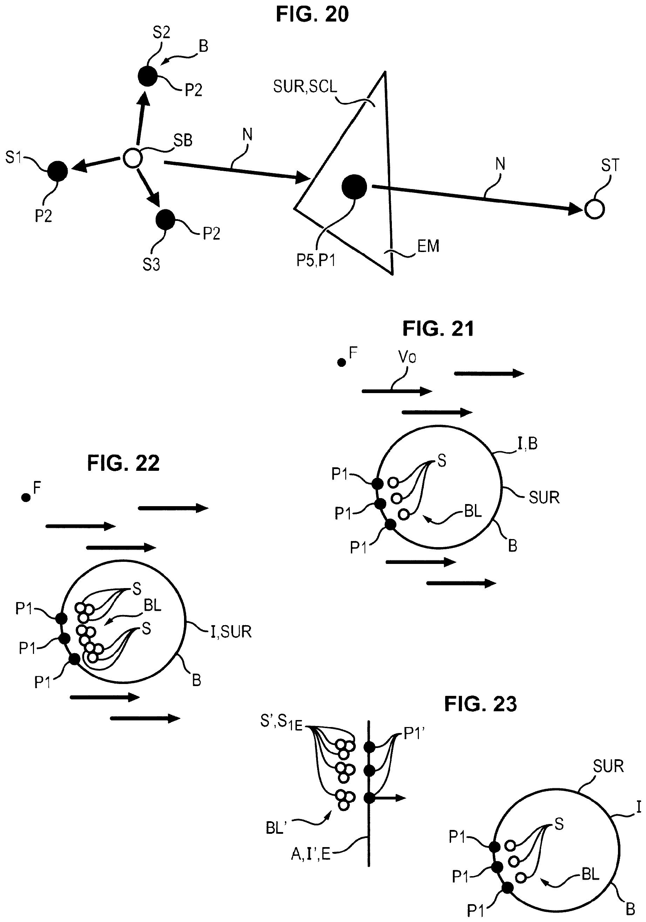

Suivant une possibilité de disposition représentée à la figure 20, les sources S1, S2, S3 du groupe BL peuvent être situées autour d'un point central SB ou ST. Le point central SB ou ST peut se trouver sur la normale N à l'élément EM de maillage de la surface SUR de l'interface I ou de la surface SCL délimitant la couche limite CL. Le point SB est sur la normale N dans le sens rentrant dans l'élément EM de maillage, tandis que le point ST est sur la normale N dans le sens sortant de l'élément EM de maillage. Selon la modélisation, on peut utiliser soit une source au point central SB et/ou ST, soit un doublet de sources autour du point central SB et/ou ST, soit un triplet de sources autour du point central SB et/ou ST, ou plusieurs de ces derniers. Bien entendu, cette possibilité de disposition n'est pas limitative et une autre disposition des sources peut être prévue.

Calcul des sources et de la grandeur physique de l'écoulement de fluide par méthode DPSM :

On décrit ci-dessous plus en détails des modes de réalisation de ce calcul.

Suivant un mode de réalisation, dans les moyens CAL2 de calcul est enregistrée une matrice globale de résolution M, comportant au moins un coefficient $M_{ij}$ dépendant à la fois d'une valeur prescrite caractérisant le fluide et de la distance $R_{ij}$ entre une source S et un quatrième point P de l'espace, le produit de la matrice globale de résolution M, prise aux premiers points test P1 comme quatrième point P de l'espace, multipliée par un premier vecteur J des paramètres de la première et/ou deuxième et/ou de toute source S, étant égal à un deuxième vecteur C des conditions aux limites concernant la première grandeur physique V de l'écoulement de fluide prise aux premiers points test P1, selon l'équation C = M * J, où * désigne la multiplication.

Suivant un mode de réalisation, le coefficient $M_{ij}$ représente la quantité de fluide ou de force émise par la j-ième source Sj sur le i-ième point test Pi. $M_{ij}$ peut être un réel ou lui-même une matrice (par exemple 3x3), selon le cas. Suivant un mode de réalisation, pour chaque couple de surfaces, on a une matrice appelée « matrice de couplage ». Suivant un mode de réalisation, la matrice M globale de résolution est composée de matrices de couplage, elles-mêmes composées de coefficients $M_{ij}$.

Suivant un mode de réalisation, la valeur prescrite caractérisant le fluide est la masse volumique $\rho$ du fluide et/ou la viscosité cinématique $\mu$ du fluide.

Suivant un mode de réalisation, il est prévu parmi les moyens CAL2 de calcul

- un moyen d'inversion de la matrice globale de résolution M, prise aux premiers points test P1 comme quatrième point P de l'espace, pour calculer la matrice inverse $M^{-1}$, et
- un moyen de calcul du premier vecteur J des paramètres de la première et/ou deuxième et/ou de toute source S par multiplication de la matrice inverse $M^{-1}$ par le deuxième vecteur C des conditions aux limites de la première grandeur physique V de l'écoulement de fluide prise aux premiers points test P1, selon l'équation $J = M^{-1} * C$.

Suivant un mode de réalisation, il est prévu parmi les moyens CAL2 de calcul :

- un moyen de calcul de la première grandeur physique de l'écoulement de fluide F au deuxième point P de l'espace ayant une position déterminée, en multipliant la matrice globale de résolution M, calculée à ladite position déterminée du deuxième point P comme quatrième point P, par le premier vecteur J des paramètres de la première et/ou deuxième source et/ou de toute source S. Il est par exemple prévu une pluralité de quatrièmes points P.

La méthode DPSM permet de modéliser par une ou plusieurs sources S de fluide ou de force, placées en des positions prédéterminées, la grandeur physique de l'écoulement de fluide devant être calculée.

Le ou les paramètres définissant la ou les sources S de fluide ou de force sont obtenus tout d'abord par calcul à partir des conditions aux limites L de l'interface I, et à partir des positions prédéterminées des sources S de fluide ou de force.

Une fois les sources S de fluide ou de force calculées, on obtient à partir de celles-ci la valeur de la grandeur physique de l'écoulement de fluide.

Suivant un mode de réalisation, la méthode DPSM requiert de mailler les surfaces SUR des objets (ou interfaces I), et éventuellement de la la surface SCL de la couche limite CL, afin d'y créer un ensemble de premiers points test P1 (ou P5 pour SCL). Le maillage comporte une pluralité d'éléments EM de maillage de la surface SUR ou SCL, chaque élément EM de maillage étant une portion de plan, par exemple triangulaire ou d'une autre forme, dans lequel se trouve par exemple le premier point test P1 ou l'autre point test P5.

Suivant un mode de réalisation, d'un seul côté ou de part et d'autre de chaque point test, on dispose un groupe BL contenant une ou plusieurs sources élémentaires S (appelées également « singularités »), l'ensemble de ces groupes étant destiné in fine à synthétiser les grandeurs physiques dans les milieux respectifs M1 et M2 adjacents à ces surfaces.

L'interaction entre les sources S et les points tests P1 appartenant au même objet ou à la même interface I peut ensuite s'écrire sous forme d'une première matricede couplage, appelée matrice d'autocouplage. L'interaction entre les sources S et les points tests P1 appartenant à des objets différents va quant à elle s'écrire sous la forme d'une deuxième matrice appelée matrice d'intercouplage.

Suivant un mode de réalisation, ces matrices élémentaires satisfaisant l'ensemble des conditions aux limites L entre les différents milieux produisent une troisième matrice globale M, dont l'inversion donne accès à la valeur des sources S. La matrice globale M de résolution et le vecteur C de conditions aux limites permettent, par inversion de cette matrice M, de trouver la valeur de chaque source élémentaire S.

Suivant un mode de réalisation, la matrice globale M de résolution est carrée. Suivant un mode de réalisation, la matrice globale M de résolution n'est pas carrée et dans ce cas, les valeurs des sources sont obtenues par pseudo-inversion de la matrice.

Suivant un mode de réalisation, un nombre $N_S$ de sources S de fluide ou de force et un nombre $N_P$ de points tests (premiers points test P1 et éventuellement autres points tests P5) distincts les uns des autres sont prévus, de telle sorte que la matrice globale de résolution M soit carrée.

Suivant un mode de réalisation, le nombre $N_P$ de points tests (premiers points test P1 et éventuellement autres points tests P5) des conditions aux limites L est supérieur ou égal au nombre Ns de sources S de fluide ou de force.

Suivant un mode de réalisation, le nombre $N_P$ de points tests (premiers points test P1 et éventuellement autres points tests P5) des conditions aux limites L est égal au nombre $N_S$ de sources S de fluide ou de force.

Une étape préalable de détermination de la matrice globale de résolution est prévue, qui est réalisée par les moyens CAL2 de calcul du calculateur ainsi que cela est décrit ci-dessus.

Suivant un mode de réalisation, le post-traitement consite ensuite à exploiter le fluide (ou force) émis par l'ensemble des sources S pour calculer les grandeurs physiques dans tout l'espace (à l'intérieur comme à l'extérieur des objets ou interface I).

Par superposition des sources S ayant été calculées, on synthétise par ces sources la première grandeur physique.

Suivant un mode de réalisation, la méthode DPSM peut être appliquée à un écoulement de fluide F laminaire.

La méthode DPSM permet de modéliser en mécanique des fluides des profils ou objets I complexes (par exemple avion ou aile d'avion) en trois dimensions (au lieu de deux dimensions avec les méthodes par points singuliers exploitant uniquement le potentiel scalaire). La méthode DPSM permet de réduire notablement les temps de calculs par la réduction du nombre d'élements (maillage des surfaces et non pas de l'espace). De plus, la méthode DPSM permet de résoudre des problèmes dans lesquels plusieurs objets I sont en interaction (approche d'un avion vers le sol impliquant un effet de sol par exemple).

Suivant un mode de réalisation, la méthode a des applications interactives : dans l'hypothèse où l'on ne change pas les géométries du problème, mais seulement les conditions limites, la méthode permet de générer directement la matrice de résolution. Le procédé décrit une résolution en 2 temps : génération de la matrice de couplage Mc, inversion et calcul des valeurs des sources Lambda à partir du vecteur Vcl des conditions aux limites : Lambda=inv(Mc)*Vcl.

Puis, suivant un mode de réalisation, dans un deuxième temps, on génère la matrice Ms pour les points de l'espace et calcul des grandeurs G en ces points : G=Ms*Lambda.

Suivant un mode de réalisation, ce qui tend à être beaucoup exploité avec la méthode DPSM utilisée dans la présente invention, dans le cadre d'applications temps réel (intégrations d'algorithmes dans des simulateurs de vol par exemple), consiste à effecteur ce calcul en une seule étape, en groupant les équations précédentes et en calculant directement les grandeurs de l'espace par : G=Ms*inv(Mc)*Vcl.

La matrice Ms*inv(Mc) est alors calculée une fois pour toutes, et on obtient un nouveau résultat G en un temps très court par simple multiplication de cette matrice par un nouveau vecteur conditions aux limites Vcl. Notons que ce calcul permet d'obtenir également les grandeurs macroscopiques Gm mentionnées, par l'introduction d'une matrice Mm de calculs macroscopiques :

$$Gm = Mm*G = Mm*Ms*inv(Mc)*Vcl.$$

Pour ne donner qu'un exemple, supposons que l'on ait obtenu dans le calcul du vecteur G les valeurs d'un champ vectoriel le long d'un trajet, alors on calculera la circulation de ce vecteur en utilisant pour matrice Mm une matrice triangulaire inférieure (composée de 1 en partie triangulaire inférieure incluant la diagonale et de zéros en partie triangulaire supérieure). Ce concept de calcul de grandeurs macroscopiques peut être étendu au cas de calculs non linéaires tels que des calculs de forces ou de pressions qui nécessitent d'élever les vitesses au carré.

Suivant un mode de réalisation, la première source a une première orientation d'émission de fluide ou de force, et la deuxième source a une deuxième orientation d'émission de fluide ou de force qui est différente de la première orientation d'émission de fluide. Par exemple, cette première orientation d'émission de fluide ou de force est radiale, tandis que la deuxième orientation d'émission de fluide ou de force est rotationnelle, par exemple ainsi que cela est décrit ci-dessous. La deuxième orientation d'émission de fluide rotationnelle signifie qu'au point P distant de la deuxième source, le fluide ou la force est dirigée tangentiellement par rapport à la direction radiale joignant ce point P à la deuxième source (au point P2 où cette deuxième source est positionnée). Par exemple, la deuxième orientation d'émission de fluide ou de force est perpendiculaire à la première orientation d'émission de fluide ou de force.

Suivant un mode de réalisation, la première source est ou comprend au moins une source ponctuelle de débit massique radial de fluide. Cette source est également appelée source scalaire.

Suivant un mode de réalisation, la deuxième source est ou comprend au moins une source ponctuelle de débit massique rotationnel de fluide autour d'une direction déterminée. Cette source est également appelée source rotationnelle.

Suivant un mode de réalisation, la deuxième source est ou comprend au moins une source ponctuelle de force.

Le couple formé par la au moins une première source et au moins une deuxième source est appelé source hybride. L'introduction de sources hybrides, contenant des sources scalaires et vectorielles, permet de satisfaire les conditions imposées par la vorticité.

Des modes de réalisation de première et deuxième sources sont décrits par exemple dans les cas 6, 7, 9, 10, 11, 12, 13 décrits ci-dessous, où la première source est désignée par S100 et la deuxième source est désignée par S200.

Suivant un mode de réalisation, il est prévu une ou plusieurs sources ponctuelles de débit massique radial de fluide et/ou une ou plusieurs sources ponctuelles de débit massique rotationnel de fluide et/ou une ou plusieurs sources de force. Par exemple, il peut être prévu deux, trois ou quatre sources choisies parmi les types de sources précités.

On peut ainsi prévoir deux sources rotationnelles et une source scalaire, ou quatre sources, comme par exemple trois sources rotationnelles et une source scalaire, associée à chaque point test. Suivant un mode de réalisation, l'invention peut également être généralisée à six sources (trois sources rotationnelles et trois sources scalaires) associées à chaque point test, avec des conditions aux limites correspondantes.

Suivant un mode de réalisation, la présence d'au moins une source rotationnelle permet de calculer la portance et/ou la trainée et/ou de tenir compte d'un écoulement réversible et/ou de tenir compte de pertes d'énergie autour de l'interface I.

Source de débit massique de fluide

Une source de débit massique de fluide peut être une source de débit massique radial de fluide ou une souirce de débit massique rotationnel de fluide.

Suivant un mode de réalisation, la matrice globale M de résolution comporte plusieurs coefficients, dont au moins un est égal à, pour au moins une source ponctuelle de débit massique de fluide comme première et/ou deuxième source et/ou toute autre source (S) :

$$\pm(x_i - x_j)/(4.\pi.\rho.R_{ij}), \text{ ou à } \pm(y_i - y_j)/(4.\pi.\rho.R_{ij}), \text{ ou à } \pm(z_i - z_j)/(4.\pi.\rho.R_{ij}),$$

$$\text{ou à } \pm(x_i - x_j)/(4.\pi.\rho.R_{ij}^{3}), \text{ ou à } \pm(y_i - y_j)/(4.\pi.\rho.R_{ij}^{3}), \text{ ou à } \pm(z_i - z_j)/(4.\pi.\rho.R_{ij}^{3}),$$

$$\text{ou à } 1/(4.\pi.\rho.R_{ij}),$$

ou à l'un de ceux-ci, multiplié par une constante prescrite, par laquelle est divisée le premier vecteur (J) des paramètres de la source (Sj) ponctuelle de débit massique de fluide, où $R_{ij}$ est la distance entre la source (Sj) ponctuelle de débit massique de fluide située au troisième point (P2) de position prescrite $x_j$, $y_j$, $z_j$ selon trois directions non coplanaires x, y et z de l'espace et le quatrième point (P) de l'espace ayant des coordonnées $x_i$, $y_i$, $z_i$ selon les trois directions x, y et z.

Source scalaire

Suivant un mode de réalisation, dans le cas d'une source ponctuelle de débit massique radial de fluide, pouvant être la première et/ou deuxième source et/ou toute autre source (S), pour la première grandeur égale à la vitesse du fluide, la matrice globale (M) de résolution comporte plusieurs coefficients, dont au moins un est égal à

$$\pm(x_i - x_j)/(4.\pi.\rho.R_{ij}^{3}), \text{ ou à } \pm(y_i - y_j)/(4.\pi.\rho.R_{ij}^{3}), \text{ ou à } \pm(z_i - z_j)/(4.\pi.\rho.R_{ij}^{3}),$$

ou à l'un de ceux-ci, multiplié par une constante prescrite, par laquelle est divisée le premier vecteur (J) des paramètres de la source (Sj) ponctuelle de débit massique radial de fluide.

Suivant un mode de réalisation, dans le cas d'une source ponctuelle de débit massique radial de fluide, pouvant être la première et/ou deuxième source et/ou toute autre source (S), pour la première grandeur égale à un potentiel de vitesse du fluide, la matrice globale (M) de résolution comporte plusieurs coefficients, dont au moins un est égal à $1/(4.\pi.\rho.R_{ij})$, ou à celui-ci, multiplié par une constante prescrite, par laquelle est divisée le premier vecteur (J) des paramètres de la source (Sj) ponctuelle de débit massique radial de fluide. Le potentiel $\theta$ de vitesse est lié au vecteur vitesse V par l'équation V= - grad $\theta$.

Suivant un mode de réalisation, dans le cas d'une source ponctuelle de débit massique radial de fluide, les paramètres de cette source sont homogènes à $M.T^{-1}$ en unités du système international, c'est-à-dire en kg/s par exemple.

Suivant un mode de réalisation, pour une source ponctuelle de débit massique rotationnel de fluide, la matrice M comporte la sous-matrice suivante :

$$M_{AS}^x = \frac{1}{4\pi\rho} \begin{pmatrix} \dfrac{(x_{A1}-x_{S1})}{R_{11}^3} & \cdots & \dfrac{(x_{An}-x_{S1})}{R_{p1}^3} \\ \vdots & \ddots & \vdots \\ \dfrac{(x_{A1}-x_{Sn})}{R_{1n}^3} & \cdots & \dfrac{(x_{Ap}-x_{Sn})}{R_{pn}^3} \end{pmatrix}$$

Suivant un mode de réalisation, pour une source ponctuelle de débit massique radial de fluide, la matrice M est de la forme suivante :

$$\begin{pmatrix} \begin{pmatrix} V_x^1 \\ \vdots \\ V_x^n \end{pmatrix} \\ (V_y)_{1\ldots n} \\ (V_z)_{1\ldots n} \\ (0)_{1\ldots p} \end{pmatrix} = \begin{pmatrix} M_{S_1S}^x & M_{S_2S}^x & M_{S_3S}^x & M_{AS}^x \\ M_{S_1S}^y & M_{S_2S}^y & M_{S_3S}^y & M_{AS}^y \\ M_{S_1S}^z & M_{S_2S}^z & M_{S_3S}^z & M_{AS}^z \\ M_{S_1A}^\perp & M_{S_2A}^\perp & M_{S_3A}^\perp & M_{AA}^\perp \end{pmatrix} * \begin{pmatrix} \begin{pmatrix} \lambda_{S1}^1 \\ \vdots \\ \lambda_{S1}^n \end{pmatrix} \\ (\lambda_{S2})_{1\ldots n} \\ (\lambda_{S3})_{1\ldots n} \\ (\lambda_A)_{1\ldots p} \end{pmatrix}$$

$M_{SP}^x$ matrice de couplage entre les sources de S et les points tests de P. $x$ désigne la composante en $x$ et $\perp$ désigne la projection sur la normale au point test.

$$M_{AS}^x = \frac{1}{4\pi\rho} \begin{pmatrix} \dfrac{(x_{A1}-x_{S1})}{R_{11}^3} & \cdots & \dfrac{(x_{An}-x_{S1})}{R_{p1}^3} \\ \vdots & \ddots & \vdots \\ \dfrac{(x_{A1}-x_{Sn})}{R_{1n}^3} & \cdots & \dfrac{(x_{Ap}-x_{Sn})}{R_{pn}^3} \end{pmatrix}$$

Ce mode de réalisation correspond à un exemple 1.

Suivant un mode de réalisation, la source scalaire de fluide est une source de débit massique isotrope de fluide.

Des modes de réalisation d'une ou plusieurs sources ponctuelles de débit massique radial de fluide (sources scalaires) sont décrits par exemple dans les cas 1 à 7, 9, 10 décrits ci-dessous.

Suivant un mode de réalisation, la première source est ou comprend au moins une source (S) ponctuelle de débit massique radial de fluide pour la première condition (L) aux limites ayant au premier point test (P1) une composante normale de vitesse du fluide au premier point test (P1), qui est nulle à l'interface (I) et/ou pour une autre condition aux limites prescrite ayant en au moins un autre point éloigné d'une distance prescrite de l'interface (I) une composante de vitesse prescrite, par exemple non nulle. Ce mode de réalisation correspond à l'exemple 1.

Une représentation imagée d'une source scalaire serait une sorte de bulle DPSM contenant un fluide sous pression (ou alimentée extérieurement par un fluide sous pression) s'échappant radialement par la surface de cette sphère.

Source rotationnelle

Suivant un mode de réalisation, dans le cas d'une source ponctuelle de débit massique rotationnel de fluide, pouvant être la première et/ou deuxième source et/ou toute autre source (S), pour la première grandeur égale à la vitesse du fluide, la matrice globale (M) de résolution comporte plusieurs coefficients, dont au moins un est égal à

$$\pm(x_i-x_j)/(4.\pi.\rho.R_{ij}^3), \text{ ou à } \pm(y_i-y_j)/(4.\pi.\rho.R_{ij}^3), \text{ ou à } \pm(z_i-z_j)/(4.\pi.\rho.R_{ij}^3),$$

ou à l'un de ceux-ci, multiplié par une constante prescrite, par laquelle est divisée le premier vecteur (J) des paramètres de la source (Sj) ponctuelle de débit massique rotationnel de fluide.

Suivant un mode de réalisation, dans le cas d'une source ponctuelle de débit massique rotationnel de fluide, pouvant être la première et/ou deuxième source et/ou toute autre source (S), pour la première grandeur égale au potentiel de vitesse du fluide, la matrice globale (M) de résolution comporte plusieurs coefficients, dont au moins un est égal à $1/(4.\pi.\rho.R_{ij})$, ou à celui-ci, multiplié par une constante prescrite, par laquelle est divisée le premier vecteur (J) des paramètres de la source (Sj) ponctuelle de débit massique rotationnel de fluide.

Suivant un mode de réalisation, dans le cas d'une source ponctuelle de débit massique rotationnel de fluide, les paramètres de cette source sont homogènes à $M.T^{-1}$ en unités du système international, c'est-à-dire en kg/s par exemple.

Suivant un mode de réalisation, pour une source ponctuelle de débit massique rotationnel de fluide, la matrice M comporte la sous-matrice suivante :

$$= \frac{1}{4\pi\rho} \begin{pmatrix} 0 & -\dfrac{(z_{A2}-z_S)}{R_{11}^3} & \dfrac{(y_{A3}-y_S)}{R_{11}^3} \\ \dfrac{(z_{A1}-z_S)}{R_{11}^3} & 0 & -\dfrac{(x_{A3}-x_S)}{R_{11}^3} \\ -\dfrac{(y_{A1}-y_S)}{R_{11}^3} & \dfrac{(x_{A2}-x_S)}{R_{11}^3} & 0 \end{pmatrix}$$

Suivant un mode de réalisation, pour une source ponctuelle de débit massique rotationnel de fluide, la matrice M est de la forme suivante :

$$\begin{pmatrix} (0)_{1...n} \\ (0)_{1...n} \\ (0)_{1...n} \\ (V''_{Ax})_{1...p} \\ (V''_{Ay})_{1...p} \\ (V''_{Az})_{1...p} \end{pmatrix} = \begin{pmatrix} \begin{pmatrix} M'^x_{S_1S} & M'^x_{S_2S} & M'^x_{S_3S} \\ M'^y_{S_1S} & M'^y_{S_2S} & M'^y_{S_3S} \\ M'^z_{S_1S} & M'^z_{S_2S} & M'^z_{S_3S} \end{pmatrix} & \begin{pmatrix} M'^x_{A1S} & M'^x_{A2S} & M'^x_{A3S} \\ M'^y_{A1S} & M'^y_{A2S} & M'^y_{A3S} \\ M'^z_{A1S} & M'^z_{A2S} & M'^z_{A3S} \end{pmatrix} \\ \begin{pmatrix} M'^x_{S_1A} & M'^x_{S_2A} & M'^x_{S_3A} \\ M'^y_{S_1A} & M'^y_{S_2A} & M'^y_{S_3A} \\ M'^z_{S_1A} & M'^z_{S_2A} & M'^z_{S_3A} \end{pmatrix} & \begin{pmatrix} M'^x_{A1A} & M'^x_{A2A} & M'^x_{A3A} \\ M'^y_{A1A} & M'^y_{A2A} & M'^y_{A3A} \\ M'^z_{A1A} & M'^z_{A2A} & M'^z_{A3A} \end{pmatrix} \end{pmatrix} * \begin{pmatrix} (\lambda'_{S1})_{1...n} \\ (\lambda'_{S2})_{1...n} \\ (\lambda'_{S3})_{1...n} \\ (\lambda'_{A1})_{1...p} \\ (\lambda'_{A2})_{1...p} \\ (\lambda'_{A3})_{1...p} \end{pmatrix}$$

$$\begin{pmatrix} M'^x_{A1S} & M'^x_{A2S} & M'^x_{A3S} \\ M'^y_{A1S} & M'^y_{A2S} & M'^y_{A3S} \\ M'^z_{A1S} & M'^z_{A2S} & M'^z_{A3S} \end{pmatrix} = \frac{1}{4\pi\rho} \begin{pmatrix} 0 & -\dfrac{(z_{A2}-z_S)}{R_{11}^3} & \dfrac{(y_{A3}-y_S)}{R_{11}^3} \\ \dfrac{(z_{A1}-z_S)}{R_{11}^3} & 0 & -\dfrac{(x_{A3}-x_S)}{R_{11}^3} \\ -\dfrac{(y_{A1}-y_S)}{R_{11}^3} & \dfrac{(x_{A2}-x_S)}{R_{11}^3} & 0 \end{pmatrix}$$

Ce mode de réalisation correspond à l'exemple 1.

Des modes de réalisation d'une ou plusieurs sources ponctuelles de débit massique rotationnel de fluide (sources rotationnelles) sont décrits par exemple dans les cas 8, 9, 10 décrits ci-dessous.

Suivant un mode de réalisation, la deuxième source est ou comprend au moins une source ponctuelle de débit massique rotationnel de fluide autour d'une direction déterminée, pour la deuxième condition (L) aux limites ayant au premier point test (P1) une composante de vitesse du fluide au premier point test (P1), qui est prescrite en étant non nulle et tangentielle à l'interface (I) et/ou pour une autre condition aux limites prescrite ayant en au moins un autre point éloigné d'une distance prescrite de l'interface (I) une composante de vitesse prescrite, par exemple nulle. Ce mode de réalisation correspond à l'exemple 1.

Suivant cet exemple 1, il est prévu par exemple une surface A représentant une soufflerie, une surface B ou SUR représentant une aile d'avion dans l'air. On suppose que la condition limite Cs sur la soufflerie est un vent constant prescrit $\vec{V}(v_x, v_y, v_z)$ ou $V_\infty$ et que la condition aux limites Ca sur l'aile est $V_A^\perp = 0$ (l'air n'entre pas dans l'aile) et $\vec{V}_A^{fuite} - \vec{V}_A^{corde} = \vec{0}$ (le fluide quitte l'aile parallèlement à la corde de l'aile). Cette deuxième condition sera atteinte dans notre exemple, en créant pour la deuxième source une circulation de fluide constante autour de l'aile : $V_A'' = K$. Le module $V_A''$ de la vitesse tangente de cette circulation sera pris constant à K prescrit.

La soufflerie S est discrétisée en n points, et l'aile en p points. La résolution se décompose en les 2 itérations étapes dont on ajoutera les 2 vitesses calculées.

Première itération :

Premières conditions aux limites : $\vec{V}(v_x, v_y, v_z)$ ou $V_\infty$ et $V_A^\perp = 0$ Premières sources : Sources scalaires. (S1, S2,S3 : 3n points sur la soufflerie A : p points sur l'aile B).

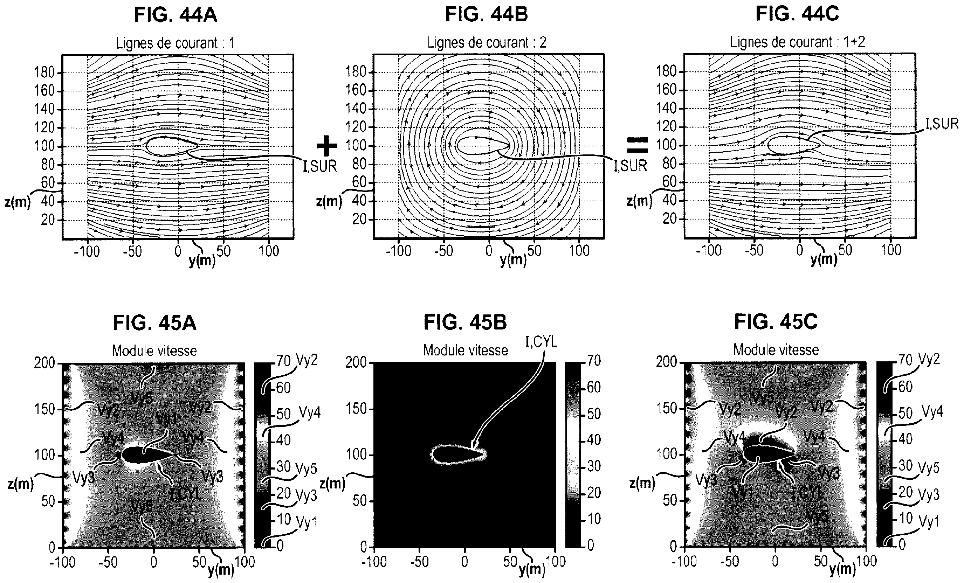

La première valeur obtenue par ces premières sources est illustrée à la figure 44A et le cas 7.

Deuxième itération :

Deuxièmes conditions aux limites : Vitesse nulle à distance de l'aile (soufflerie) = 0 et $V_A'' = K$

Deuxièmes sources : Sources hybrides (scalaires et rotationnelles). (S1, S2,S3 : 3n points sur la soufflerie, A1, A2,A3 : 3p points sur l'aile B).

La deuxième valeur obtenue par ces premières sources est illustrée à la figure 44B et le cas 7.

Source de force

Suivant un mode de réalisation, la matrice globale (M) de résolution comporte plusieurs coefficients, dont au moins un est égal à l'un parmi, pour au moins une source ponctuelle de force comme première et/ou deuxième source (S):

$$(x_i\text{-}x_j)/(8.\pi.\mu.R_{ij}), (y_i\text{-}y_j)/(8.\pi.\mu.R_{ij}), (z_i\text{-}z_j)/(8.\pi.\mu.R_{ij}),$$

$$(x_i\text{-}x_j)^2/(8.\pi.\mu.R_{ij}), (y_i\text{-}y_j)^2/(8.\pi.\mu.R_{ij}), (z_i\text{-}z_j)^2/(8.\pi.\mu.R_{ij}),$$

$$(x_i\text{-}x_j).(y_i\text{-}y_j)/(8.\pi.\mu.R_{ij}^3), (x_i\text{-}x_j).(z_i\text{-}z_j)/(8.\pi.\mu.R_{ij}^3), (z_i\text{-}z_j).(y_i\text{-}y_j)/(8.\pi.\mu.R_{ij}^3),$$

ou à l'un de ceux-ci, multiplié par une constante prescrite, par laquelle est divisée le premier vecteur (J) des paramètres de la source ponctuelle (Sj) de force. où $R_{ij}$ est la distance entre la source ponctuelle (Sj) de force située au troisième point (P2) de position prescrite $x_j$, $y_j$, $z_j$ selon trois directions non coplanaires x, y et z de l'espace et le quatrième point (P) de l'espace ayant des coordonnées $x_i$, $y_i$, $z_i$ selon les trois directions x, y et z.

Des modes de réalisation d'une ou plusieurs sources ponctuelles de force sont décrits par exemple dans les cas 8, 9, 10 décrits ci-dessous.

Les notations suivantes sont adoptées ci-dessous en ce qui concerne la matrice M, qui peut comprendre d'autres matrices indiquées ci-dessous :

- $\vec{V}$ : le vecteur vitesse de l'écoulement, $\vec{V} = (V^x, V^y, V^z)$
- $\overrightarrow{V_s^N} = \vec{V}.\overrightarrow{N_s}$ : la composante normale de la vitesse de l'écoulement sur une surface S (ou SUR) d'un objet ou d'une interface,
- La surface S (ou SUR) a $n_S$ points tests P1,
- $M_{BA}$ : matrice de couplage entre les points tests appartenant à l'objet B (ou à l'interface B) et les sources associées à l'objet A (ou à une autre interface A),
- Pour la surface de l'objet A ou de l'interface A:

  $\alpha_A$ ou $\lambda_A$ : vecteur des paramètres des sources associées à l'objet A ou à l'interface A, de dimension $n_A$,
  $\lambda_{A1}$ : vecteur des paramètres des sources S1 associées à l'objet A ou à l'interface A dans le cas des sources S1 des triplets de sources S1, S2, S3, de dimension $n_{A1}$,

  $\lambda_{A1}^j$ : paramètre du vecteur $\lambda_{A1}$ (c'est-à-dire la composante de dimension 1x1 de ce vecteur $\lambda_{A1}$ ayant ces $n_{A1}$ composantes),

- Distance entre les points i et j :

$$R_{ij} = \sqrt{(x_i - x_j)^2 + (y_i - y_j)^2 + (z_i - z_j)^2}$$

On décrit ci-dessous un mode de réalisation de cette méthode DPSM dans le cas d'une source ponctuelle scalaire au point P2 qui émet un flux $a_i$ homogène à un débit en m³/s est donné ci-dessous. Bien entendu, ce mode de réalisation n'est pas limitatif.

Pour la source scalaire de fluide, le calcul de la vitesse V de l'écoulement au point P ou P1=Pi de coordonnées $x_i$, $y_i$, $z_i$ dérive du potentiel selon l'équation suivante :

$$\vec{v} = -\vec{\nabla}\theta \Rightarrow \begin{cases} v_x = \dfrac{(x_i - x_j)}{4\pi\rho R_i^3}.\lambda \\ v_y = \dfrac{(y_i - y_j)}{4\pi\rho R_i^3}.\lambda \\ v_z = \dfrac{(z_i - z_j)}{4\pi\rho R_i^3}.\lambda \end{cases} \qquad \vec{v} = \begin{pmatrix} \dfrac{(x_i - x_j)}{4\pi\rho R_i^3} \\ \dfrac{(y_i - y_j)}{4\pi\rho R_i^3} \\ \dfrac{(z_i - z_j)}{4\pi\rho R_i^3} \end{pmatrix}.\lambda$$

$$\vec{v} = -\overrightarrow{grad}\,\theta = \begin{pmatrix} v^x \\ v^y \\ v^z \end{pmatrix} = \begin{pmatrix} \dfrac{(x_i - x_j)}{4\pi\rho R_{ij}^3} \\ \dfrac{(y_i - y_j)}{4\pi\rho R_{ij}^3} \\ \dfrac{(z_i - z_j)}{4\pi\rho R_{ii}^3} \end{pmatrix}.\lambda = \begin{pmatrix} q_{ij}^x \\ q_{ij}^y \\ q_{ij}^z \end{pmatrix}.\lambda$$

Dans ce mode de réalisation les conditions aux limites L peuvent comprendre des conditions aux limites intrinsèques (CLI), qui prévoient qu'à l'interface entre deux milieux définis par leur densité respectives ($\rho_1$, $\rho_2$), on considère la continuité du potentiel et la vitesse normale (modulo rho) à l'interface en chaque point de l'interface. On écrit :

$$\begin{cases} \theta_1 = \theta_2 \\ \rho_1.V_1^N = \rho_2.V_2^N \end{cases}$$

Dans ce mode de réalisation, les conditions aux limites L peuvent comprendre des conditions aux limites utilisateurs (CLU) qui permettent de fixer des conditions aux limites sur les objets : vitesse normale nulle et/ou vitesse nulle, et/ou autres.

Pour une source S ponctuelle isotrope au point P2 de coordonnées $x_j$, $y_j$, $z_j$,, constituée d'un triplet de source (ou groupe de sources ou bloc de sources, le triplet de source se situant autour du point P2 aux coordonnées $(x_{jk}, y_{jk}, z_{jk})$ k=1,2,3) qui émet le flux a ou $\lambda(\lambda_1, \lambda_2, \lambda_3)$ (homogène à un débit en kg/s), la vitesse au point P ou P1=Pi de coordonnées $x_i$, $y_i$, $z_i$ est :

$$\vec{v} = \begin{pmatrix} v_x \\ v_y \\ v_z \end{pmatrix} = \frac{1}{\rho} \begin{pmatrix} \dfrac{x_i - x_{j_1}}{4\pi R_{ij_1}^3} & \dfrac{x_i - x_{j_2}}{4\pi R_{ij_2}^3} & \dfrac{x_i - x_{j_3}}{4\pi R_{ij_3}^3} \\ \dfrac{y_i - y_{j_1}}{4\pi R_{ij_1}^3} & \dfrac{y_i - y_{j_2}}{4\pi R_{ij_2}^3} & \dfrac{y_i - y_{j_3}}{4\pi R_{ij_3}^3} \\ \dfrac{z_i - z_{j_1}}{4\pi R_{ij_1}^3} & \dfrac{z_i - z_{j_2}}{4\pi R_{ij_2}^3} & \dfrac{z_i - z_{j_3}}{4\pi R_{ij_3}^3} \end{pmatrix} \cdot \begin{pmatrix} a_1 \\ a_2 \\ a_3 \end{pmatrix} = \begin{bmatrix} T_{ij} \end{bmatrix} \begin{pmatrix} a_1 \\ a_2 \\ a_3 \end{pmatrix}$$

$$R_{ij_1} = \sqrt{(x_i - x_{j_1})^2 + (y_i - y_{j_1})^2 + (z_i - z_{J_1})^2}$$

$$R_{ij_2} = \sqrt{(x_i - x_{j_2})^2 + (y_i - y_{j_2})^2 + (z_i - z_{j_2})^2}$$

$$R_{ij_3} = \sqrt{(x_i - x_{j_3})^2 + (y_i - y_{j_3})^2 + (z_i - z_{j_3})^2}$$

Pour Ns sources $S=Sj$ ponctuelles (d'indices j, j={1,...,N_s}) situées respectivement aux points P2 de coordonnées $x_j$, $y_j$, $z_j$ et émettant respectivement un flux de fluide $a_j$ ou $\lambda_j$ et pour Np points tests P ou P1=Pi (d'indices i, i ={1,..,N_p}) de coordonnées $x_i$, $y_i$, $z_i$, la vitesse au point P ou P1=Pi de coordonnées $x_i$, $y_i$, $z_i$ est :

$$Q^x_{objet-source} = \left( q^x_{ij} \right)_{1 \le i \le n_p, 1 \le j \le n_s}$$

$$Q^y_{objet-source} = \left( q^y_{ij} \right)_{1 \le i \le n_p, 1 \le j \le n_s}$$

$$Q^z_{objet-source} = \left( q^z_{ij} \right)_{1 \le i \le n_p, 1 \le j \le n_s}$$

$$\lambda = \left( \lambda_j \right)_{1 \le j \le n_s} \qquad a = \left( a_j \right)_{1 \le j \le n_s}$$

$$\begin{pmatrix} V_{x_1} \\ \vdots \\ V_{x_{N_p}} \end{pmatrix} = \begin{pmatrix} Q^x_{11} & \cdots & Q^x_{1N_S} \\ \vdots & & \vdots \\ Q^x_{N_p 1} & \cdots & Q^x_{N_p N_s} \end{pmatrix} \cdot \begin{pmatrix} a_1 \\ \vdots \\ a_{N_s} \end{pmatrix}$$

$$\begin{pmatrix} V_{y_1} \\ \vdots \\ V_{y_{N_p}} \end{pmatrix} = \begin{pmatrix} Q_{11}^y & \cdots & Q_{1N_s}^y \\ \vdots & & \vdots \\ Q_{N_p 1}^y & \cdots & Q_{N_p N_s}^y \end{pmatrix} \cdot \begin{pmatrix} a_1 \\ \vdots \\ a_{N_s} \end{pmatrix}$$

$$\begin{pmatrix} V_{z_1} \\ \vdots \\ V_{z_{N_p}} \end{pmatrix} = \begin{pmatrix} Q_{11}^z & \cdots & Q_{1N_s}^z \\ \vdots & & \vdots \\ Q_{N_p 1}^z & \cdots & Q_{N_p N_s}^z \end{pmatrix} \cdot \begin{pmatrix} a_1 \\ \vdots \\ a_{N_s} \end{pmatrix}$$

$$Q_{ij}^x = \frac{x_i - x_j}{4\pi\rho R_{ij}^3}, Q_{ij}^y = \frac{y_i - y_j}{4\pi\rho R_{ij}^3}, Q_{ij}^z = \frac{z_i - z_j}{4\pi\rho R_{ij}^3}$$

L'expression des conditions aux limites aux points test d'une interface quelconque entre deux milieux fluides de densités différentes sera une composante de vitesse normale conservée modulo rho et la continuité du potentiel scalaire.

L'expression des conditions aux limites aux points test P1 à la surface SUR de l'interface I (qui constitue un milieu imperméable équivalent à un milieu de densité tendant vers l'infini) sera une composante de vitesse normale nulle aux points tests P1 dans un écoulement parfait On calcule la matrice M de couplage pour la vitesse normale $\mathbf{v_n}(v_{nx}, v_{ny}, v_{nz})$ à une surface. Pour une interface I maillée par $N_s$ points, en chaque point on définit le vecteur normal $\mathbf{n_k}$ ($n_{kx}, n_{ky}, n_{kz}$) k = {1,...,$N_s$}.

Le calcul de la matrice de la vitesse normale aux points tests P1 de l'interface I donne les vecteurs normaux $\mathbf{n_k}$ à l'interface:

$$\left[Q_{objet-source}^n\right] = \begin{pmatrix} n_{x_1} & 0 & 0 \\ 0 & \ddots & 0 \\ 0 & 0 & n_{x_{N_s}} \end{pmatrix} \cdot \left[Q_{objet-source}^x\right] + \begin{pmatrix} n_{y_1} & 0 & 0 \\ 0 & \ddots & 0 \\ 0 & 0 & n_{y_{N_s}} \end{pmatrix} \cdot \left[Q_{objet-source}^y\right] + \begin{pmatrix} n_{z_1} & 0 & 0 \\ 0 & \ddots & 0 \\ 0 & 0 & n_{z_{N_s}} \end{pmatrix} \cdot \left[Q_{objet-source}^z\right]$$

Calcul des matrices de couplage pour la vitesse $\mathbf{v}(v_x, v_y, v_z)$ :

$N_p$ point tests de coordonnées $P_i(x_i, y_i, z_i)$ i ={1,..,$N_p$} et $N_s$ sources ponctuelles de flux aux points $S_j$ ($x_j, y_j, z_j$) j={1,...,$N_s$} constituées d'un triplet de source (ou bloc de 3 sources) qui émettent un flux $\lambda_j$ ($\lambda_{j1}, \lambda_{j2}, \lambda_{j3}$) :

$$\vec{V}_{objet} = \begin{pmatrix} \begin{pmatrix} v_{x_1} \\ v_{y_1} \\ v_{z_1} \end{pmatrix} \\ \vdots \\ \begin{pmatrix} v_{x_i} \\ v_{y_i} \\ v_{z_i} \end{pmatrix} \\ \vdots \\ \begin{pmatrix} v_{x_{N_p}} \\ v_{y_{N_p}} \\ v_{z_{N_p}} \end{pmatrix} \end{pmatrix} = \begin{pmatrix} \begin{bmatrix} T_{11} \end{bmatrix} & \cdots & \cdots & \begin{bmatrix} T_{1N_s} \end{bmatrix} \\ \vdots & & & \\ \begin{bmatrix} T_{i1} \end{bmatrix} & & & \begin{bmatrix} T_{iN_s} \end{bmatrix} \\ \vdots & & & \\ \begin{bmatrix} T_{N_p 1} \end{bmatrix} & \cdots & \cdots & \begin{bmatrix} T_{N_p N_s} \end{bmatrix} \end{pmatrix} \cdot \begin{pmatrix} \begin{pmatrix} \lambda_{11} \\ \lambda_{12} \\ \lambda_{13} \end{pmatrix} \\ \vdots \\ \begin{pmatrix} \lambda_{j1} \\ \lambda_{j2} \\ \lambda_{j3} \end{pmatrix} \\ \vdots \\ \begin{pmatrix} \lambda_{N_s 1} \\ \lambda_{N_s 2} \\ \lambda_{N_s 3} \end{pmatrix} \end{pmatrix}$$

La notation suivante fait apparaître les matrices de couplages entre objet et bloc de sources :

$$\vec{V}_{objet} = \begin{pmatrix} \begin{pmatrix} V_{objet}^x \end{pmatrix} \\ \begin{pmatrix} V_{objet}^y \end{pmatrix} \\ \begin{pmatrix} V_{objet}^z \end{pmatrix} \end{pmatrix} = \begin{pmatrix} \begin{pmatrix} v_{x_1} \\ \vdots \\ v_{x_i} \\ \vdots \\ v_{x_{N_p}} \end{pmatrix} \\ \begin{pmatrix} v_{y_1} \\ \vdots \\ v_{y_i} \\ \vdots \\ v_{y_{N_p}} \end{pmatrix} \\ \begin{pmatrix} v_{y_1} \\ \vdots \\ v_{y_i} \\ \vdots \\ v_{y_{N_p}} \end{pmatrix} \end{pmatrix} = \begin{bmatrix} Q^x_{objet-source_1} & Q^x_{objet-source_2} & Q^x_{objet-source_3} \\ Q^y_{objet-source_1} & Q^y_{objet-source_2} & Q^y_{objet-source_3} \\ Q^z_{objet-source_1} & Q^z_{objet-source_2} & Q^z_{objet-source_3} \end{bmatrix} \cdot \begin{pmatrix} \begin{pmatrix} \lambda_{11} \\ \vdots \\ \lambda_{j1} \\ \vdots \\ \lambda_{N_s 1} \end{pmatrix} \\ \begin{pmatrix} \lambda_{12} \\ \vdots \\ \lambda_{j2} \\ \vdots \\ \lambda_{N_s 2} \end{pmatrix} \\ \begin{pmatrix} \lambda_{13} \\ \vdots \\ \lambda_{j3} \\ \vdots \\ \lambda_{N_s 3} \end{pmatrix} \end{pmatrix}$$

ce qui permet d'obtenir les matrices M de couplages dans le cas de bloc de sources (ici avec un bloc contenant trois sources scalaires)

$$\left\lfloor Q^x_{objet-source_{1,2,3}} \right\rfloor = \left\lfloor Q^x_{objet-source_1} \quad Q^x_{objet-source_2} \quad Q^x_{objet-source_3} \right\rfloor$$

ce qui permet de réécrire $\mathbf{V}_{objet}$ de manière plus compacte :

$$\vec{V}_{objet} = \begin{pmatrix} \begin{pmatrix} V_{objet}^x \end{pmatrix} \\ \begin{pmatrix} V_{objet}^y \end{pmatrix} \\ \begin{pmatrix} V_{objet}^z \end{pmatrix} \end{pmatrix} = \begin{bmatrix} Q^x_{objet-source_{1,2,3}} \\ Q^y_{objet-source_{1,2,3}} \\ Q^z_{objet-source_{1,2,3}} \end{bmatrix} \cdot \begin{pmatrix} \begin{pmatrix} \Lambda_1 \end{pmatrix} \\ \begin{pmatrix} \Lambda_2 \end{pmatrix} \\ \begin{pmatrix} \Lambda_3 \end{pmatrix} \end{pmatrix}$$

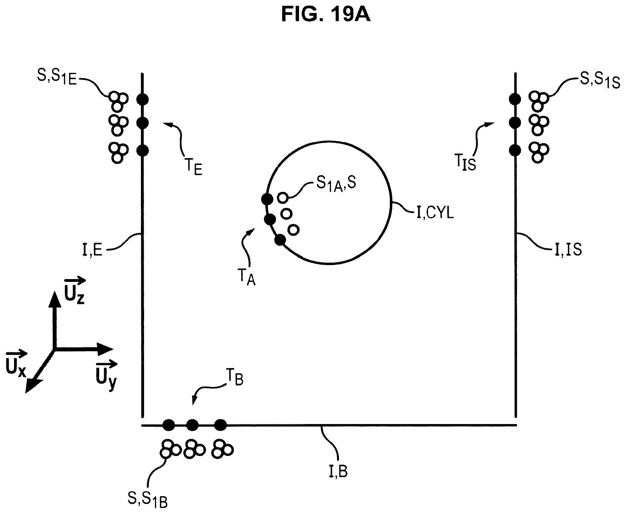

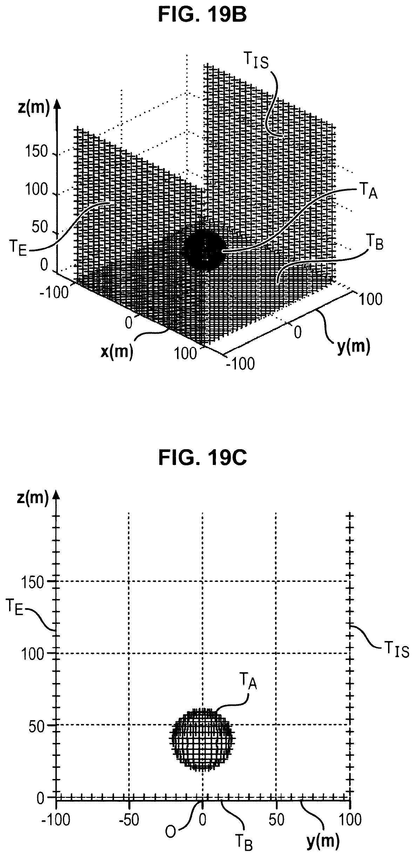

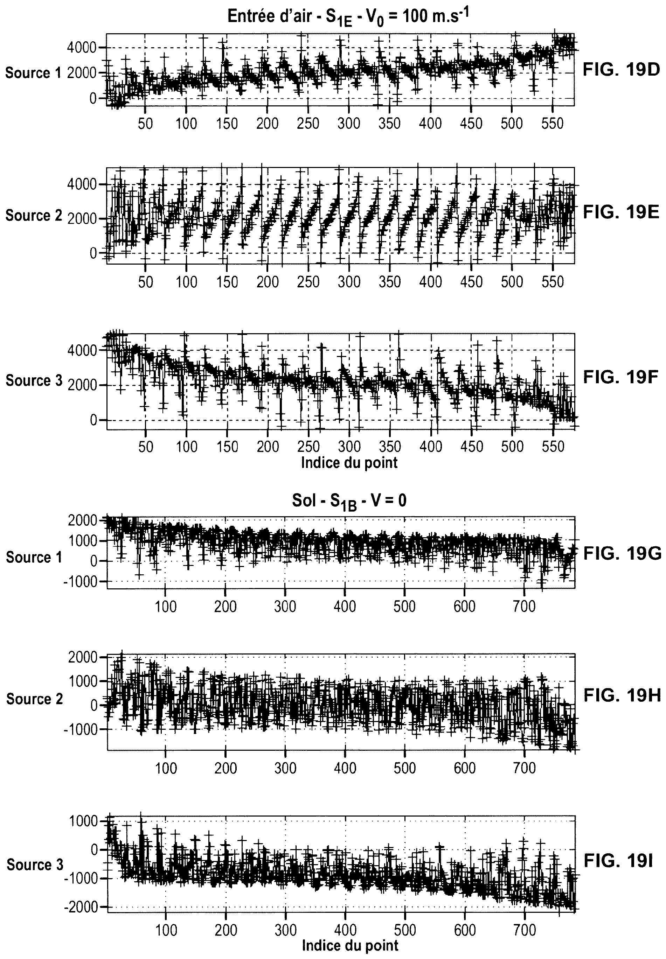

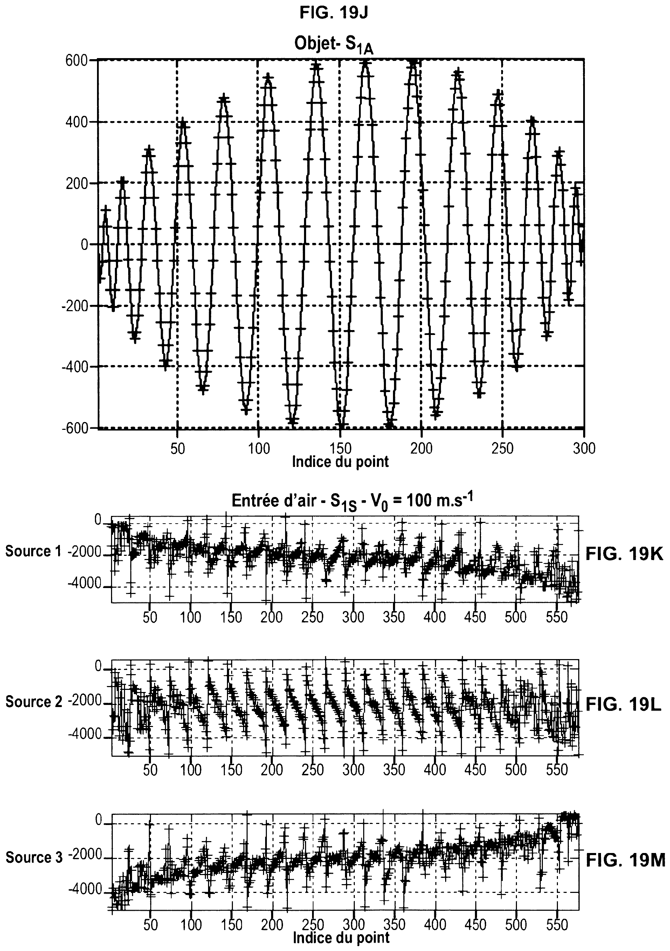

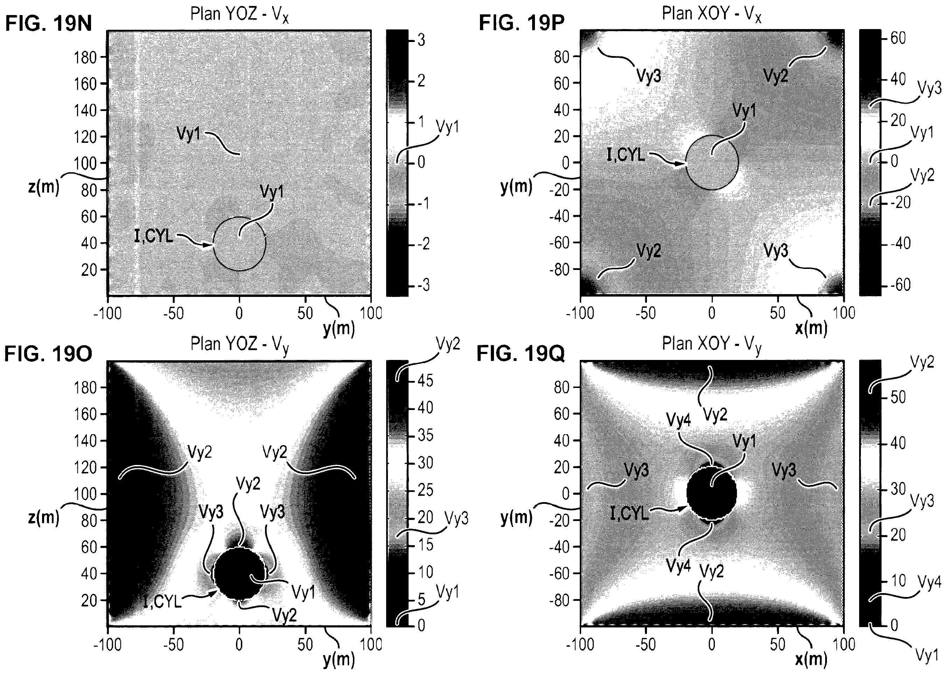

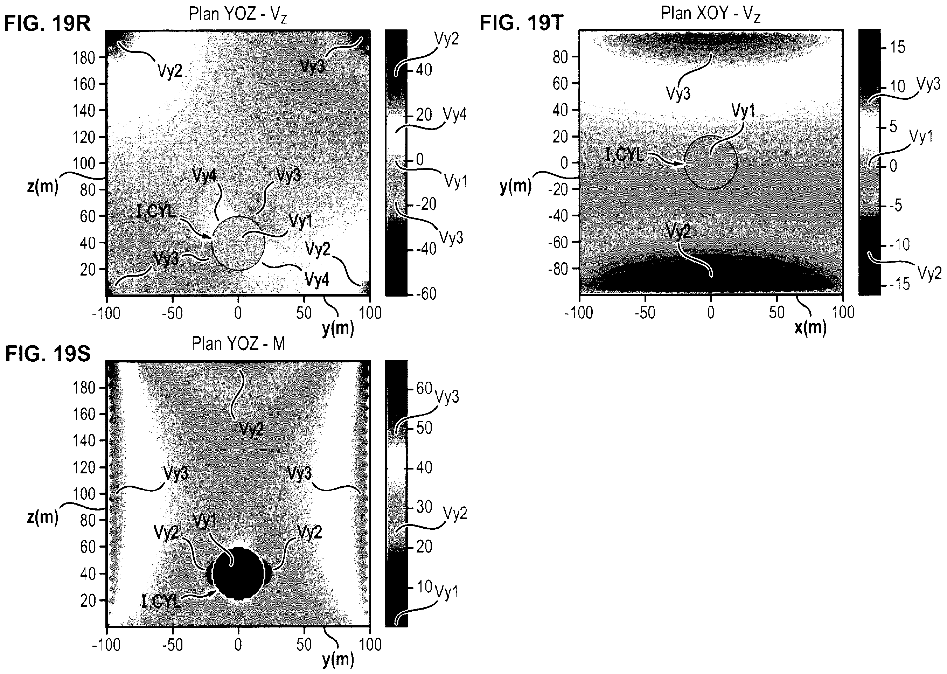

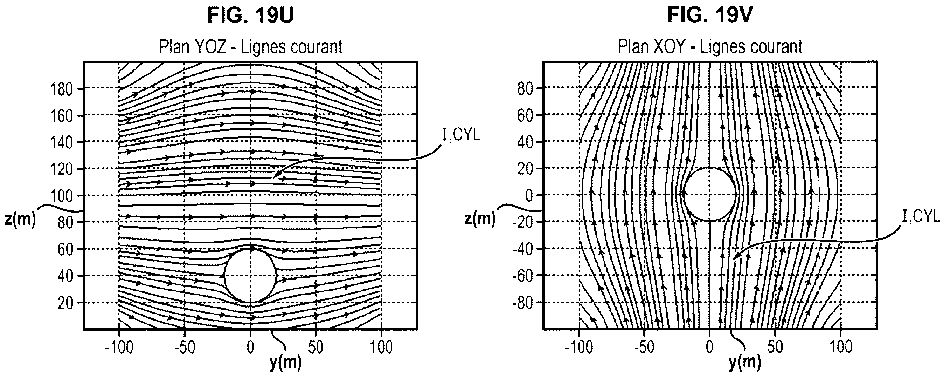

Dans un exemple non limitatif, représenté aux figures 19A, 19B et 19C, les objets (ou interfaces I) sont nommés selon une lettre E, IS, B, les points tests associés par T avec la lettre en indice , les blocs sources associés sont nommés par S avec le numéro du milieu et la lettre en indice :

- Entrée E à gauche (entrée soufflerie) : $T_E/S_{1E}$ - $n_e$ points tests - bloc source triplet scalaire (par exemple 600 points),
- Sortie IS à droite (sortie soufflerie) : $T_{IS}/S_{1S}$ - $n_s$ points tests - bloc source triplet scalaire (par exemple 600 points),
- Obstacle A dans écoulement (sphère) : $T_A/S_{1A}$ - $n_a$ points tests - bloc source simple (par exemple 300 points), sphère de centre situé à une hauteur z = 40m avec un rayon de 20 m,
- Sol B: $T_B/S_{1B}$ - $n_b$ points tests - bloc source triplet scalaire (par exemple 800 points).

Dans cet exemple, $V_n = 0$ sur la sphère donne $n_a$ équations :

$$Q^n_{T_A S_{1E}} . S_{1E} + Q^n_{T_A S_{1A}} . S_{1A} + Q^n_{T_A S_{1B}} . S_{1B} + Q^n_{T_A S_{1S}} . S_{1S} = 0$$

$V = V_B$ sur le sol donne $3*n_b$ équations :

$$\begin{cases} Q^x_{T_B S_{1E}}.S_{1E} + Q^x_{T_B S_{1A}}.S_{1A} + Q^x_{T_B S_{1B}}.S_{1B} + Q^x_{T_B S_{1S}}.S_{1S} = V^x_B \\ Q^y_{T_B S_{1E}}.S_{1E} + Q^y_{T_B S_{1A}}.S_{1A} + Q^y_{T_B S_{1B}}.S_{1B} + Q^y_{T_B S_{1S}}.S_{1S} = V^y_B \\ Q^z_{T_B S_{1E}}.S_{1E} + Q^z_{T_B S_{1A}}.S_{1A} + Q^z_{T_B S_{1B}}.S_{1B} + Q^z_{T_B S_{1S}}.S_{1S} = V^z_B \end{cases}$$

$V = V_E$ sur l'entrée d'air donne $3*n_e$ équations :

$$\begin{cases} Q^x_{T_E S_{1E}}.S_{1E} + Q^x_{T_E S_{1A}}.S_{1A} + Q^x_{T_E S_{1B}}.S_{1B} + Q^x_{T_E S_{1S}}.S_{1S} = V^x_E \\ Q^y_{T_E S_{1E}}.S_{1E} + Q^y_{T_E S_{1A}}.S_{1A} + Q^y_{T_E S_{1B}}.S_{1B} + Q^y_{T_E S_{1S}}.S_{1S} = V^y_E \\ Q^z_{T_E S_{1E}}.S_{1E} + Q^z_{T_E S_{1A}}.S_{1A} + Q^z_{T_E S_{1B}}.S_{1B} + Q^z_{T_E S_{1S}}.S_{1S} = V^z_E \end{cases}$$

$V = V_s$ sur l'entrée d'air donne $3*n_s$ équations :

$$\begin{cases} Q^x_{T_S S_{1E}}.S_{1E} + Q^x_{T_S S_{1A}}.S_{1A} + Q^x_{T_S S_{1B}}.S_{1B} + Q^x_{T_S S_{1S}}.S_{1S} = V^x_S \\ Q^y_{T_S S_{1E}}.S_{1E} + Q^y_{T_S S_{1A}}.S_{1A} + Q^y_{T_S S_{1B}}.S_{1B} + Q^y_{T_S S_{1S}}.S_{1S} = V^y_S \\ Q^z_{T_S S_{1E}}.S_{1E} + Q^z_{T_S S_{1A}}.S_{1A} + Q^z_{T_S S_{1B}}.S_{1B} + Q^z_{T_S S_{1S}}.S_{1S} = V^z_S \end{cases}$$

La matrice M globale de résolution est alors :

$$\begin{pmatrix} \begin{pmatrix} V^x_E \\ V^y_E \\ V^z_E \end{pmatrix} \\ (0) \\ \begin{pmatrix} V^x_B \\ V^y_B \\ V^z_B \end{pmatrix} \\ \begin{pmatrix} V^x_S \\ V^y_S \\ V^z_S \end{pmatrix} \end{pmatrix} = \begin{pmatrix} (\ Q^x_{T_E S_{1E}}\ ) & Q^x_{T_E S_{1A}} & (\ Q^x_{T_E S_{1B}}\ ) & (\ Q^x_{T_S S_{1E}}\ ) \\ (\ Q^y_{T_E S_{1E}}\ ) & Q^y_{T_E S_{1A}} & (\ Q^y_{T_E S_{1B}}\ ) & (\ Q^y_{s_1 J S_2}\ ) \\ (\ Q^z_{T_E S_{1E}}\ ) & Q^z_{T_E S_{1A}} & (\ Q^z_{T_E S_{1B}}\ ) & (\ Q^z_{s_1 J S_2}\ ) \\ (\ Q^n_{T_A S_{1E}}\ ) & Q^n_{T_A S_{1A}} & (\ Q^n_{T_A S_{1B}}\ ) & (\ Q^n_{T_A S_{1S}}\ ) \\ (\ Q^x_{T_B S_{1E}}\ ) & Q^x_{T_B S_{1A}} & (\ Q^x_{T_B S_{1B}}\ ) & (\ Q^x_{T_B S_{1S}}\ ) \\ (\ Q^y_{T_B S_{1E}}\ ) & Q^y_{T_B S_{1A}} & (\ Q^y_{T_B S_{1B}}\ ) & (\ Q^y_{T_B S_{1S}}\ ) \\ (\ Q^z_{T_B S_{1E}}\ ) & Q^z_{T_B S_{1A}} & (\ Q^z_{T_B S_{1B}}\ ) & (\ Q^z_{T_B S_{1S}}\ ) \\ (\ Q^x_{T_S S_{1E}}\ ) & Q^x_{T_S S_{1A}} & (\ Q^x_{T_S S_{1B}}\ ) & (\ Q^x_{T_S S_{1S}}\ ) \\ (\ Q^y_{T_S S_{1E}}\ ) & Q^y_{T_S S_{1A}} & (\ Q^y_{T_S S_{1B}}\ ) & (\ Q^y_{T_S S_{1S}}\ ) \\ (\ Q^z_{T_S S_{1E}}\ ) & Q^z_{T_S S_{1A}} & (\ Q^z_{T_S S_{1B}}\ ) & (\ Q^z_{T_S S_{1S}}\ ) \end{pmatrix} \begin{pmatrix} \begin{pmatrix} S_{1E} \end{pmatrix} \\ (S_{1A}) \\ \begin{pmatrix} S_{1B} \end{pmatrix} \\ \begin{pmatrix} S_{1S} \end{pmatrix} \end{pmatrix}$$

Les conditions aux limites utilisées pour la résolution sont : $V_B = 0$, $V_S = V_0 \cdot u_y$, $V_E = V_0 \cdot u_y$

Dans cet exemple, les sources sont représentées aux figures 19D à 19M, où l'abscisse est l'indice du point dans le maillage de point sur l'objet correspondant et l'ordonnée est le flux de la source.

On a ensuite calculé et visualisé la première grandeur (vitesse V) dans les les 2 plans XOY et YOZ passant par le centre de la sphère, aux figures 19N à 19V.

On décrit ci-dessous un mode de réalisation dans le cas d'une source rotationnelle de fluide. Soit une source S ponctuelle rotationnelle au point $P2 = Pj(x_j, y_j, z_j)$ qui émet un flux $\lambda$ ($\lambda_x, \lambda_y, \lambda_z$) homogène à un débit massique (kg/s) dans un milieu défini par sa densité $\rho$. On calcule au point P ou $P1 = Pi$ de coordonnées $(x_i, y_i, z_i)$ le potentiel vecteur **A**, sa dérivée normale à l'interface I et la vitesse de l'écoulement **v.**

$$\vec{A} = \begin{pmatrix} A_x \\ A_y \\ A_z \end{pmatrix} = \begin{pmatrix} \dfrac{1}{4\pi\rho R_{ij}} & 0 & 0 \\ 0 & \dfrac{1}{4\pi\rho R_{ij}} & 0 \\ 0 & 0 & \dfrac{1}{4\pi\rho R_{ij}} \end{pmatrix} \cdot \begin{pmatrix} \lambda_x \\ \lambda_y \\ \lambda_z \end{pmatrix} = w_{ij} \cdot \begin{pmatrix} \lambda_x \\ \lambda_y \\ \lambda_z \end{pmatrix}$$

$$\vec{v} = -\overrightarrow{rot}\,\vec{A} = \begin{pmatrix} 0 & \dfrac{-(z_i - z_j)}{4\pi\rho R_{ij}} & \dfrac{(y_i - y_j)}{4\pi\rho R_{ij}} \\ \dfrac{(z_i - z_j)}{4\pi\rho R_{ij}} & 0 & \dfrac{-(x_i - x_j)}{4\pi\rho R_{ij}} \\ \dfrac{-(y_i - y_j)}{4\pi\rho R_{ij}} & \dfrac{(x_i - x_j)}{4\pi\rho R_{ij}} & 0 \end{pmatrix} \cdot \begin{pmatrix} \lambda_x \\ \lambda_y \\ \lambda_z \end{pmatrix} = t_{ij} \cdot \begin{pmatrix} \lambda_x \\ \lambda_y \\ \lambda_z \end{pmatrix}$$

Pour Ns sources $S = S_j$ ponctuelles (d'indices j, j={1,...,$N_s$}) situées respectivement aux points P2 de coordonnées $x_j$, $y_j$, $z_j$ et émettant respectivement un flux de fluide $a_j$ ou $\lambda_j$ et pour Np points testsP ou P1=Pi (d'indices i, i ={1,..,$N_p$}) de coordonnées $x_i$, $y_i$, $z_i$, la matrice M, pour différencier les cas sera notée W, T ou Y

$$W = \left(w_{ij}\right)_{1 \le i \le n_p, 1 \le j \le n_s}$$

$$T = \left(t_{ij}\right)_{1 \le i \le n_p, 1 \le j \le n_s}$$

$$Y = \left(y_{ij}\right)_{1 \le i \le n_p, 1 \le j \le n_s}$$

Et on considère un vecteur de source de flux

$$\lambda = \left(\lambda_j^x, \lambda_j^y, \lambda_j^z\right)_{1 \le j \le N_c}$$

Dans ce mode de réalisation, les conditions aux limites L peuvent comprendre des conditions aux limites intrinsèques (CLI), qui prévoient qu'à l'interface entre deux milieux définis par leur densité respectives ($\rho_1$, $\rho_2$), on considère la continuité du potentiel vecteur et sa dérivée calculée par rapport à la normale à l'interface en chaque point de l'interface :

$$\begin{cases} \vec{A_1} = \vec{A_2} \\ \rho_1 \cdot \dfrac{\partial \vec{A_1}}{\partial n} = \rho_2 \cdot \dfrac{\partial \vec{A_2}}{\partial n} \end{cases}$$

Dans ce mode de réalisation, les conditions aux limites L peuvent comprendre des conditions aux limites utilisateurs (CLU) qui permettent de fixer des conditions aux limites des objets : vitesse normale nulle et/ou vitesse nulle, et/ou autres.

On décrit ci-dessous un mode de réalisation dans le cas d'une source de force. Une source de force est également appelée Stokeslet.

Soit une source S ponctuelle de force au point P2=Pj($x_j$,$y_j$,$z_j$) qui émet un flux $\lambda$ ($\lambda_x$,$\lambda_y$,$\lambda_z$) homogène à un débit massique (kg/s) dans un milieu défini par sa viscosité $\eta$ et sa viscosité cinématique $\mu$. On calcule au point P ou P1=Pi de coordonnées ($x_i$,$y_i$,$z_i$) la vitesse de l'écoulement v et la pression p.

$$v = \begin{pmatrix} v^x \\ v^y \\ v^z \end{pmatrix} = \frac{1}{8\pi\mu} \begin{pmatrix} \dfrac{(x_i-x_j)}{R_{ij}} & 0 & 0 \\ 0 & \dfrac{(y_i-y_j)}{R_{ij}} & 0 \\ 0 & 0 & \dfrac{(z_i-z_j)}{R_{ij}} \end{pmatrix} \begin{pmatrix} \lambda_x \\ \lambda_y \\ \lambda_z \end{pmatrix} + \frac{1}{8\pi\mu} \begin{pmatrix} \dfrac{(x_i-x_j).(x_i-x_j)}{R_{ij}^3} & \dfrac{(x_i-x_j).(y_i-y_j)}{R_{ij}^3} & \dfrac{(x_i-x_j).(z_i-z_j)}{R_{ij}^3} \\ \dfrac{(y_i-y_j).(x_i-x_j)}{R_{ij}^3} & \dfrac{(y_i-y_j).(y_i-y_j)}{R_{ij}^3} & \dfrac{(y_i-y_j).(z_i-z_j)}{R_{ij}^3} \\ \dfrac{(z_i-z_j).(x_i-x_j)}{R_{ij}^3} & \dfrac{(z_i-z_j).(y_i-y_j)}{R_{ij}^3} & \dfrac{(z_i-z_j).(z_i-z_j)}{R_{ij}^3} \end{pmatrix} \begin{pmatrix} \lambda_x \\ \lambda_y \\ \lambda_z \end{pmatrix} = k_{ij}. \begin{pmatrix} \lambda_x \\ \lambda_y \\ \lambda_z \end{pmatrix}$$

$$p = \frac{1}{4\pi} \begin{pmatrix} \dfrac{(x_i-x_j)}{R_{ij}} & \dfrac{(y_i-y_j)}{R_{ij}} & \dfrac{(z_i-z_j)}{R_{ij}} \end{pmatrix} . \begin{pmatrix} \lambda_x \\ \lambda_y \\ \lambda_z \end{pmatrix} = p_{ij} \begin{pmatrix} \lambda_x \\ \lambda_y \\ \lambda_z \end{pmatrix}$$

Pour Ns sources S=Sj ponctuelles (d'indices j, j={1,...,$N_s$}) situées respectivement aux points P2 de coordonnées $x_j$, $y_j$, $z_j$ et émettant respectivement un flux de fluide $a_j$ ou $\lambda_j$ et pour Np points tests P ou P1=Pi (d'indices i, i ={1,..,$N_p$}) de coordonnées $x_i$, $y_i$, $z_i$, la matrice M sera notée K pour les stokeslets ou P pour la pression. $K_{ij} = \left(k_{ij}\right)_{1 \le i \le n_p, 1 \le j \le n_s}$

$$P_{ij} = \left(p_{ij}\right)_{1 \le i \le n_p, 1 \le j \le n_s}$$

Et on considère un vecteur de source de flux $\lambda = \left(\lambda_j^x, \lambda_j^y, \lambda_j^z\right)_{1 \le j \le N_s}$

Dans ce mode de réalisation, les conditions aux limites L peuvent comprendre des conditions aux limites intrinsèques (CLI), qui prévoient qu'à l'interface entre deux milieux définis par leur densité respective ($\rho_1$, $\rho_2$), on considère la continuité de la pression et de la vitesse normale à l'interface en chaque point de l'interface.

$$\begin{cases} P_1 = P_2 \\ \rho_1.V_1^N = \rho_2.V_2^N \end{cases}$$

Dans ce mode de réalisation, les conditions aux limites L peuvent comprendre des conditions aux limites utilisateurs (CLU) qui permettent de fixer des conditions aux limites des objets : vitesse normale nulle et/ou vitesse nulle, et/ou autres.

Suivant un mode de réalisation, la vitesse V est égale à :

$$\vec{V}(\vec{r}) = \frac{1}{\rho} \begin{pmatrix} \dfrac{x-x'}{4\pi|\vec{r}-\vec{r}'|^3} \\ \dfrac{y-y'}{4\pi|\vec{r}-\vec{r}'|^3} \\ \dfrac{z-z'}{4\pi|\vec{r}-\vec{r}'|^3} \end{pmatrix} a - \frac{1}{\rho} \begin{pmatrix} 0 & -\dfrac{z-z'}{4\pi|\vec{r}-\vec{r}'|^3} & \dfrac{y-y'}{4\pi|\vec{r}-\vec{r}'|^3} \\ \dfrac{z-z'}{4\pi|\vec{r}-\vec{r}'|^3} & 0 & -\dfrac{x-x'}{4\pi|\vec{r}-\vec{r}'|^3} \\ -\dfrac{y-y'}{4\pi|\vec{r}-\vec{r}'|^3} & \dfrac{x-x'}{4\pi|\vec{r}-\vec{r}'|^3} & 0 \end{pmatrix} \begin{pmatrix} j_x \\ j_y \\ j_z \end{pmatrix}$$

Dans cette équation, la première partie multipliée par le scalaire a est la composante longitudinale (ou irrotationelle ou scalaire) qui est décrite par un tenseur d'ordre 1, tandis que la deuxième partie multipliée par j est la composante transverse (ou solénoïdale ou rotationnelle) qui est décrite par un tenseur d'ordre 2.

V est calculée en r pour une singularité situé en r' (source scalaire + rotationnelle).

Suivant un mode de réalisation de l'invention, plusieurs sources de fluide peuvent être combinées.

Selon un premier exemple, il est prévu un triplet de sources scalaires situé autour du point r' (en r1', r2', r3'), le terme a devient un vecteur :

$$\vec{V}(\vec{r}) = \frac{1}{\rho} \begin{pmatrix} \dfrac{x - x_1'}{4\pi|\vec{r} - \vec{r}_1'|^3} & \dfrac{x - x_2'}{4\pi|\vec{r} - \vec{r}_2'|^3} & \dfrac{x - x_3'}{4\pi|\vec{r} - \vec{r}_3'|^3} \\[3mm] \dfrac{y - y_1'}{4\pi|\vec{r} - \vec{r}_1'|^3} & \dfrac{y - y_2'}{4\pi|\vec{r} - \vec{r}_2'|^3} & \dfrac{y - y_3'}{4\pi|\vec{r} - \vec{r}_3'|^3} \\[3mm] \dfrac{z - z_1'}{4\pi|\vec{r} - \vec{r}_1'|^3} & \dfrac{z - z_2'}{4\pi|\vec{r} - \vec{r}_2'|^3} & \dfrac{z - z_3'}{4\pi|\vec{r} - \vec{r}_3'|^3} \end{pmatrix} \cdot \begin{pmatrix} a_1 \\ a_2 \\ a_3 \end{pmatrix}$$

Dans cette dernière équation, les composantes longitudinales et transverses sont possibles (mais l'écoulement reste irrotationnel).

V est calculée en r pour un triplet de singularités situé en r'1, r'2, r'3 (sources scalaires). Les 3 sources ne doivent pas être confondues.

Selon un deuxième exemple, il est prévu un dipôle de sources scalaires centré en r1' et orienté selon l'axe X:

$$\vec{V}(\vec{r}) = \frac{1}{\rho} \begin{pmatrix} \dfrac{x - (x_1'+\Delta x)}{4\pi|\vec{r} - (\vec{r}_1'+\Delta x)|^3} - \dfrac{x - (x_1'-\Delta x)}{4\pi|\vec{r} - (\vec{r}_1'-\Delta x)|^3} \\[3mm] \dfrac{y - y_1'}{4\pi|\vec{r} - (\vec{r}_1'+\Delta x)|^3} - \dfrac{y - y_1'}{4\pi|\vec{r} - (\vec{r}_1'-\Delta x)|^3} \\[3mm] \dfrac{z - z_1'}{4\pi|\vec{r} - (\vec{r}_1'+\Delta x)|^3} - \dfrac{z - z_1'}{4\pi|\vec{r} - (\vec{r}_1'-\Delta x)|^3} \end{pmatrix} \cdot a$$

Dans cette dernière équation, les composantes longitudinales et transverses sont possibles (mais l'écoulement reste irrotationnel).

V est calculée en r pour un doublet de singularités situé en r'1+∆x, r'1-∆x (sources scalaires).

Selon un troisième exemple, il est prévu 3 dipôles centrés en r1', r2', r3' et orientés respectivement selon X, Y et Z :

$$\vec{V}(\vec{r}) = \frac{1}{\rho} \begin{pmatrix} \dfrac{x - (x_1'+\Delta x)}{4\pi|\vec{r} - (\vec{r}_1'+\Delta x)|^3} - \dfrac{x - (x_1'-\Delta x)}{4\pi|\vec{r} - (\vec{r}_1'-\Delta x)|^3} & \dfrac{x - x_2'}{4\pi|\vec{r} - (\vec{r}_2'+\Delta y)|^3} - \dfrac{x - x_2'}{4\pi|\vec{r} - (\vec{r}_2'-\Delta y)|^3} & \dfrac{x - x_3'}{4\pi|\vec{r} - (\vec{r}_3'+\Delta z)|^3} - \dfrac{x - x_3'}{4\pi|\vec{r} - (\vec{r}_3'-\Delta z)|^3} \\[3mm] \dfrac{y - y_1'}{4\pi|\vec{r} - (\vec{r}_1'+\Delta x)|^3} - \dfrac{y - y_1'}{4\pi|\vec{r} - (\vec{r}_1'-\Delta x)|^3} & \dfrac{y - (y_2'+\Delta y)}{4\pi|\vec{r} - (\vec{r}_2'+\Delta y)|^3} - \dfrac{y - (y_2'-\Delta y)}{4\pi|\vec{r} - (\vec{r}_2'-\Delta y)|^3} & \dfrac{y - y_3'}{4\pi|\vec{r} - (\vec{r}_3'+\Delta z)|^3} - \dfrac{y - y_3'}{4\pi|\vec{r} - (\vec{r}_3'-\Delta z)|^3} \\[3mm] \dfrac{z - z_1'}{4\pi|\vec{r} - (\vec{r}_1'+\Delta x)|^3} - \dfrac{z - z_1'}{4\pi|\vec{r} - (\vec{r}_1'-\Delta x)|^3} & \dfrac{z - z_2'}{4\pi|\vec{r} - (\vec{r}_2'+\Delta y)|^3} - \dfrac{z - z_2'}{4\pi|\vec{r} - (\vec{r}_2'-\Delta y)|^3} & \dfrac{z - (z_3'+\Delta z)}{4\pi|\vec{r} - (\vec{r}_3'+\Delta z)|^3} - \dfrac{z - (z_3'-\Delta z)}{4\pi|\vec{r} - (\vec{r}_3'-\Delta z)|^3} \end{pmatrix} \cdot \begin{pmatrix} a_1 \\ a_2 \\ a_3 \end{pmatrix}$$

Dans cette dernière équation, les composantes longitudinales et transverses sont possibles (mais l'écoulement reste irrotationnel).

V est calculée en r pour pour trois doublets de singularités situés respectivement en r'1+∆x, r'1-∆x, r'2+∆y, r'2-∆y, r'3+∆z, r'3-∆z (sources scalaires).

Si chacun des trois dipôles a un même centre situé en r', on peut enlever les indices 1, 2, et 3 dans la matrice:

$$\vec{V}(\vec{r}) = \frac{1}{\rho} \begin{pmatrix} \dfrac{x - (x'+\Delta x)}{4\pi|\vec{r} - (\vec{r}'+\Delta x)|^3} - \dfrac{x - (x'-\Delta x)}{4\pi|\vec{r} - (\vec{r}'-\Delta x)|^3} & \dfrac{x - x'}{4\pi|\vec{r} - (\vec{r}'+\Delta y)|^3} - \dfrac{x - x'}{4\pi|\vec{r} - (\vec{r}'-\Delta y)|^3} & \dfrac{x - x'}{4\pi|\vec{r} - (\vec{r}'+\Delta z)|^3} - \dfrac{x - x'}{4\pi|\vec{r} - (\vec{r}'-\Delta z)|^3} \\[3mm] \dfrac{y - y'}{4\pi|\vec{r} - (\vec{r}'+\Delta x)|^3} - \dfrac{y - y'}{4\pi|\vec{r} - (\vec{r}'-\Delta x)|^3} & \dfrac{y - (y'+\Delta y)}{4\pi|\vec{r} - (\vec{r}'+\Delta y)|^3} - \dfrac{y - (y'-\Delta y)}{4\pi|\vec{r} - (\vec{r}'-\Delta y)|^3} & \dfrac{y - y'}{4\pi|\vec{r} - (\vec{r}'+\Delta z)|^3} - \dfrac{y - y'}{4\pi|\vec{r} - (\vec{r}'-\Delta z)|^3} \\[3mm] \dfrac{z - z'}{4\pi|\vec{r} - (\vec{r}'+\Delta x)|^3} - \dfrac{z - z'}{4\pi|\vec{r} - (r'-\Delta x)|^3} & \dfrac{z - z'}{4\pi|\vec{r} - (\vec{r}'+\Delta y)|^3} - \dfrac{z - z'}{4\pi|\vec{r} - (\vec{r}'-\Delta y)|^3} & \dfrac{z - (z'+\Delta z)}{4\pi|\vec{r} - (\vec{r}'+\Delta z)|^3} - \dfrac{z - (z'-\Delta z)}{4\pi|\vec{r} - (\vec{r}'-\Delta z)|^3} \end{pmatrix} \begin{pmatrix} a_1 \\ a_2 \\ a_3 \end{pmatrix}$$

Lorsque la viscosité n'est plus négligeable, aux nombres de Reynolds faibles, la pression p et la vitesse V ont

$$p = -\frac{\vec{r}.\vec{\lambda}}{4.\pi.\rho.|r-r'|^3} \qquad V = \frac{1}{8.\pi.\rho}\left(\frac{I}{|r-r'|}.\vec{\lambda} + \frac{\sigma_{rr}}{|r-r'|^3}.\vec{\lambda}\right)$$

pour expression : et où I est l'identité et σ un tenseur.

Doù l'expression de p calculée au point d'indice i, pour une singularité situé au point d'indice j :

$$p = \frac{1}{4.\pi.\rho}\left(\frac{(x_i - x_j)}{R_{ij}^3} \quad \frac{(y_i - y_j)}{R_{ij}^3} \quad \frac{(z_i - z_j)}{R_{ij}^3}\right)\begin{pmatrix}\lambda ix \\ \lambda iy \\ \lambda iz\end{pmatrix}$$

et le tenseur d'ordre 2 s'exprime pour V:

$$\begin{pmatrix}Vx \\ Vy \\ Vz\end{pmatrix} = \frac{1}{8.\pi.\rho}\begin{pmatrix}\frac{(x_i-x_j)}{R_{ij}} + \frac{(x_i-x_j).(x_i-x_j)}{R_{ij}^3} & \frac{(x_i-x_j)}{R_{ij}} + \frac{(x_i-x_j).(y_i-y_j)}{R_{ij}^3} & \frac{(x_i-x_j)}{R_{ij}} + \frac{(x_i-x_j).(z_i-z_j)}{R_{ij}^3} \\ \frac{(y_i-y_j)}{R_{ij}} + \frac{(y_i-y_j).(x_i-x_j)}{R_{ij}^3} & \frac{(y_i-y_j)}{R_{ij}} + \frac{(y_i-y_j).(y_i-y_j)}{R_{ij}^3} & \frac{(y_i-y_j)}{R_{ij}} + \frac{(y_i-y_j).(z_i-z_j)}{R_{ij}^3} \\ \frac{(z_i-z_j)}{R_{ij}} + \frac{(z_i-z_j).(x_i-x_j)}{R_{ij}^3} & \frac{(z_i-z_j)}{R_{ij}} + \frac{(z_i-z_j).(y_i-y_j)}{R_{ij}^3} & \frac{(z_i-z_j)}{R_{ij}} + \frac{(z_i-z_j).(z_i-z_j)}{R_{ij}^3}\end{pmatrix}\begin{pmatrix}\lambda ix \\ \lambda iy \\ \lambda iz\end{pmatrix}$$

Les conditions aux limites appliquées aux surfaces et contenues dans le vecteur C, peuvent être vectorielles et différentes en chaque point test P1 de la surface SUR. Ceci ouvre la possibilité d'immerger un objet I dans un champ de vecteur de topologie irrégulière, d'une part, mais également de conférer à chaque point de l'objet un vecteur vitesse particulier. Ceci a été testé, par exemple avec comme interface I un cylindre en rotation (chaque point test P3 de sa surface SUR est associé à un vecteur vitesse tangentiel) immergé dans un fluide F avec gradient de vent.

Dans tous les cas qui suivent, le fluide F est considéré incompressible et/ou non réversible.

Le nombre de Reynolds est le rapport entre les forces d'inerties et les forces visqueuses. On considère des cas de nombres de Reynolds élevés, c'est-à-dire supérieurs à 3000, pour lesquels le fluide est considéré comme non visqueux. Dans ces cas, on néglige les termes de viscosité. Il y a découplage entre les équations de pression et celles de la vitesse. L'équation de Poisson qui résulte de ces approximations permet de calculer la vitesse et admet pour solutions les fonctions harmoniques (en 1/R et leurs dérivées). La pression est calculée par l'équation de Bernouilli.

On considère également d'autres cas de nombres de Reynolds inférieurs à 2000 pour lesquels les forces de viscosité sont prépondérantes. Entre les 2 se situe une zone intermédiaire où les 2 phénomènes sont mélangés.

Cas 1

Suivant un mode de réalisation, représenté à la figure 21, il est prévu comme source de fluide une seule source S scalaire de débit massique de fluide associée à chaque premier point test P1, pour la condition L aux limites ayant au premier point test P1 une composante normale de vitesse du fluide au premier point test P1, qui est nulle à l'interface I, B. Ce mode de réalisation prévoit donc une seule source par groupe. Chacun des modes de réalisation et des variantes du cas 1 est par exemple combiné avec le premier mode de réalisation sous-jacent précité (source S située en dessous de la surface imperméable SUR du solide de l'interface et de l'autre côté de l'écoulement de fluide F), ce qui est le cas ci-dessous.

Ce mode de réalisation est par exemple utilisé pour un fluide incompressible, non visqueux (nombre de Reynolds élevé) et non rotationnel, sans tenir compte d'une couche limite, l'objet étant plongé dans un champ Vo de fluide. Dans ce cas, la solution est l'équation de Poisson, la vitesse dérive d'un potentiel scalaire. Ce cas 1 ainsi que les cas comportant uniquement des sources scalaires permet de connaître les valeurs de vitesse ou de pression loin de la surface SUR de l'interface I, pouvant être une aile d'avion, le fluide étant considéré comme parfait.

Dans la matrice M globale de résolution, le coefficient est:

$$Q^{ij} = \frac{\vec{R_{ij}}}{4.\pi.\rho.R_{ij}^3}$$

$$\overrightarrow{V_{N,i}} = Q^{ij}.\lambda_j$$

Les conditions aux limites sont, en projetant sur les normales à la surface B (ou SUR):

$$C_{Ai} = \overrightarrow{V_i}.\overrightarrow{N_B} = \sum_j (Q^{ij}_{B,A}.\overrightarrow{N_B}).\lambda_{Bj} = Q^i_{NBA}.\lambda_B = -\overrightarrow{V_0}.\overrightarrow{N_B}$$

La matrice M est :

$$\begin{pmatrix} V^N_{B,1} \\ \vdots \\ V^N_{B,n_B} \end{pmatrix} = \begin{pmatrix} Q^{N1,1}_{BB} & \cdots & Q^{N1,n_B}_{BB} \\ \vdots & & \vdots \\ Q^{Nn_B,1}_{BB} & \cdots & Q^{Nn_B,n_B}_{BB} \end{pmatrix} \cdot \begin{pmatrix} \lambda_{B,1} \\ \vdots \\ \lambda_{B,n_B} \end{pmatrix} \quad \text{avec} \quad V^N_B = -\vec{V_0}.\vec{N_B}$$

c'est-à-dire en écriture condensée :

$$-\vec{V}^N_0 = Q^N_{BB}.\lambda_B$$

La solution complète (V) est la somme de la solution initiale (Vo) et de la solution calculée (Vc).
Pour la normale N à la surface SUR, on a:

$$\vec{V}.\vec{N_B} = (V_0 + V_c).\vec{N_B} = \vec{V_0}.\vec{N_B} - \vec{V_0}.\vec{N_B} = 0$$

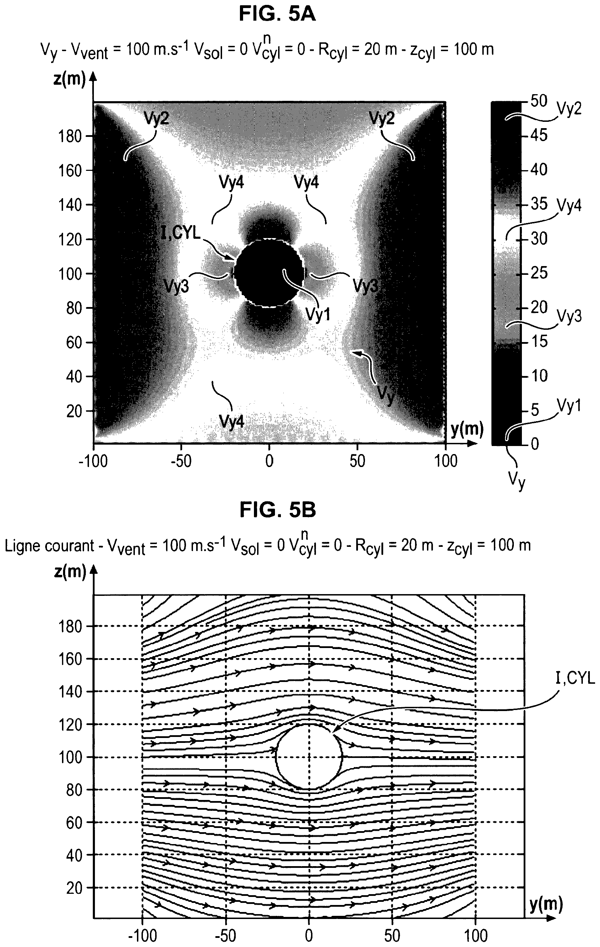

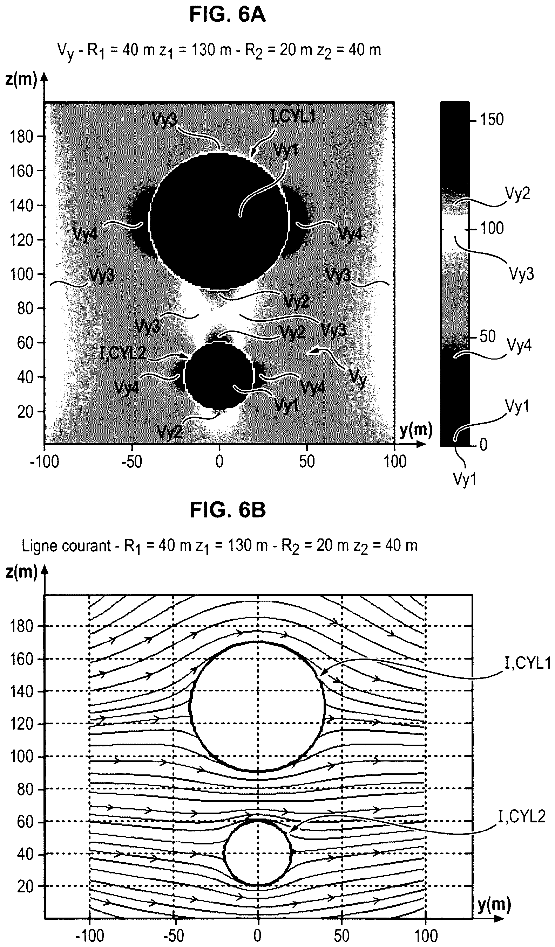

Des exemples non limitatifs sont : pour l'interface I solide, un cylindre dans une soufflerie selon les figures 19A, 19B et 19C (figure 5A illustrant la valeur absolue de la composante $V_y$ de la vitesse de l'écoulement de fluide ayant été calculée selon l'axe y et figure 5B représentant des lignes de courant de cet écoulement de fluide, ayant été calculées, pour un cylindre CYL ayant un axe parallèle à la direction x), deux cylindres (figure 6A illustrant la valeur absolue de la composante $V_y$ de la vitesse de l'écoulement de fluide ayant été calculée selon l'axe y et figure 6B représentant des lignes de courant de cet écoulement de fluide, ayant été calculée, pour un cylindre CYL1 et un autre cylindre CYL2 distant du cylindre CYL1, qui ont chacun un axe parallèle à la direction x), une sphère ou un profil NACA dans un écoulement, avec prise en compte de l'effet de sol pour illustrer le fait que le procédé permet une analyse des interactions entre objets. Le ou les cylindres sont des obstacles dans l'écoulement de fluide d'une soufflerie.

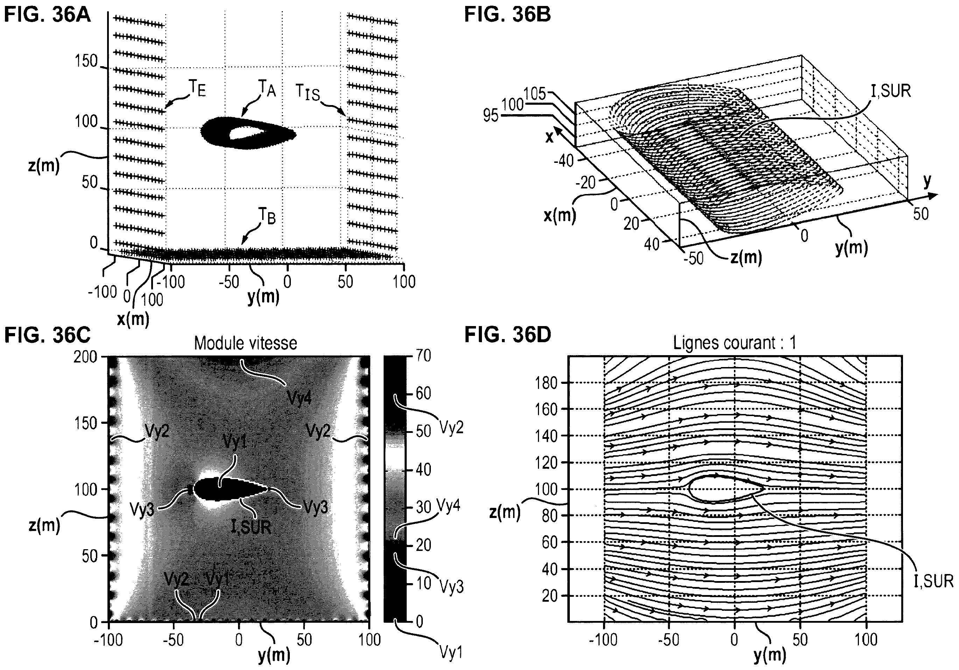

Un autre exemple non limitatif est une aile d'avion selon la figure 36A, pour laquelle la figure 36B illustre la surface imperméable SUR tridimensionnelle de l'interface I, la figure 36C illustre le module de la vitesse de l'écoulement de fluide ayant été calculée en des points P situés dans le plan des axes y et z et la figure 36D représente des lignes de courant de cet écoulement de fluide, ayant été calculées en des points P situés dans le plan des axes y et z. Il a été prévu dans cet exemple un triplet de sources scalaires S' par groupe BL' selon le cas 2 ci-dessous et une source scalaire par groupe BL. La condition aux limites sur la surface SUR a été vent = Vy = 100 m/s (y compris sur le sol) et vitesse normale nulle sur l'aile.

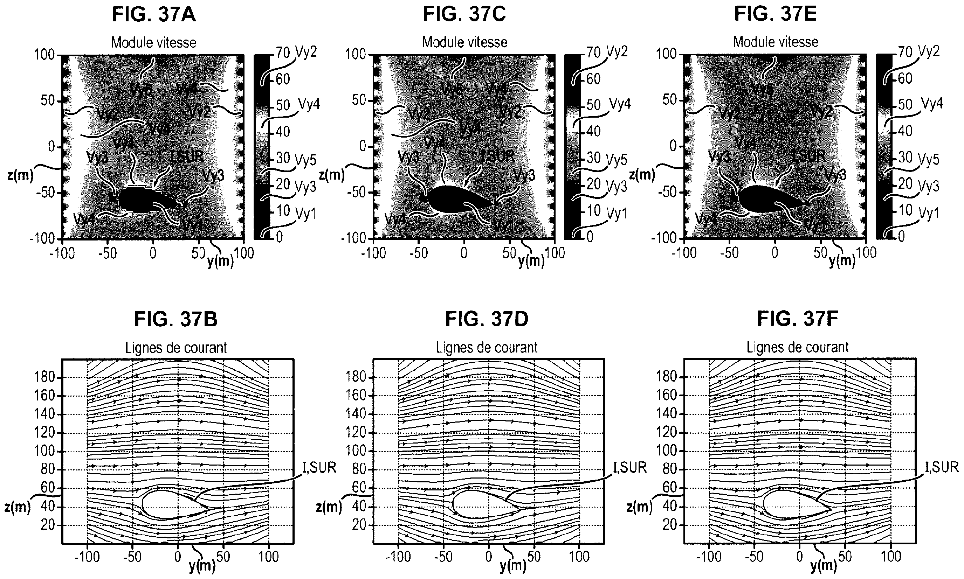

Les figures 37A, 37B, 37C, 37D, 37E, 37F montrent les différences de précision sur le module de la vitesse ayant été calculée en des points P situés dans le plan des axes y et z (figures 37A, 37C, 37E) et sur les lignes de courant de l'écoulement ayant été calculée en des points P situés dans le plan des axes y et z (figures 37B, 37D, 37F) autour de l'aile lorsque l'on change seulement le nombre de points de l'espace :

- figures 37A, 37B : 10000 points de l'espace,
- figures 37C, 37D : 86000 points de l'espace,
- figures 37E, 37F : 240000 points de l'espace.

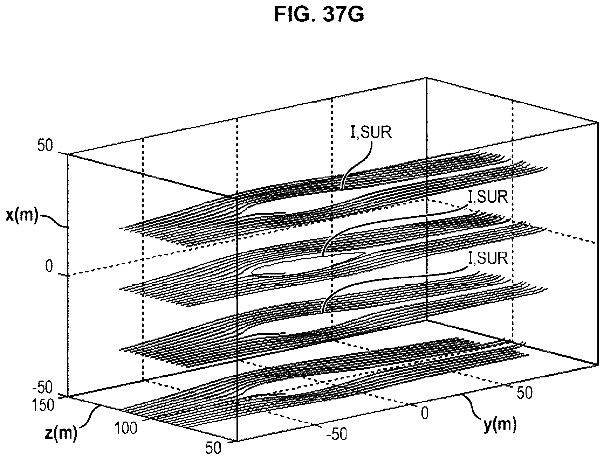

Les calculs sont tous fait avec une aile ayant environ 2000 points tests P1.
Bien entendu, les calculs peuvent être effectués dans plusieurs plans, ainsi que cela est représenté par exemple à la figure 37G montrant les lignes de courant de l'écoulement ayant été calculée en des points P situés dans plusieurs plans parallèles aux axes y et z, écartés suivant l'axe x.

Le calcul est effectué en trois dimensions, les résultats sont présentés le plus souvent dans un plan pour plus de lisibilité.

Cas 2 et 3:

Suivant un mode de réalisation, représenté à la figure 22, il est prévu comme source de fluide trois sources S scalaires de débit massique de fluide associées à chaque premier point test P1, pour la condition L aux limites ayant une composante normale de vitesse du fluide et une composante tangentielle de vitesse du fluide au premier point test P1, qui sont nulles à l'interface I. Ce mode de réalisation prévoit donc un triplet de sources par groupe. Chacun des modes de réalisation et des variantes des cas 2 et 3 est par exemple combiné avec le premier mode de réalisation sous-jacent précité (source S située en dessous de la surface imperméable SUR du solide de l'interface et de l'autre côté de l'écoulement de fluide F), ce qui est le cas ci-dessous.

Cas 2

Suivant un mode de réalisation, représenté à la figure 23, il est prévu comme source de fluide :

- une seule source S scalaire de débit massique de fluide associée à chaque premier point test P1 d'une première interface I, pour la condition L aux limites ayant une composante normale de vitesse du fluide au premier point test P1, qui est nulle à l'interface I,
- trois sources S' scalaires de débit massique de fluide associées à chaque premier point test P1' d'une deuxième interface I' distincte de la première interface I, pour la condition L aux limites ayant une composante normale de vitesse du fluide et une composante tangentielle de vitesse du fluide au premier point test P1', qui sont nulles à l'interface I'. Ce mode de réalisation prévoit donc un triplet de sources S'par groupe BL'. Ce mode de réalisation est par exemple combiné avec le premier mode de réalisation sous-jacent précité (source S et/ou S' située en dessous de la surface imperméable SUR du solide de l'interface I et/ou I' et de l'autre côté de l'écoulement de fluide F), ce qui est le cas ci-dessous. L'interface I est par exemple un objet B. L'interface I' est par exemple un objet A.

Par exemple, l'interface I' peut être l'entrée E d'une soufflerie, dans le cas de l'interface I se trouvant dans un écoulement de fluide provoqué par une soufflerie. Bien entendu, cet exemple n'est pas limitatif.

Par exemple :

$$Q^{ij} = \frac{\overrightarrow{R_{ij}}}{4.\pi.\rho.R_{ij}^3}$$

- la matrice M comporte les coefficients
- le vecteur vitesse est : $\vec{V}_i = Q^{ij}.\lambda_j$
- Les conditions aux limites sont, en projetant sur les normales à la surface SUR:

$$C_{Ai} = \overrightarrow{V_0^i} = Q_{A_1,A}^i.\lambda_{A_1} + Q_{A_2,A}^i.\lambda_{A_2} + Q_{A_3,A}^i.\lambda_{A_3} + Q_{B,A}^i.\lambda_B$$

- la matrice M est, en écriture condensée :

$$\begin{pmatrix} V_0^x \\ V_0^y \\ V_0^z \\ V_B^N = 0 \end{pmatrix} = \begin{pmatrix} Q_{AA1}^x & Q_{AA2}^x & Q_{AA3}^x & Q_{AB}^x \\ Q_{AA1}^y & Q_{AA2}^y & Q_{AA3}^y & Q_{AB}^y \\ Q_{AA1}^z & Q_{AA2}^z & Q_{AA3}^z & Q_{AB}^z \\ Q_{BA1}^N & Q_{BA2}^N & Q_{BA3}^N & Q_{BB}^N \end{pmatrix} \begin{pmatrix} \lambda_{A_1} \\ \lambda_{A_2} \\ \lambda_{A_3} \\ \lambda_B \end{pmatrix}$$

c'est-à-dire

$$\begin{pmatrix} V_0 \\ V_B^N = 0 \end{pmatrix} = \begin{pmatrix} Q_{AA} & Q_{BA} \\ Q_{AB}^N & Q_{BB}^N \end{pmatrix} \cdot \begin{pmatrix} \lambda_A \\ \lambda_B \end{pmatrix}$$

- la dimension de la matrice est :

$$\dim = \begin{pmatrix} 3n_A \times 3n_A & 3n_A \times n_B \\ n_B \times 3n_A & n_B \times n_B \end{pmatrix} = (3n_A + n_B) \times (3n_A + n_B)$$

Les interfaces I et I' peuvent être des objets imperméables au fluide, qui sont en interaction, comme par exemple un avion I à l'approche du sol I'. Il peut en outre être prévu des conditions aux limites vectorielles (indiquées ci-dessus pour les trois sources scalaires) sur les interfaces (par exemple pour un gradient de vent ou autre).

Cas 3

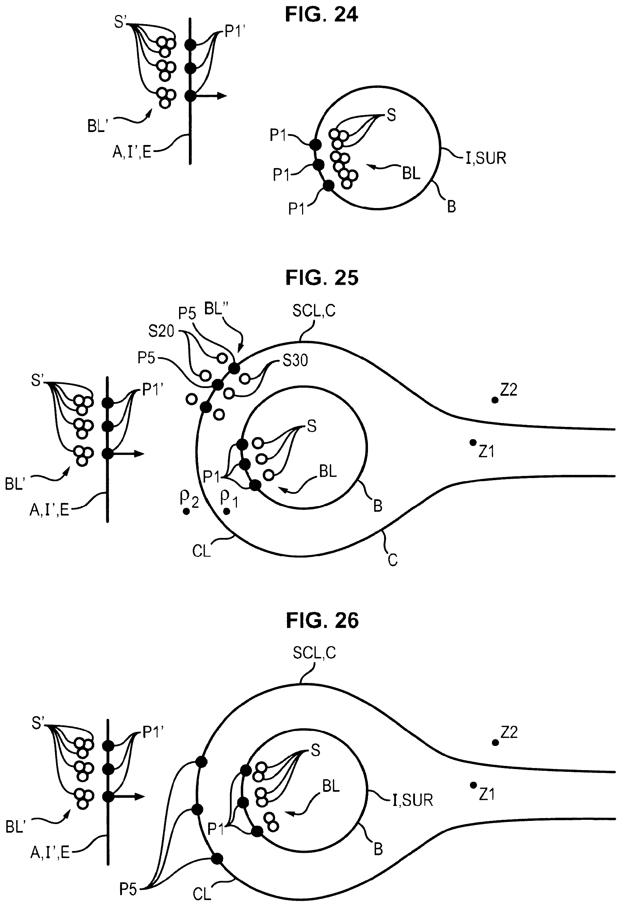

Suivant un mode de réalisation, représenté à la figure 24, il est prévu comme source de fluide :

- trois sources S scalaires de débit massique de fluide associées à chaque premier point test P1 d'une première interface I, pour la condition L aux limites ayant une composante normale de vitesse du fluide au premier point test P1, qui est nulle à l'interface I,
- trois sources S' scalaires de débit massique de fluide associées à chaque premier point test P1' d'une deuxième interface I' distincte de la première interface I, pour la condition L aux limites ayant une composante normale de vitesse du fluide et une composante tangentielle de vitesse du fluide au premier point test P1', qui sont nulles à l'interface I'. Ce mode de réalisation prévoit donc un triplet de sources S par groupe BL et un triplet de sources S' par groupe BL'. Ce mode de réalisation est par exemple combiné avec le premier mode de réalisation sous-jacent précité (source S et/ou S' située en dessous de la surface imperméable SUR du solide de l'interface I et/ou I' et de l'autre côté de l'écoulement de fluide F), ce qui est le cas ci-dessous. L'interface I est par exemple un objet B. L'interface I' est par exemple un objet A ou E précité. Dans ce mode de réalisation, il pourrait être prévu en variantes une seule source S scalaire de débit massique de fluide associée à chaque premier point test P1 d'une première interface I, ou deux scalaires de débit massique de fluide associées à chaque premier point test P1 d'une première interface I, avec une seule source S' scalaire de débit massique de fluide associée à chaque premier point test P1' d'une deuxième interface I' ou deux sources S' scalaires de débit massique de fluide associées à chaque premier point test P1' d'une deuxième interface I'.

Par exemple, l'interface I' peut être l'entrée E d'une soufflerie, dans le cas de l'interface I se trouvant dans un écoulement de fluide provoqué par une soufflerie. Bien entendu, cet exemple n'est pas limitatif.

Par exemple, dans le cas de 3 sources scalaires S et 3 sources scalaires S' :

$$Q^{ij} = \frac{\vec{R}_{ij}}{4.\pi.\rho.R_{ij}^3}$$

- la matrice M comporte les coefficients
- le vecteur vitesse est : $\vec{V}_i = Q^{ij}.\lambda_j$
- Les conditions aux limites sont, en projetant sur les normales à la surface SUR :

$$\vec{C}_{Ai} = \vec{V}_i = Q_{A_1,A}^i.\lambda_{A_1} + Q_{A_2,A}^i.\lambda_{A_2} + Q_{A_3,A}^i.\lambda_{A_3} + Q_{B_1,A}^i.\lambda_{B_1} + Q_{B_2,A}^i.\lambda_{B_2} + Q_{B_3,A}^i.\lambda_{B_3}$$

$\vec{C}_A = \vec{V}_O \quad \vec{C}_B = \vec{0}$

- la matrice M est, en écriture condensée :

$$\begin{pmatrix} V_0^x \\ V_0^y \\ V_0^z \\ V_B^x = 0 \\ V_B^y = 0 \\ V_B^z = 0 \end{pmatrix} = \begin{pmatrix} Q_{AA1}^x & Q_{AA2}^x & Q_{AA3}^x & Q_{AB1}^x & Q_{AB2}^x & Q_{AB3}^x \\ \cdots & \cdots & (y) & & \cdots & \\ \cdots & \cdots & (z) & & \cdots & \\ Q_{BA1}^x & Q_{BA2}^x & Q_{BA3}^x & Q_{BB1}^x & Q_{BB2}^x & Q_{BB3}^x \\ \cdots & \cdots & (y) & & \cdots & \\ \cdots & \cdots & (z) & & \cdots & \end{pmatrix} \begin{pmatrix} \lambda_{A_1} \\ \lambda_{A_2} \\ \lambda_{A_3} \\ \lambda_{B1} \\ \lambda_{B2} \\ \lambda_{B3} \end{pmatrix}$$

c'est-à-dire

$$\begin{pmatrix} V_0 \\ V_B = 0 \end{pmatrix} = \begin{pmatrix} Q_{AA} & Q_{BA} \\ Q_{AB} & Q_{BB} \end{pmatrix} \cdot \begin{pmatrix} \lambda_A \\ \lambda_B \end{pmatrix}$$

- la dimension de la matrice est :

$$\dim = \begin{pmatrix} 3n_A \times 3n_A & 3n_A \times 3n_B \\ 3n_B \times 3n_A & 3n_B \times 3n_B \end{pmatrix} = (3n_A + 3n_B) \times (3n_A + 3n_B)$$

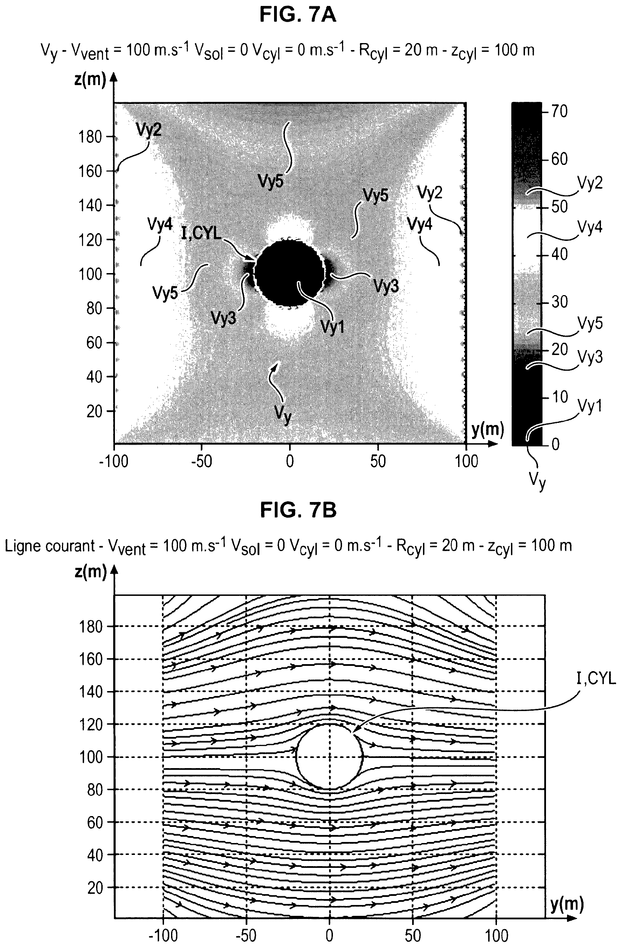

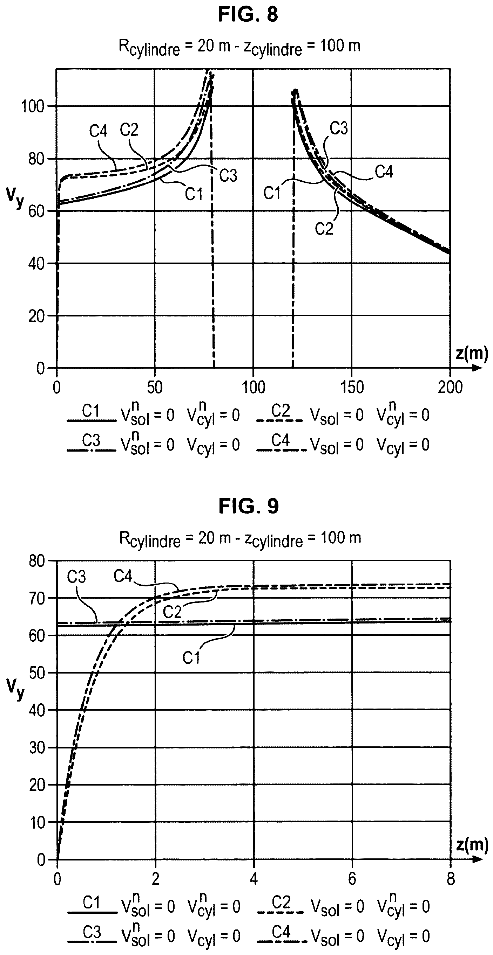

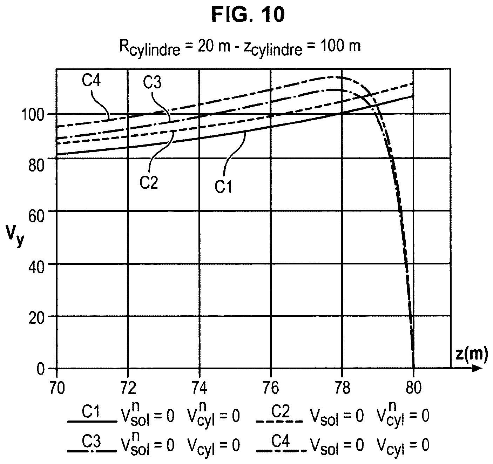

Les modes de réalisation des cas 2 et 3 sont par exemple utilisés pour un fluide incompressible, non visqueux (nombre de Reynolds élevé), non rotationnel, avec restitution du phénomène de couche limite CL par annulation de la composante tangentielle de vitesse à l'interface I. Des exemples sont : cylindre dans un écoulement avec effet de sol, et zoom au voisinage des parois des objets pour illustrer le fait que le procédé permet des conditions aux limites complexes en chacun des points de la surface des objets. Pour cet exemple dans le cas 3, la figure 7A représente la valeur absolue de la composante $V_y$ de la vitesse de l'écoulement du fluide ayant été calculée selon l'axe y et la figure 7B représente des lignes de courant de cet écoulement de fluide, ayant été calculées, et ce pour une interface I solide, formée par un cylindre CYL ayant un axe parallèle à la direction x. Les figures 8, 9 et 10 illustrent des courbes C1, C2, C3, C4 de la vitesse $V_y$ calculée de l'écoulement de fluide F selon l'axe y sur un axe vertical, en fonction de l'altitude z en abscisses, pour respectivement les conditions aux limites suivantes du cylindre CYL de la figure 7 et du sol :

- C1 : $V_{sol}^n = 0$ et $V_{cyl}^n = 0$,
- C2 : $V_{sol} = 0$ et $V_{cyl}^n = 0$,
- C3 : $V_{sol}^n = 0$ et $V_{cyl} = 0$,
- C4 : $V_{sol} = 0$ et $V_{cyl} = 0$, où

l'exposant n désigne la composante normale de la vitesse V et l'absence de l'exposant n désigne le vecteur vitesse.

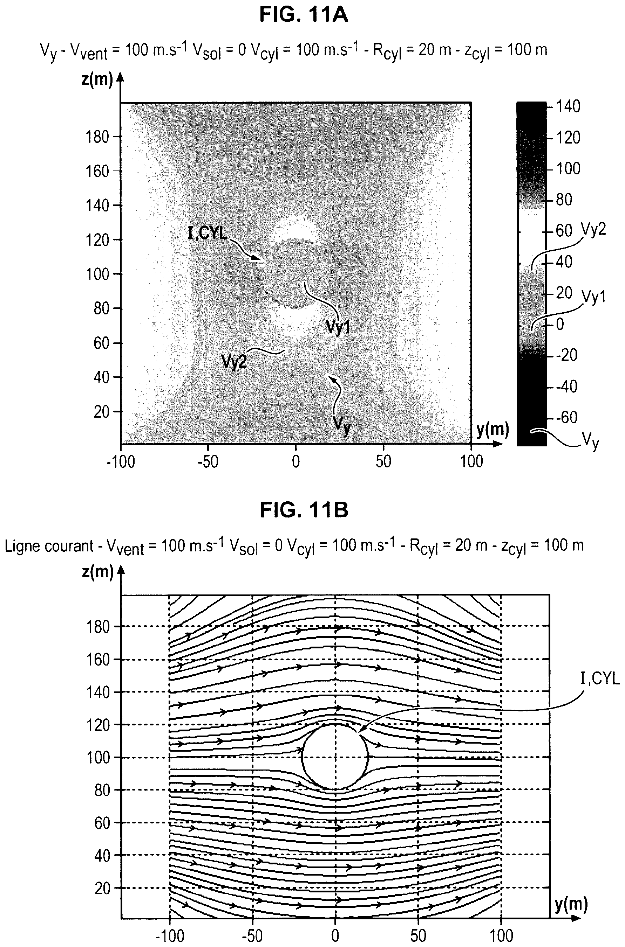

Suivant un mode de réalisation, chaque groupe BL contient trois sources S scalaires de débit massique de fluide, pour les conditions L aux limites ayant une composante normale de vitesse du fluide, qui est nulle à l'interface I et une composante tangentielle de vitesse du fluide, qui est imposée. La figure 11A représente la valeur absolue de la composante $V_y$ de la vitesse de l'écoulement de fluide ayant été calculée selon l'axe y et la figure 11B représente des lignes de courant de cet écoulement de fluide, ayant été calculées, et ce pour une interface I solide, formé par un cylindre CYL ayant un axe parallèle à la direction x, où les conditions aux limites prévoient que la composante tangentielle du vecteur vitesse de l'écoulement de fluide est égale à une valeur prescrite du vent (par exemple ici 100 m.s$^{-1}$) sur le cylindre.

Cas 4

Suivant un mode de réalisation, représenté à la figure 25, il est prévu comme source S de fluide au moins une première source S scalaire de débit massique de fluide en association à chaque premier point test P1 de l'interface I, au moins une deuxième source S20 scalaire de débit massique de fluide située au-dessus d'une surface SCL délimitant une couche limite CL de l'écoulement de fluide F par rapport à l'interface I et au moins une troisième source S30 scalaire de débit massique de fluide située en dessous de la surface SCL délimitant la couche limite CL, pour la condition L aux limites ayant au premier point test P1 de l'interface I une composante normale de vitesse du fluide, nulle à l'interface I, et une composante normale de vitesse conservée en un autre point test prescrit P5 de la surface SCL délimitant la couche limite CL, modulo la masse volumique du fluide. La au moins une première source S scalaire de débit massique de fluide est donc située dans la première zone intérieure Z1. La au moins une deuxième source S20 scalaire de débit massique de fluide est donc située dans la deuxième zone extérieure Z2.

Il peut être prévu une seule source scalaire S de débit massique de fluide en association à chaque premier point test P1 de l'interface I ou trois sources scalaires S de débit massique de fluide en association à chaque premier point test P1 de l'interface I. Ce mode de réalisation prévoit donc une source S ou un triplet de sources S par groupe BL et deux sources S20, S30 par groupe BL". L'interface I est par exemple un objet B. Ce mode de réalisation est par exemple combiné avec le premier mode de réalisation sous-jacent précité (source S et/ou S' située en dessous de la surface imperméable SUR du solide de l'interface I et/ou I' et de l'autre côté de l'écoulement de fluide F), ce qui est le cas ci-dessous. L'interface I est par exemple un objet B. L'interface I' est par exemple un objet A ou E précité. C désigne la surface SCL.

Ce cas apparait par exemple pour un nombre de Reynolds élevé en fluide irrotationnel, des milieux M2 fluides stratifiés dans lesquels sont immergés des objets solides. Les conditions aux limites sont par exemple des conditions aux limites utilisateurs (CLU) aux surfaces imperméables et des conditions aux limites intrinsèques (CLI) à la surface SCL fluide-fluide. Il peut être prévu un objet isolé dans un écoulement irrotationnel, entouré de couches de différentes propriétés physiques, avec deux conditions aux limites par point test de la surface SCL fluide/fluide (composante normale de la vitesse conservée modulo rho et potentiel scalaire) (CLI) et les mêmes conditions aux limites que précédemment à la surface SUR imperméables.

$$M^{ij} = \frac{1}{4\pi\rho R_{ij}}$$

Le coefficient de la matrice M en potentiel $\vartheta$ est par exemple : avec $\theta_i = M^{ij}.\alpha_j$

On impose, comme conditions limites intrinsèques

- l'égalité du potentiel de part et d'autre de la surface SCL :

$$C_A = \theta_{A,Top} - \theta_{A,Bottom} = M^{ij}_{A,A}.\lambda_A - M^{ik}_{B,A}.\lambda_B = 0$$

- La vitesse est tangente à la surface SCL, c'est-à-dire que la vitesse normale est nulle

Dans une forme condensée de la matrice :

$$\begin{pmatrix} V^x_0 \\ V^y_0 \\ V^z_0 \\ \rho_1.V^N_{C1} - \rho_2.V^N_{C2} = 0 \\ \theta_1 - \theta_2 = 0 \\ V^N_B = 0 \end{pmatrix} = \begin{pmatrix} Q^x_{AA1} & Q^x_{AA2} & Q^x_{AA3} & 0 & Q^x_{AC_{Bot}} & 0 \\ \cdots & (y) & \cdots & 0 & (y) & 0 \\ \cdots & (z) & \cdots & 0 & (z) & 0 \\ -\rho_2.Q^N_{CA1} & -\rho_2.Q^N_{CA2} & -\rho_2.Q^N_{CA3} & \rho_1.Q^N_{CC_{Top}} & -\rho_2.Q^N_{CC_{Bot}} & \rho_1.Q^N_{CB} \\ M_{CA_1} & M_{CA_2} & M_{CA_3} & M_{CC_{Top}} & M_{CC_{Bot}} & M_{CB} \\ 0 & 0 & 0 & Q^N_{BC_{Top}} & 0 & Q^N_{BB} \end{pmatrix} \begin{pmatrix} \lambda_{A1} \\ \lambda_{A2} \\ \lambda_{A3} \\ \lambda_{C_{Top}} \\ \lambda_{C_{Bot}} \\ \lambda_B \end{pmatrix}$$

$$\begin{pmatrix} V_0 \\ \rho_1.V^N_{C1} - \rho_2.V^N_{C2} = 0 \\ \theta_1 - \theta_2 = 0 \\ V^N_B = 0 \end{pmatrix} = \begin{pmatrix} Q_{AA} & 0 & Q_{AC_{Bot}} & 0 \\ \rho_1.Q^N_{CA} & -\rho_2.Q^N_{CC_{Top}} & \rho_1.Q^N_{CC_{Bot}} & -\rho_2.Q^N_{CB} \\ M_{CA} & -M_{CC_{Top}} & M_{CC_{Bot}} & -M_{CB} \\ 0 & Q^N_{BC_{Top}} & 0 & Q^N_{BB} \end{pmatrix} \cdot \begin{pmatrix} \lambda_A \\ \lambda_{C_{Top}} \\ \lambda_{C_{Bot}} \\ \lambda_B \end{pmatrix}$$

La dimension de la matrice est :

$$\dim = \begin{pmatrix} 3n_A \times 3n_A & 3n_A \times n_C & 3n_A \times n_C & 3n_A \times n_B \\ n_C \times 3n_A & n_C \times n_C & n_C \times n_C & n_C \times n_B \\ n_C \times 3n_A & n_C \times n_C & n_C \times n_C & n_C \times n_B \\ n_B \times 3n_A & n_B \times n_C & n_B \times n_C & n_B \times n_B \end{pmatrix} = (3n_A + 2n_C + n_B) \times (3n_A + 2n_C + n_B)$$

Cas 5

Suivant un mode de réalisation, représenté à la figure 26, il est prévu comme source S de fluide au moins deux sources S scalaires de débit massique de fluide en association à chaque premier point test P1 de l'interface I, pour la condition L aux limites ayant au premier point test P1 de l'interface I une composante normale de vitesse du fluide, nulle à l'interface I, et une composante normale de vitesse nulle en un autre point test P5 prescrit d'une surface SCL délimitant une couche limite CL de l'écoulement de fluide par rapport à l'interface I. Ce mode de réalisation prévoit donc deux source S par groupe BL et deux sources S20, S30 par groupe BL". En variante, il pourrait être prévu une seule source scalaire S de débit massique de fluide en association à chaque premier point test P1 de l'interface I ou trois sources scalaires S de débit massique de fluide en association à chaque premier point test P1 de l'interface I. L'interface I est par exemple un objet B. Chacun des modes de réalisation et des variantes du cas 5 est par exemple combiné avec le premier mode de réalisation sous-jacent précité (source S et/ou S' située en dessous de la surface imperméable SUR du solide de l'interface I et/ou I' et de l'autre côté de l'écoulement de fluide F), ce qui est le cas ci-dessous. L'interface I est par exemple un objet B. L'interface I' est par exemple un objet A ou E précité. C désigne la surface SCL.

Ce cas apparait par exemple pour un nombre de Reynolds élevé, pour un objet isolé dans un écoulement irrotationnel, entouré de couches de même propriétés physiques. On fixe des conditions aux limites utilisateur (CLU) sur la surface SCL fluide/fluide (par exemple composante normale de la vitesse nulle). Ce cas fait intervenir des Conditions aux Limites Stratifiées » (CLS) : il n'y a pas besoin de blocs sources de part et d'autres des points test de la surface SCL, les sources situées dans les objets environnants I sont calculées pour prendre ces CLU en compte. Il y a les mêmes conditions que précédemment sur les surfaces imperméables : les CLU s'appliquent. Il peut être des sources complémentaires pour prendre en compte les CLS qu'on vient de rajouter.

Le cas de deux sources scalaires S est décrit ci-dessous. La matrice M est :

$$\begin{pmatrix} V_A^x \\ V_A^y \\ V_A^z \\ V_C^N = 0 \\ V_B^N = 0 \end{pmatrix} = \begin{pmatrix} Q_{AA1}^x & Q_{AA2}^x & Q_{AA3}^x & Q_{AB1}^x & Q_{AB2}^x \\ & \cdots & (y) & \cdots & \\ & \cdots & (z) & \cdots & \\ Q_{CA1}^N & Q_{CA2}^N & Q_{CA3}^N & Q_{CB1}^N & Q_{CB2}^N \\ Q_{BA1}^N & Q_{BA2}^N & Q_{BA3}^N & Q_{BB1}^N & Q_{BB2}^N \end{pmatrix} \cdot \begin{pmatrix} \lambda_{A1} \\ \lambda_{A2} \\ \lambda_{A3} \\ \lambda_{B1} \\ \lambda_{B2} \end{pmatrix}$$

c'est-à-dire :

$$\begin{pmatrix} V_0 \\ V_C^N = 0 \\ V_B^N = 0 \end{pmatrix} = \begin{pmatrix} Q_{AA} & Q_{AB1} & Q_{AB2} \\ Q_{CA1}^N & Q_{CB1}^N & Q_{CB2}^N \\ Q_{BA1}^N & Q_{BB1}^N & Q_{BB2}^N \end{pmatrix} \cdot \begin{pmatrix} \lambda_A \\ \lambda_{B1} \\ \lambda_{B2} \end{pmatrix}$$

La dimension de la matrice est :

$$\dim = \begin{pmatrix} 3n_A \times 3n_A & 3n_A \times n_B & 3n_A \times n_B \\ n_B \times 3n_A & n_B \times n_B & n_B \times n_B \\ n_B \times 3n_A & n_B \times n_B & n_B \times n_B \end{pmatrix} = (3n_A + 2n_B) \times (3n_A + 2n_B)$$

La surface SCL n'est pas une surface de séparation, elle porte juste les points tests P5. Les sources S' de A envoient du fluide à travers B.

Cas 6

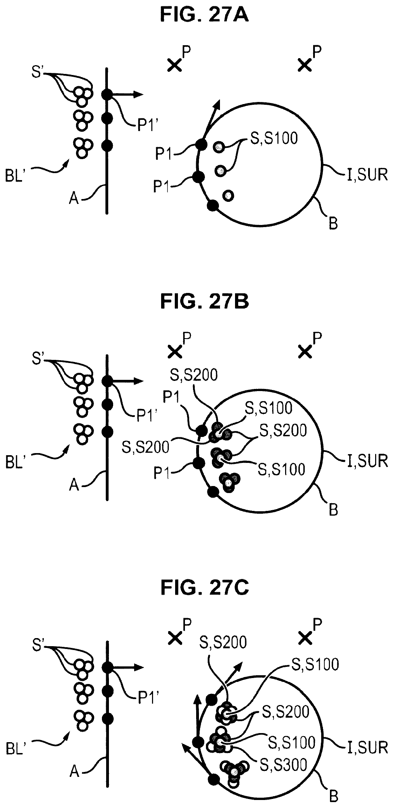

Suivant un mode de réalisation, représenté aux figures 27A, 27B et 27C, au cours d'une première itération des première et deuxième étapes E1, E2, on prescrit une première condition aux limites concernant la première grandeur physique (V, P) de l'écoulement de fluide F prise au premier point test prédéterminé P1 de l'interface I et un premier nombre déterminé de sources S100 de fluide, supérieur ou égal à un, pour calculer par méthode DPSM une première itération de la première grandeur physique (V, P) de l'écoulement de fluide F située au deuxième point P de l'espace à partir du au moins un paramètre du premier nombre déterminé de sources S de fluide, ayant été calculé,

puis au cours d'au moins une deuxième itération des première et deuxième étapes E1, E2, postérieure à la première itération, on prescrit une deuxième condition aux limites concernant la première grandeur physique (V, P) de l'écoulement de fluide (F) prise au premier point test prédéterminé (P1) de l'interface (I), la deuxième condition aux limites étant différente de la première condition aux limites, on ajoute au premier nombre déterminé de sources S100 de fluide un deuxième nombre déterminé de sources S200 de fluide, supérieur ou égal à un, pour calculer par méthode DPSM au moins une deuxième itération de la première grandeur physique (V, P) de l'écoulement de fluide F située au deuxième point P de l'espace à partir du au moins un paramètre des premier et deuxième nombres déterminés de sources S100, S200 de fluide, ayant été calculé.

Chaque première source S100 est ou comprend par exemple une ou plusieurs sources ponctuelles de débit massique radial de fluide. Chaque deuxième source S200 est ou comprend par exemple une ou plusieurs sources ponctuelles de débit massique rotationnel de fluide.

Le calculateur comporte un cinquième moyen CAL5 de calcul configuré pour calculer la première itération, un sixième moyen CAL6 de calcul configuré pour calculer la deuxième itération.

Un exemple de première itération est représenté à la figure 27A (premier condition aux limites étant vitesse normale du fluide nulle, vitesse tangentielle du fluide non nulle). Un exemple de deuxième itération est représenté à la figure 27B (deuxième condition aux limites étant vitesse tangentielle du fluide nulle). Bien entendu, une ou plusieurs autres itérations peuvent être effectuées, comme par exemple une troisième itération représentée à la figure 27C (par exemple circulation ou rotation de la surface SUR).

Ce cas est appelé calcul séquentiel intégré. Dans ce calcul séquentiel intégré, les résultats obtenus dans l'étape n-1sont intégralement intégrés dans l'étape n.

Ainsi, suivant un mode de réalisation, au cours d'une première itération de la deuxième étape E2 de calcul, chaque bloc BL contient une première source S scalaire de débit de fluide pour les conditions L aux limites ayant une composante normale de vitesse du fluide, qui est nulle à l'interface I, et on met en œuvre la méthode DPSM pour calculer le débit de fluide de la première source S scalaire à partir des conditions L aux limites. Puis, au cours d'une deuxième itération de la deuxième étape E2 de calcul, chaque bloc BL contient la première source S scalaire de débit massique de fluide, une deuxième source S de débit massique de fluide et deux sources S rotationnelles de débit massique de fluide pour les conditions L aux limites ayant une composante normale de vitesse du fluide, qui est nulle à l'interface I, et une composante tangentielle de vitesse du fluide, qui est prescrite. Ce mode de réalisation est par exemple utilisé pour un fluide incompressible, non visqueux (nombre de Reynolds élevé) avec prise en compte de la vorticité par itérations successives. Cela permet par exemple de tenir compte d'un objet en rotation ou pas, pouvant être une sphère immobile ou en rotation dans un écoulement avec effet de sol.

Cette deuxième méthode peut être couplée avec un calcul de la couche limite à l'issue de la première étape. Par exemple, une surface de glissement SG représentative de la couche limite entourant l'objet est définie géométriquement, et maillée de points tests. Cette surface peut être soit une surface de glissement issue du premier calcul, soit la surface d'une couche limite calculée avec un modèle adapté, par exemple un modèle de Prandtl, qui définit une

$$\delta(l) = \frac{l}{\sqrt{R_e}}$$

épaisseur de couche limite égale à (où *l* est la distance parcourue selon une ligne de courant par rapport au point d'arrêt amont).

Dans un mode de réalisation de l'invention, les blocs de sources BL disposés à l'intérieur du profil sont agencés pour envoyer du fluide simultanément dans la couche limite et dans le milieu extérieur à la couche limite selon des conditions aux limites fixées conjointement aux points test de l'interface I et de la surface de glissement SG. Les sources envoient du fluide dans ces deux milieux, supposés identiques de chaque côté de la couche limite. Ce cas est illustré dans le cas de 3 sources scalaires et 1 source rotationnelle.

Dans une deuxième réalisation de l'invention, on prend en compte la viscosité dans la couche limite, et la surface de glissement SG devient une interface séparant 2 milieux de propriétés différentes : proche de la surface avec nombre de Reynolds faible, au-delà de cette surface avec nombre de Reynolds élevé. Ce cas sera traité plus loin.

Ce mode de réalisation permet par exemple une superposition des solutions scalaires et vectorielles par itérations successives : intégration des résultats de l'itération n dans l'itération n+1. Dans ce cas, on calcule d'abord une solution scalaire à une source par bloc dans le profil, donc on obtient la forme générale des lignes de l'écoulement. Puis on intègre ce résultat dans le calcul suivant qui, lui, introduit d'autres conditions sur l'objet (annulation de la composante tangentielle, objet en rotation, etc..).

Par exemple, la première itération donne la première matrice M suivante :

$$\begin{pmatrix} V_B^N = 0 \\ V_0^x \\ V_0^y \\ V_0^z \end{pmatrix} = \begin{pmatrix} Q_{BB}^N & Q_{BA2}^N & Q_{BA3}^N & Q_{BA3}^N \\ Q_{AB}^x & Q_{AA1}^x & Q_{AA1}^x & Q_{AA1}^x \\ Q_{AB}^y & Q_{AA2}^y & Q_{AA2}^y & Q_{AA2}^y \\ Q_{AB}^z & Q_{AA3}^z & Q_{AA3}^z & Q_{AA3}^z \end{pmatrix} \begin{pmatrix} \lambda_{1B} \\ \lambda_{A_1} \\ \lambda_{A_2} \\ \lambda_{A_3} \end{pmatrix}$$

c'est-à-dire

$$\begin{pmatrix} V_B^N = 0 \\ V_0 \end{pmatrix} = \begin{pmatrix} Q_{BB}^N & Q_{BA}^N \\ Q_{AB} & Q_{AA} \end{pmatrix} \begin{pmatrix} \lambda_{1B} \\ \lambda_A \end{pmatrix}$$

dont la dimension est :

$$\dim = \begin{pmatrix} n_B \times n_B & n_B \times 3n_A \\ 3n_A \times n_B & 3n_A \times 3n_A \end{pmatrix} = (n_B + 3n_A) \times (n_B + 3n_A)$$

A la deuxième itération, on augmente par exemple la première matrice M, en ajoutant les 3 sources de B et en changeant les conditions aux limites : on annule la vitesse tangentielle calculée à la première itération, pour obtenir la deuxième matrice M suivante :

$$\begin{pmatrix} \lambda_{1B} \\ V_B^T = -V_{Betapel}^T \\ V_0 \end{pmatrix} = \begin{pmatrix} Id & 0 & O \\ Q_{BB}^T & Q_{BB123}^T & Q_{BA}^T \\ Q_{AB} & Q_{AB123} & Q_{AA} \end{pmatrix} \begin{pmatrix} \lambda_{1B} \\ \lambda_{2B} \\ \lambda_A \end{pmatrix}$$

dont la dimension est :

$$\dim = \begin{pmatrix} n_B \times n_B & n_B \times 3n_B & n_B \times 3n_A \\ 3n_B \times n_B & 3n_B \times 3n_B & 3n_B \times 3n_A \\ 3n_A \times n_B & 3n_A \times 3n_B & 3n_A \times 3n_A \end{pmatrix} = (4n_B + 3n_A) \times (4n_B + 3n_A)$$

$$\begin{cases} \text{Première itération :} & \lambda_{1B} \\ \text{Deuxième itération :} & \lambda_{2B} \\ \text{Troisième itération :} & \lambda_{3B} \end{cases}$$

A la troisième itération, on obtient la troisième matrice M suivante :

$$\begin{pmatrix} \lambda_{1B} \\ \begin{pmatrix} \lambda_{2B1} \\ \lambda_{2B2} \\ \lambda_{2B3} \end{pmatrix} \\ \begin{pmatrix} V_B^x = V_B^{Tx} \\ V_B^y = V_B^{Ty} \\ V_B^z = 0 \end{pmatrix} \\ \begin{pmatrix} V_0^x \\ V_0^y \\ V_0^z \end{pmatrix} \end{pmatrix} = \begin{pmatrix} Id & 0 & 0 & 0 & 0 & 0 & 0 & 0 & 0 & 0 \\ 0 & Id & 0 & 0 & 0 & 0 & 0 & 0 & 0 & 0 \\ 0 & 0 & Id & 0 & 0 & 0 & 0 & 0 & 0 & 0 \\ 0 & 0 & 0 & Id & 0 & 0 & 0 & 0 & 0 & 0 \\ Q_{BB}^x & Q_{BB1}^x & Q_{BB2}^x & Q_{BB3}^x & Q_{BB'1}^x & Q_{BB'2}^x & Q_{BB'3}^x & Q_{BA1}^x & Q_{BA2}^x & Q_{BA3}^x \\ & \cdots & & (y) & & \cdots & & & \cdots & \\ & \cdots & & (z) & & \cdots & & & \cdots & \\ Q_{AB}^x & Q_{AB1}^x & Q_{AB1}^x & Q_{BB3}^x & Q_{AB'1}^x & Q_{AB'2}^x & Q_{BB'3}^x & Q_{AA1}^x & Q_{AA2}^x & Q_{AA3}^x \\ & \cdots & & (y) & & \cdots & & & \cdots & \\ & \cdots & & (z) & & \cdots & & & \cdots & \end{pmatrix} \begin{pmatrix} \lambda_{1B} \\ \begin{pmatrix} \lambda_{2B1} \\ \lambda_{2B2} \\ \lambda_{2B3} \end{pmatrix} \\ \lambda_{3B1} \\ \lambda_{3B2} \\ \lambda_{3B3} \\ \lambda_{A_1} \\ \lambda_{A_2} \\ \lambda_{A_3} \end{pmatrix}$$

c'est-à-dire

$$\begin{pmatrix} \lambda_{1B} \\ \lambda_{2B} \\ V_B = V_{rotation} \\ V_0 \end{pmatrix} = \begin{pmatrix} Id & 0 & 0 & 0 \\ 0 & Id & 0 & 0 \\ Q_{BB1} & Q_{BB2} & Q_{BB3} & Q_{BA} \\ Q_{AB1} & Q_{AB2} & Q_{AB3} & Q_{AA} \end{pmatrix} \begin{pmatrix} \lambda_{1B} \\ \lambda_{2B} \\ \lambda_{3B} \\ \lambda_A \end{pmatrix}$$

dont la dimension est :

$$\dim = \begin{pmatrix} n_B \times n_B & n_B \times 3n_B & n_B \times 3n_B & n_B \times 3n_A \\ 3n_B \times n_B & 3n_B \times 3n_B & 3n_B \times 3n_B & 3n_B \times 3n_A \\ 3n_B \times n_B & 3n_B \times 3n_B & 3n_B \times 3n_B & 3n_B \times 3n_A \\ 3n_A \times n_B & 3n_A \times 3n_B & 3n_A \times 3n_B & 3n_A \times 3n_A \end{pmatrix} = (7n_B + 3n_A) \times (7n_B + 3n_A)$$

La vitesse en un point M est :

$$V_M = \begin{pmatrix} Q_{MB1} & Q_{MB2} & Q_{MB3} & Q_{MA} \end{pmatrix} \begin{pmatrix} \lambda_{1B} \\ \lambda_{2B} \\ \lambda_{3B} \\ \lambda_A \end{pmatrix}$$

Cas 7

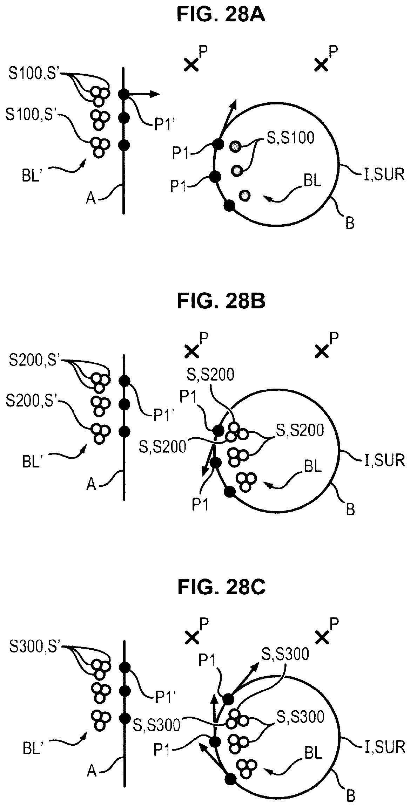

Suivant un mode de réalisation, représenté aux figures 28A, 28B et 28C, au cours d'une première itération des première et deuxième étapes E1, E2, on prescrit une première condition aux limites concernant la première grandeur physique (V, P) de l'écoulement de fluide F prise au premier point test prédéterminé P1 de l'interface I et un premier nombre déterminé de sources S100 de fluide, supérieur ou égal à un, pour calculer par méthode DPSM une première itération de la première grandeur physique (V, P) de l'écoulement de fluide F située au deuxième point P de l'espace à partir du au moins un paramètre du premier nombre déterminé de sources S100 de fluide, ayant été calculé,

puis au cours d'au moins une deuxième itération des première et deuxième étapes E1, E2, postérieure à la première itération, on prescrit une deuxième condition aux limites concernant la première grandeur physique (V, P) de l'écoulement de fluide F prise au premier point test prédéterminé P1 de l'interface I et un deuxième nombre déterminé de sources S200 de fluide, supérieur ou égal à un, pour calculer par méthode DPSM une deuxième itération de la première grandeur physique (V, P) de l'écoulement de fluide F située au deuxième point P de l'espace à partir du au moins un paramètre du deuxième nombre déterminé de sources S200 de fluide, ayant été calculé, la deuxième condition aux limites étant différente de la première condition aux limites,

puis on additionne la première itération de la première grandeur physique (V, P) de l'écoulement de fluide F et la deuxième itération de la première grandeur physique (V, P) de l'écoulement de fluide F.

Le calculateur comporte un cinquième moyen CAL5 de calcul configuré pour calculer la première itération, un sixième moyen CAL6 de calcul configuré pour calculer la deuxième itération et un septième moyen CAL7 de calcul configuré pour additionner la première itération et la deuxième itération.

Chaque première source S100 est ou comprend par exemple une ou plusieurs sources ponctuelles de débit massique radial de fluide. Chaque deuxième source S200 est ou comprend par exemple une ou plusieurs sources ponctuelles de débit massique rotationnel de fluide.

Un exemple de première itération est représenté à la figure 28A (première condition aux limites étant vitesse normale du fluide nulle, vitesse tangentielle du fluide calculée). Un exemple de deuxième itération et d'addition de la première itération et de la deuxième itération est représenté à la figure 28B (deuxième condition aux limites étant vitesse tangentielle imposée, par l'utilisateur ou dépendant du premier calcul). Bien entendu, une ou plusieurs autres itérations peuvent être effectuées, comme par exemple une troisième itération représentée à la figure 28C (par exemple circulation ou rotation de la surface SUR).

Ce cas est appelé calcul séquentiel sommé. Dans ce calcul séquentiel sommé, les résultats obtenus dans l'étape n-1 peuvent être partiellement injectés dans l'étape n sous forme de conditions aux limites.

Ce mode de réalisation permet par exemple une superposition des solutions scalaires et vectorielles par itérations successives : sommation des résultats des différentes itérations pour l'obtention du résultat final. Ce cas peut être identique au précédent, mais chaque solution est élaborée successivement. Ceci conduit à la notion de sources additionnelles. Par exemple : on calcule d'abord une solution scalaire à une source par bloc dans le profil, puis on rajoute des sources hybrides pour annuler la composante tangentielle de la vitesse sur le profil : il en résulte des jeux de sources additionnelles pour tous les objets en interaction dans notre problème modélisé. Puis on impose une rotation à l'objet, etc. La solution sera la résultante de chacune des solutions élémentaires obtenues à chaque étape. Ce cas permet de calculer la géométrie d'une couche limite CL et de la surface SCL la délimitant, à l'issue de la première itération et de la prendre en compte au cours de la deuxième itération.

Ainsi, par exemple, on impose des conditions aux limites sur l'aile à la première itération, puis on impose de nouvelles conditions aux limites à la deuxième itération. Les nouvelles conditions aux limites dépendent de la première itération ou sont intrinsèques, comme dans le cas de la recirculation constante.

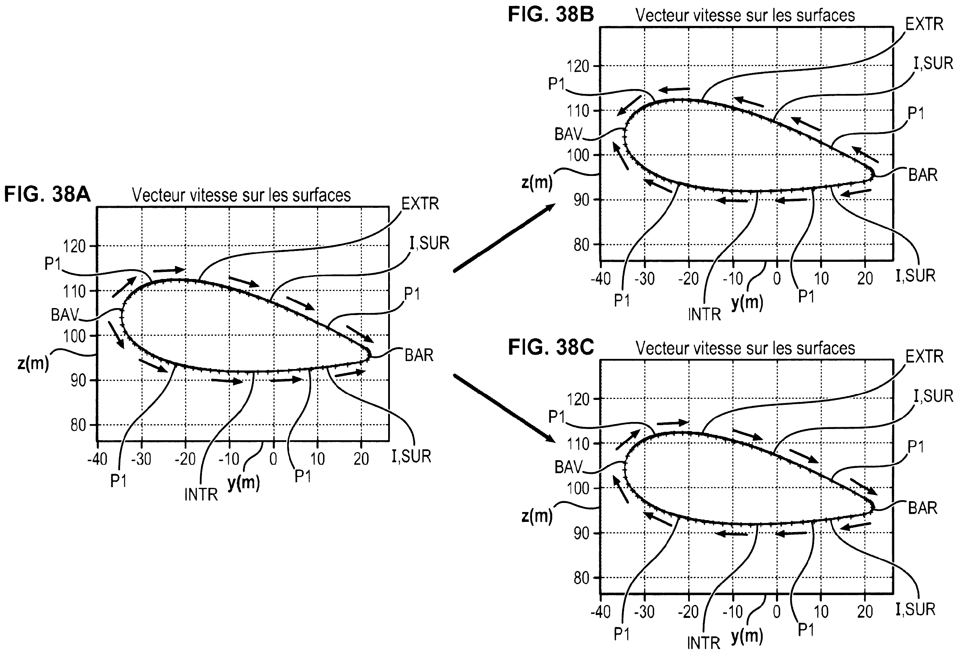

Par exemple, le résultat de la première itération pour une seule source scalaire S par bloc BL ou une seule source scalaire S associée à chaque premier point test P1 (cas 1 ci-dessous) a donné un vecteur vitesse à la surface SUR de l'interface I (en l'occurrence une aile I, SUR d'avion) selon la figure 38A (vecteur vitesse allant du bord avant BAV d'attaque de l'aile I, SUR au bord arrière de fuite BAR de l'aile I, SUR à la fois du côté de l'extrados EXTR de celle-ci et de l'intrados INTR de celle-ci). Lors de cette première itération, on impose comme conditions aux limites la nullité de la composante normale de la vitesse de l'écoulement de fluide à la surface SUR de l'aile I, SUR.

Lors de la deuxième itération, on peut imposer à la surface SUR de l'aile I, SUR des conditions aux limites étant une vitesse opposée à la vitesse calculée à la première itération selon l'exemple de la figure 38B (vecteur vitesse allant du bord arrière de fuite BAR de l'aile I, SUR au bord avant BAV d'attaque de l'aile I, SUR à la fois du côté de l'extrados EXTR de celle-ci et de l'intrados INTR de celle-ci). Ainsi, en additionnant la première itération et la deuxième itération, on obtient une vitesse nulle de l'écoulement de fluide à la surface SUR de l'aile I, SUR.

Ou, lors de la deuxième itération, on peut imposer à la surface SUR de l'aile I, SUR des conditions aux limites étant une vitesse constante tangente selon l'exemple de la figure 38C (recirculation constante autour de l'aile I, SUR, à savoir vecteur vitesse allant du bord avant BAV d'attaque de l'aile I, SUR au bord arrière de fuite BAR de l'aile I, SUR du côté de l'extrados EXTR de celle-ci, et vecteur vitesse allant du bord arrière de fuite BAR de l'aile I, SUR au bord avant BAV d'attaque de l'aile I, SUR du côté de l'intrados INTR de celle-ci).

Un premier exemple des figures 38A et 38B est illustré ci-dessous.

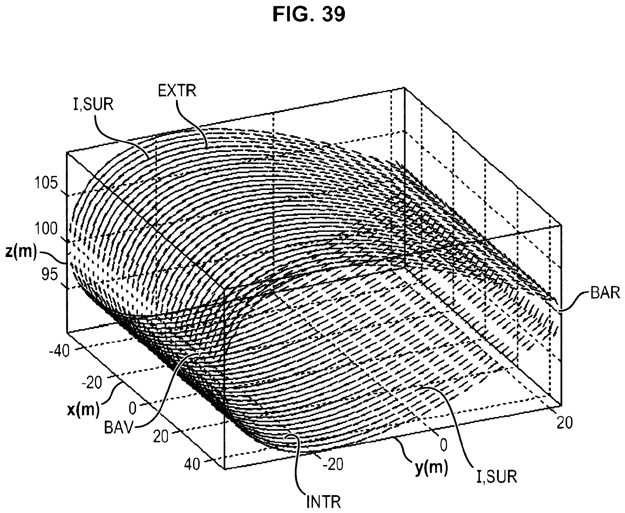

La figure 39 représente un exemple de vecteur conditions aux limites sur l'aile I, SUR.

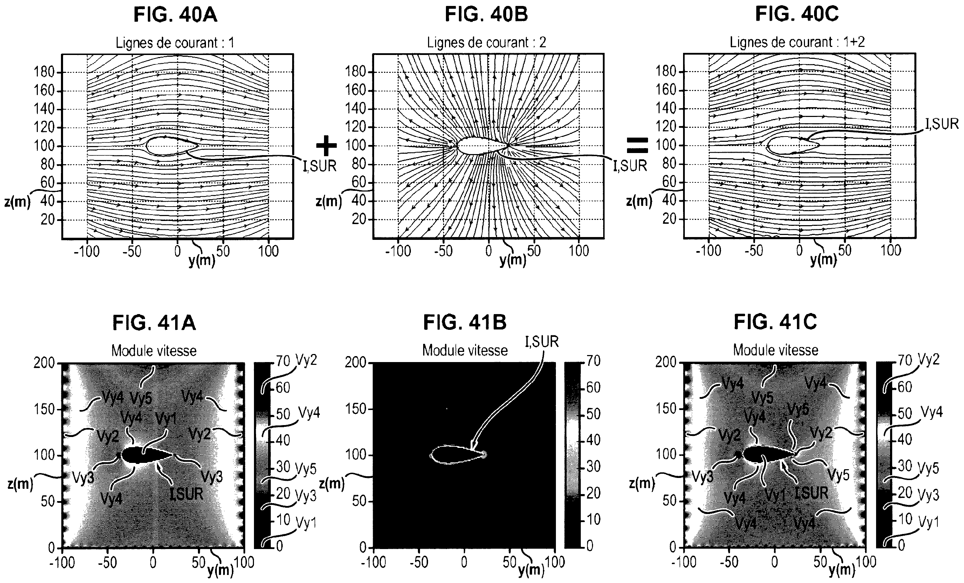

Les figures 40A et 41A représentent respectivement les lignes de champ de l'écoulement et le module de la vitesse de l'écoulement et correspondent à la première itération selon le cas 1 d'une source scalaire S par bloc BL ou une source scalaire S associée à chaque premier point test P1. Ces figures correspondent à la figure 38A et ont été établies pour l'aile I, SUR de la figure 39.

Les figures 40B et 41B représentent respectivement les lignes de champ de l'écoulement et le module de la vitesse de l'écoulement et correspondent à la deuxième itération selon le cas de trois sources scalaires S par bloc BL ou trois sources scalaires S associées à chaque premier point test P1. Les conditions aux limites de cette deuxième itération comprennent une vitesse à la surface SUR, opposée à la vitesse calculée à la première itération. En outre, les conditions aux limites de cette deuxième itération comprennent une vitesse nulle à l'entrée et à la sortie de la soufflerie et au sol. Ces figures correspondent à la figure 38B.

Les figures 40C et 41C représentent respectivement les lignes de champ de l'écoulement et le module de la vitesse de l'écoulement et correspondent à l'addition de la deuxième itération des figures 40B et 41B et de respectivement la première itération des figures 40A et 41A. On remarque que les vitesses à la deuxième itération sont beaucoup plus petites qu'à la première itération.

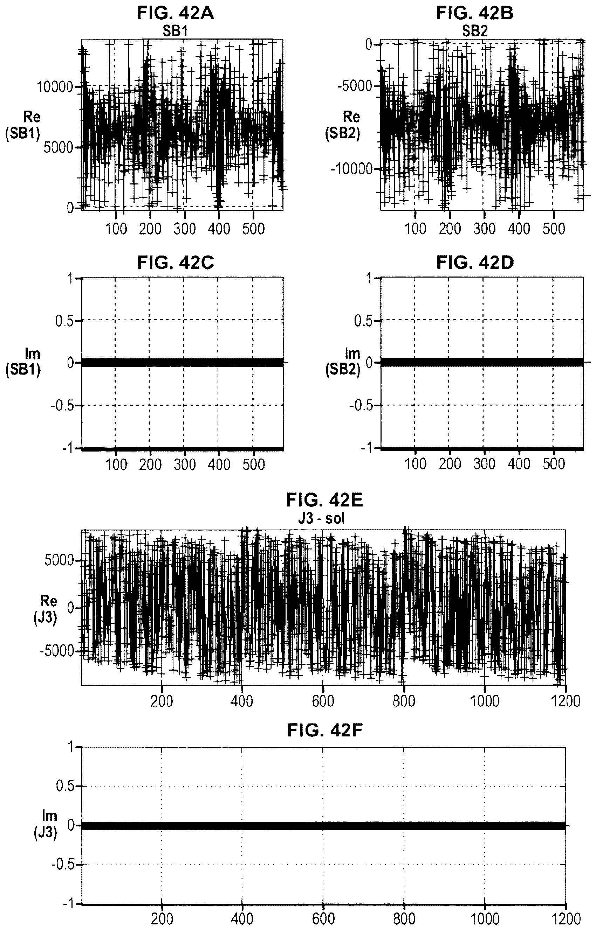

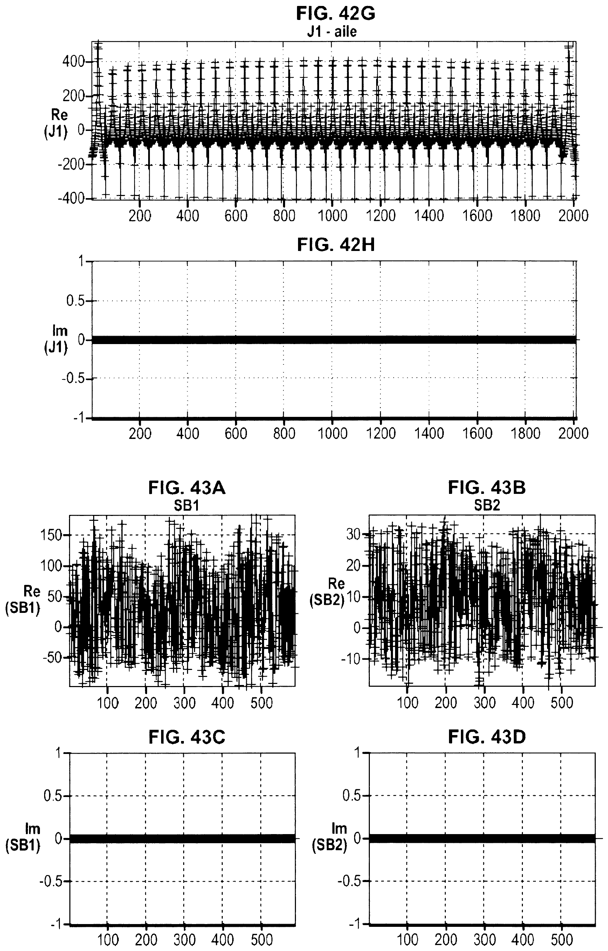

Les figures 42A, 42B, 42C, 42D, 42E, 42F, 42G et 42H représentent les sources de la première itération des figures 40A et 41A, où l'abscisse est l'indice du point dans le maillage de point sur l'objet correspondant et l'ordonnée est le flux de la source.

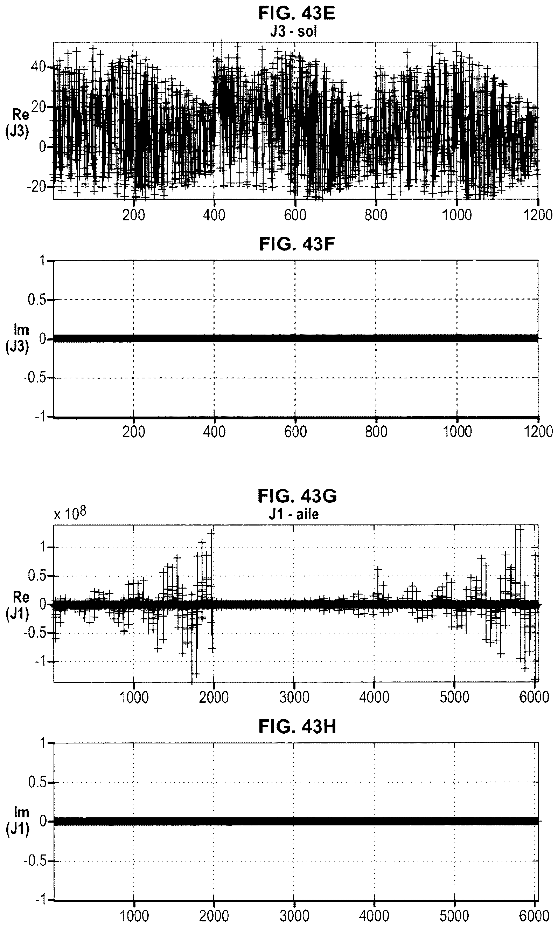

Les figures 43A, 43B, 43C, 43D, 43E, 43F, 43G et 43H représentent les sources de la deuxième itération des figures 40B et 41B, où l'abscisse est l'indice du point dans le maillage de point sur l'objet correspondant et l'ordonnée est le flux de la source. On remarque que l'influence des sources de la soufflerie diminue, alors que l'influence des sources de l'aile I, SUR croît.

Un deuxième exemple des figures 38A et 38B est illustré ci-dessous.

La figure 39 représente un exemple de vecteur conditions aux limites sur l'aile I, SUR.

Les figures 44A et 45A représentent respectivement les lignes de champ de l'écoulement et le module de la vitesse de l'écoulement et correspondent à la première itération selon le cas 1 d'une source scalaire S par bloc BL ou une source scalaire S associée à chaque premier point test P1. Ces figures correspondent à la figure 38A et ont été établies pour l'aile I, SUR de la figure 39.

Les figures 44B et 45B représentent respectivement les lignes de champ de l'écoulement et le module de la vitesse de l'écoulement et correspondent à la deuxième itération selon le cas d'une source scalaire S et de deux sources rotationnelles SR par bloc BL ou d'une source scalaire S et de deux sources rotationnelles SR associées à chaque premier point test P1 (les deux sources rotationnelles SR étant par exemple une source rotationnelle autour d'une direction parallèle à l'axe x et une source rotationnelle autour d'une autre direction parallèle à l'axe y). On appelle cela une source S, SR dite hybride. Les conditions aux limites de cette deuxième itération comprennent une recirculation constante autour de l'aile I, SUR selon la figure 38C, par exemple avec une vitesse tangente de 20 m/s.

Les figures 44C et 45C représentent respectivement les lignes de champ de l'écoulement et le module de la vitesse de l'écoulement et correspondent à l'addition de la deuxième itération des figures 44B et 44B et de respectivement la première itération des figures 44A et 45A.

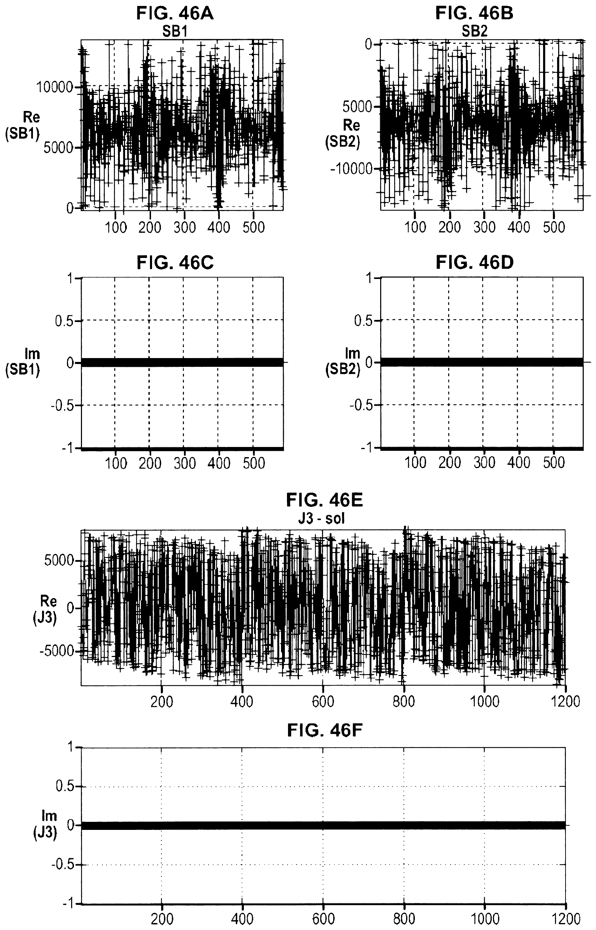

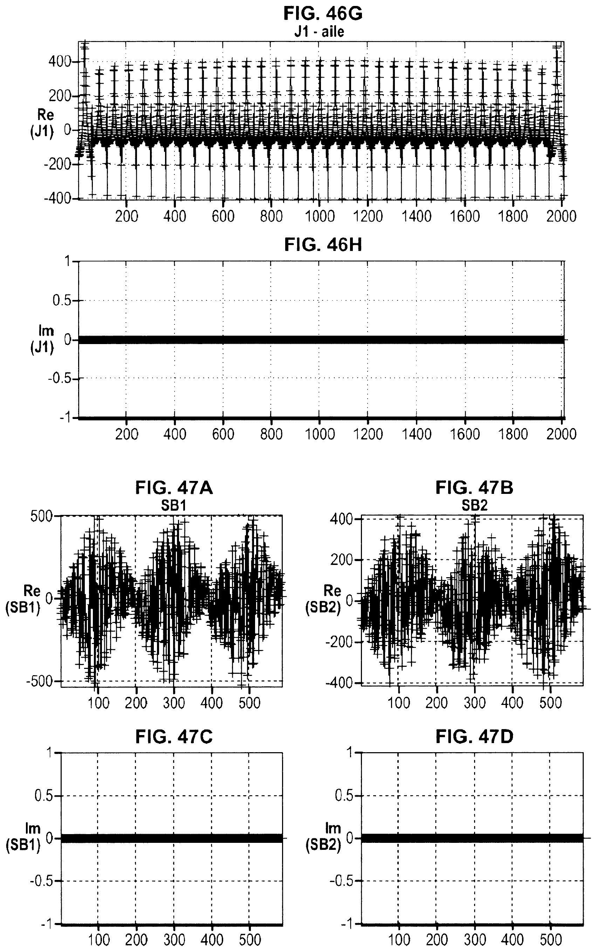

Les figures 46A, 46B, 46C, 46D, 46E, 46F, 46G et 46H représentent les sources de la première itération des figures 44A et 45A, où l'abscisse est l'indice du point dans le maillage de point sur l'objet correspondant et l'ordonnée est le flux de la source.

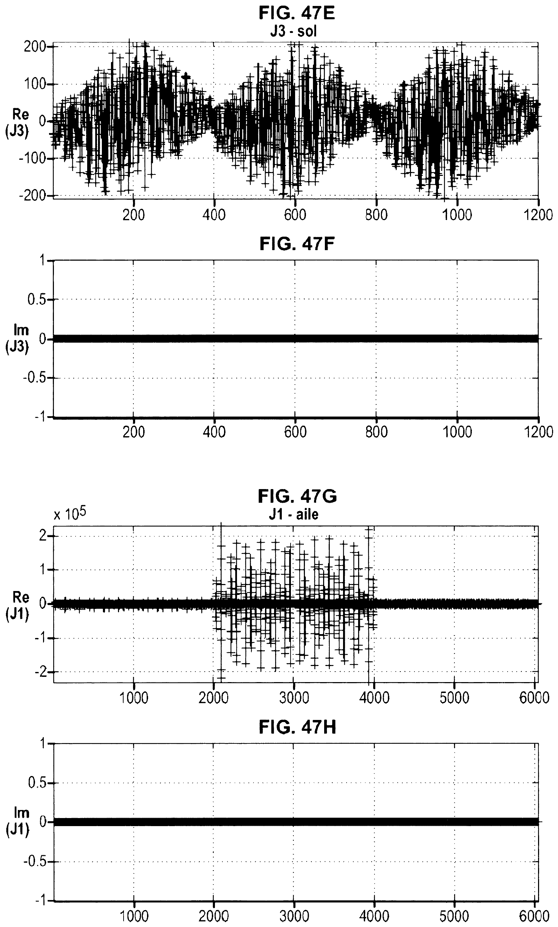

Les figures 47A, 47B, 47C, 47D, 47E, 47F, 47G et 47H représentent les sources de la deuxième itération des figures 44B et 45B, où l'abscisse est l'indice du point dans le maillage de point sur l'objet correspondant et l'ordonnée est le flux de la source.

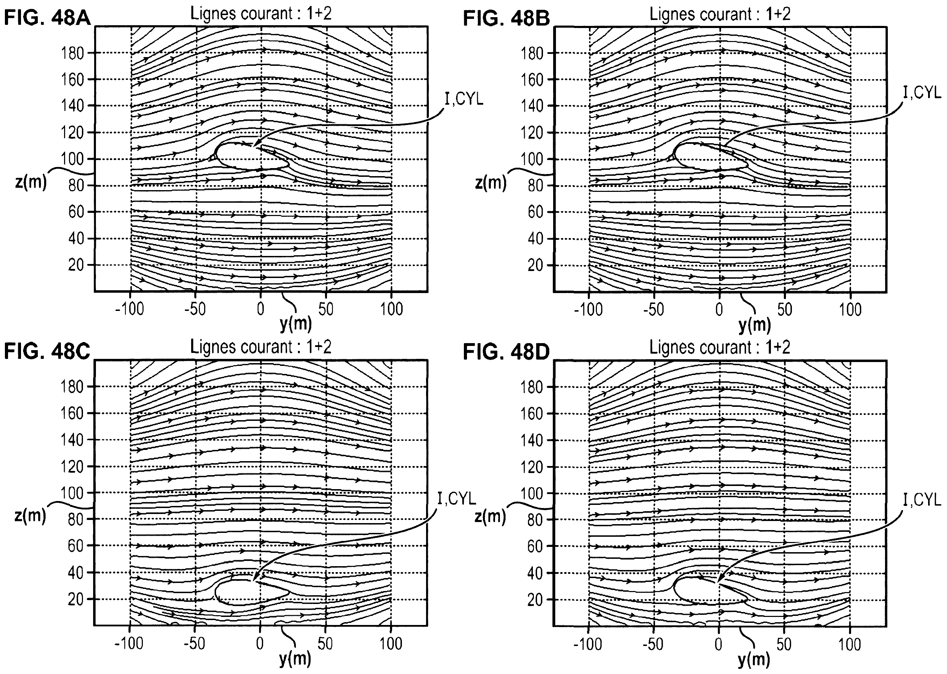

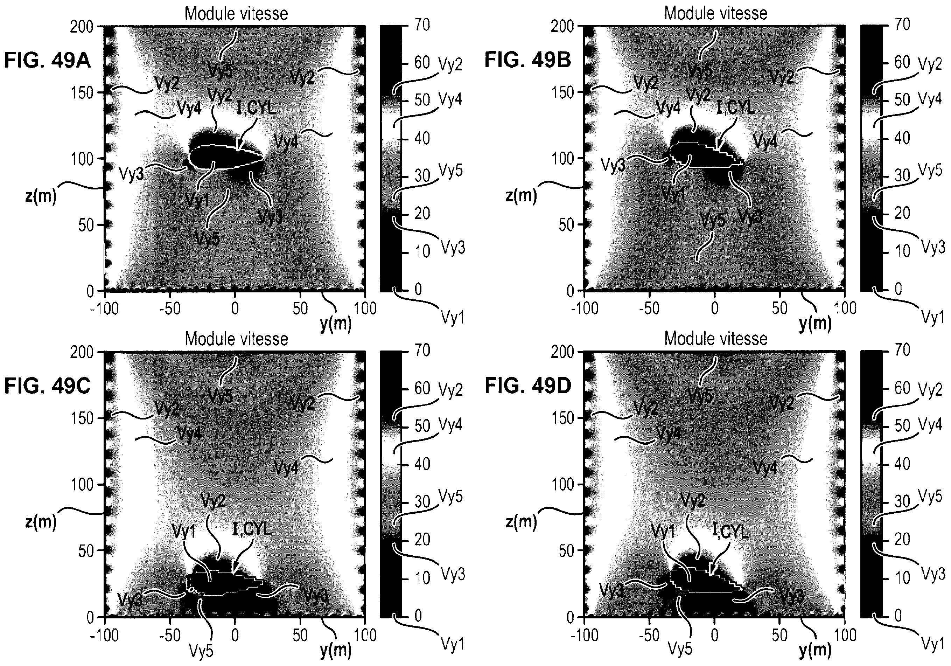

Les figures 48A et 49A représentent respectivement les lignes de champ de l'écoulement et le module de la vitesse de l'écoulement et correspondent à l'addition de la deuxième itération et de la première itération dans le deuxième exemple précité des figures 38A et 38B pour un angle d'incidence de l'aile I, SUR de 0° et à une première distance déterminée, éloignée du sol.

Les figures 48B et 49B représentent respectivement les lignes de champ de l'écoulement et le module de la vitesse de l'écoulement et correspondent à l'addition de la deuxième itération et de la première itération dans le deuxième exemple précité des figures 38A et 38B pour un angle d'incidence de l'aile I, SUR de 10° et à la première distance déterminée de l'aile I, SUR, éloignée du sol.

Les figures 48C et 49C représentent respectivement les lignes de champ de l'écoulement et le module de la vitesse de l'écoulement et correspondent à l'addition de la deuxième itération et de la première itération dans le deuxième exemple précité des figures 38A et 38B pour un angle d'incidence de l'aile de 0° et à une deuxième distance déterminée de l'aile I, SUR, proche du sol. La deuxième distance déterminée est inférieure à la première distance déterminée.

Les figures 48C et 49C représentent respectivement les lignes de champ de l'écoulement et le module de la vitesse de l'écoulement et correspondent à l'addition de la deuxième itération et de la première itération dans le deuxième exemple précité des figures 38A et 38B pour un angle d'incidence de l'aile I, SUR de 0° et à une deuxième distance déterminée de l'aile I, SUR, proche du sol.

Les figures 48D et 49D représentent respectivement les lignes de champ de l'écoulement et le module de la vitesse de l'écoulement et correspondent à l'addition de la deuxième itération et de la première itération dans le deuxième exemple précité des figures 38A et 38B pour un angle d'incidence de l'aile I, SUR de 10° et à la deuxième distance déterminée de l'aile I, SUR, proche du sol.

Ci-dessus, les figures 36A à 49D correspondent à une aile de type NACA.

Dans une variante, lors de la deuxième itération, la vitesse imposée sur la surface SUR de l'aile I, SUR est calculée à partir de la première itération.

Bien entendu, ce qui est décrit pour l'aile I, SUR, pour laquelle le fluide est l'air, est valable pour toute surface SUR, toute interface I et tout fluide.

Aux figures 41B, 45B, la couleur noire ou gris foncée correspond à une valeur située dans le bas de l'échelle de gris représentée sur la droite.

Aux autres figures, Vy1, Vy2, Vy3, Vy4, Vy5 désignent des domaines de valeurs de la vitesse Vy, indiqués dans l'échelle de gris représentée sur la droite.

Par exemple, le déroulement de ce mode de réalisation peut être le suivant :

Etape 1 (première itération): on génère la matrice pour une source scalaire S100. (source : 1)

Conditions aux limites CL 1: vitesse sur A = vitesse soufflerie,

vitesse normale sur B =0.

Le calcul nous donne une vitesse tangentielle sur B

Etape 2 (deuxième itération): On superpose des conditions aux limites (nécessite de nouvelles sources S200 à la place des sources S100),

Conditions aux limites CL2: Vitesse sur A nulle

Vitesse sur B opposée à la vitesse calculée

à l'étape 1 précédemment.

En sommant les 2 étapes, on obtient

$$Vitesse = Vitesse_{Etape1} + Vitesse_{Etape2}$$

$$\vec{V}_A = \vec{V}_{AEtape1} + \vec{V}_{AEtape2} = \vec{V}_{soufflerie} \text{ et } \vec{V}_B = \vec{V}_{BEtape1} + \vec{V}_{BEtape2} = \vec{0}$$

Etape 3: On superpose de nouvelles conditions aux limites sur l'objet (par exemple : circulation autour d'un profil ou objet en rotation donné ici pour exemple), en prenant de nouvelles sources S300.

Par exemple, la matrice M à la première itération est :

$$\begin{pmatrix} V_B^N = 0 \\ V_0 \end{pmatrix} = \begin{pmatrix} Q_{BB}^N & Q_{BA}^N \\ Q_{AB} & Q_{AA} \end{pmatrix} \begin{pmatrix} \lambda_{1B} \\ \lambda_{1A} \end{pmatrix}$$

de dimension :

$$\dim = \begin{pmatrix} n_B \times n_B & n_B \times 3n_A \\ 3n_A \times n_B & 3n_A \times 3n_A \end{pmatrix} = (n_B + 3n_A) \times (n_B + 3n_A)$$

Par exemple, la matrice M à la deuxième itération est :

$$\begin{pmatrix} V_B^T = -V_{BEtape1}^T \\ V_A = 0 \end{pmatrix} = \begin{pmatrix} Q_{BB2}^T & Q_{BA}^T \\ Q_{AB2} & Q_{AA} \end{pmatrix} \begin{pmatrix} \lambda_{2B} \\ \lambda_{2A} \end{pmatrix}$$

de dimension :

$$\dim = \begin{pmatrix} 3n_B \times 3n_B & 3n_B \times 3n_A \\ 3n_A \times 3n_B & 3n_A \times 3n_A \end{pmatrix} = (3n_B + 3n_A) \times (3n_B + 3n_A)$$

Par exemple, la matrice M à la troisième itération est :

$$\begin{pmatrix} V_B = V_{rotation} \\ V_A = 0 \end{pmatrix} = \begin{pmatrix} Q_{BB3} & Q_{BA} \\ Q_{AB3} & Q_{AA} \end{pmatrix} \begin{pmatrix} \lambda_{3B} \\ \lambda_{3A} \end{pmatrix}$$

de dimension :

$$\dim = \begin{pmatrix} 3n_B \times 3n_B & 3n_B \times 3n_A \\ 3n_A \times 3n_B & 3n_A \times 3n_A \end{pmatrix} = (3n_B + 3n_A) \times (3n_B + 3n_A)$$

En additionnant les itérations, la vitesse en un point M est :

$$V_M = \begin{pmatrix} Q_{MB1} & Q_{MA} \end{pmatrix} \begin{pmatrix} \lambda_{1B} \\ \lambda_{1A} \end{pmatrix} + \begin{pmatrix} Q_{MB2} & Q_{MA} \end{pmatrix} \begin{pmatrix} \lambda_{2B} \\ \lambda_{2A} \end{pmatrix} + \begin{pmatrix} Q_{MB3} & Q_{MA} \end{pmatrix} \begin{pmatrix} \lambda_{3B} \\ \lambda_{3A} \end{pmatrix}$$

Suivant un mode de réalisation dans les cas 6 et 7, la résolution est effectuée par au moins deux itérations successives ou plus. Par exemple, on résout le problème avec des sources scalaires dans la première itération, puis on ajoute des sources rotationnelles dans la deuxième itération pour satisfaire éventuellement le cas d'un fluide rotationnel. Un exemple est celui d'une sphère dans un écoulement, qui peut être modélisé en DPSM par des sources scalaires.

Mais si cette sphère est en rotation (effet Magnus), il est nécessaire d'ajouter à la solution précédente une source rotationnelle (vortex). Pour un cylindre en rotataion, cela donne la deuxième valeur représentée à titre d'exemple à la figure 55B, la première valeur obtenue par sources scalaires étant représentée à titre d'exemple à la figure 55A, pour donner, par addition des premières et deuxièmes valeurs, la vitesse du fluide selon la figure 55C (les conditions aux limites étant celles mentionnées ci-dessus dans l'exemple 1). Chacun des modes de réalisation et variante des cas 6 et 7 est par exemple combiné avec le premier mode de réalisation sous-jacent précité (source S et/ou S' située en dessous de la surface imperméable SUR du solide de l'interface I et/ou I' et de l'autre côté de l'écoulement de fluide F), ce qui est le cas ci-dessous. L'interface I est par exemple un objet B. L'interface I' est par exemple un objet A ou E précité. C désigne la surface SCL.

Cas 8

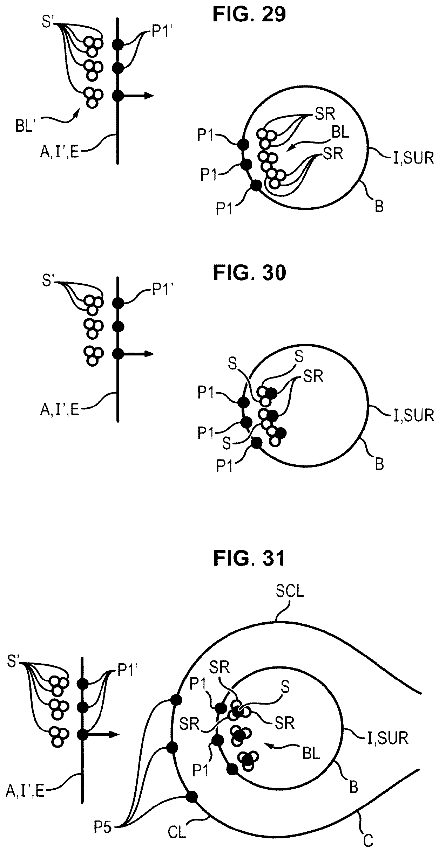

Suivant un mode de réalisation, représenté à la figure 29, il est prévu comme source de fluide au moins une source SR rotationnelle de fluide en association à chaque premier point test P1, pour les conditions L aux limites ayant une composante normale de vitesse du fluide au premier point test P1, qui est nulle à l'interface I, et une composante tangentielle de vitesse du fluide au premier point test P1, qui est prescrite.

Dans ce mode de réalisation, il peut être prévu une seule source SR rotationnelle de fluide en association à chaque premier point test P1 de l'interface I ou deux sources SR rotationnelles de fluide en association à chaque premier point test P1 de l'interface I ou trois sources SR rotationnelles de fluide en association à chaque premier point test P1 de l'interface I. Ce mode de réalisation prévoit donc 1, 2 ou 3 sources rotationnelles SR par groupe BL. L'interface I est par exemple un objet B. Chacun des modes de réalisation et variante du cas 8 est par exemple combiné avec le premier mode de réalisation sous-jacent précité (source SR et/ou S' située en dessous de la surface imperméable SUR du solide de l'interface I et/ou I' et de l'autre côté de l'écoulement de fluide F), ce qui est le cas ci-dessous. L'interface I est par exemple un objet B. L'interface I' est par exemple un objet A ou E précité. C désigne la surface SCL.

Ce cas est par exemple utilisé pour un nombre de Reynolds élevé en fluide rotationnel. Ce cas s'applique par exemple à des conditions aux limites introduisant ou nécessitant de la vorticité (objet en mouvement, en rotation, ou dans un écoulement quelconque). Les géométries traitées sont identiques aux cas précédents.

En variante à ce mode de réalisation, il est prévu comme source de fluide :

- au moins une sources SR rotationnelle de fluide associée à chaque premier point test P1 d'une première interface I, pour les conditions L aux limites ayant une composante normale de vitesse du fluide au premier point test P1, qui est nulle à l'interface I, et une composante tangentielle de vitesse du fluide au premier point test P1, qui est prescrite,
- au moins une source S' scalaire de débit massique de fluide associée à chaque premier point test P1' d'une deuxième interface I' distincte de la première interface I. Il pourrait être prévu en variantes une seule source SR rotationnelle de débit massique de fluide associée à chaque premier point test P1 d'une première interface I, ou deux sources SR rotationnelles de fluide associées à chaque premier point test P1 d'une première interface I ou trois sources SR rotationnelles de fluide associées à chaque premier point test P1 d'une première interface I, avec une seule sources S' scalaire de débit massique de fluide associée à chaque premier point test P1' d'une deuxième interface I' ou deux sources S' scalaires de débit massique de fluide associées à chaque premier point test P1' d'une deuxième interface I' ou trois sources S' scalaires de débit massique de fluide associées à chaque premier point test P1'.

Ce cas 8 est décrit ci-dessous pour trois sources SR rotationnelles de fluide en association à chaque premier point test P1 de l'interface I avec trois sources S' scalaires de débit massique de fluide associées à chaque premier point test P1'.

La matrice de couplage entre les points tests P5=Pi de A et les sources S'=Sj de B s'écrit

$$\begin{pmatrix} 0 & \dfrac{-(z_i - z_j)}{4\pi\rho R_{ij}} & \dfrac{(y_i - y_j)}{4\pi\rho R_{ij}} \\ \dfrac{(z_i - z_j)}{4\pi\rho R_{ij}} & 0 & \dfrac{-(x_i - x_j)}{4\pi\rho R_{ij}} \\ \dfrac{-(y_i - y_j)}{4\pi\rho R_{ij}} & \dfrac{(x_i - x_j)}{4\pi\rho R_{ij}} & 0 \end{pmatrix} \cdot \begin{pmatrix} \lambda_x \\ \lambda_y \\ \lambda_z \end{pmatrix} = t_{ij} \cdot \begin{pmatrix} \lambda_x \\ \lambda_y \\ \lambda_z \end{pmatrix}$$

avec

$$T_{BA} = \left(t_{ij}\right)_{1 \le i \le n_p, 1 \le j \le n_s}$$

La matrice M globale de résolution comprenant cette matrice de couplage est :

$$\begin{pmatrix} V_0 \\ V_B^N = 0 \end{pmatrix} = \begin{pmatrix} Q_{AA} & T_{AB} \\ Q_{BA} & T_{BB} \end{pmatrix} \cdot \begin{pmatrix} \lambda_A \\ \lambda_B \end{pmatrix}$$

Ce cas 8, ainsi que les cas 9 et 10 ci-dessous permet de modéliser un fluide parfait mais avec des conditions aux limites nulles à la surface SUR de l'interface I, pouvant être par exemple une aile d'avion.

<u>Cas 9 et 10</u>

Suivant un mode de réalisation, il est prévu comme source de fluide au moins une source S scalaire de débit massique de fluide et au moins une source SR rotationnelle de fluide en association à chaque premier point test P1, pour la condition L aux limites ayant au moins une composante normale de vitesse du fluide au premier point test P1, qui est nulle à l'interface I, et une composante tangentielle de vitesse du fluide au premier point test P1, qui est prescrite.

La figure 30 est une illustration de ce mode de réalisation. Ce mode de réalisation est dit hybride ou à sources S, SR hybrides. L'interface I est par exemple un objet B. Chacun des modes de réalisation et des variantes des cas 9 et 10 est par exemple combiné avec le premier mode de réalisation sous-jacent précité (source S, SR située en dessous de la surface imperméable SUR du solide de l'interface I et de l'autre côté de l'écoulement de fluide F et/ou source S' située en dessous de l'interface I' et de l'autre côté de l'écoulement de fluide F), ce qui est le cas ci-dessous. L'interface I est par exemple un objet B. L'interface I' est par exemple un objet A ou E précité. Dans ce mode de réalisation, il peut être prévu une seule, deux ou trois sources S scalaires de débit massique de fluide et une seule, deux ou trois sources SR rotationnelles de fluide en association avec chaque premier point test P1.

Il peut être prévu en plus dans ce mode de réalisation au moins une (par exemple une seule ou deux ou trois) source S' scalaire de débit massique de fluide associée à chaque premier point test P1' d'une deuxième interface I' distincte de la première interface I.

Cas 9

Suivant un mode de réalisation, il est prévu comme source de fluide une source S scalaire de débit massique de fluide et deux sources SR rotationnelles de fluide en association à chaque premier point test P1, pour les conditions L aux limites ayant une composante normale de vitesse du fluide au premier point test P1, qui est nulle à l'interface I, et une composante tangentielle de vitesse du fluide au premier point test P1, qui est prescrite.

Ce cas 9 est décrit ci-dessous pour trois sources S' scalaires de débit massique de fluide associées à chaque premier point test P1' d'une deuxième interface I' distincte de la première interface I.

Par exemple, la matrice de couplage entre les points tests P1=Pi de A et les sources S'=Sj de B s'écrit :

$$
\begin{pmatrix}
\dfrac{x_i - x_j}{4\pi\rho R_{ij}^{\,3}} & 0 & 0 \\[2em]
0 & \dfrac{y_i - y_j}{4\pi\rho R_{ij}^{\,3}} & 0 \\[2em]
0 & 0 & \dfrac{z_i - z_j}{4\pi\rho R_{ij}^{\,3}}
\end{pmatrix}
\cdot
\begin{pmatrix} \lambda \\ \lambda \\ \lambda \end{pmatrix}
-
\begin{pmatrix}
0 & -\dfrac{z_i - z_j}{4\pi\rho R_{ij}^{\,3}} & \dfrac{y_i - y_j}{4\pi\rho R_{ij}^{\,3}} \\[2em]
\dfrac{z_i - z_j}{4\pi\rho R_{ij}^{\,3}} & 0 & -\dfrac{x_i - x_j}{4\pi\rho R_{ij}^{\,3}} \\[2em]
-\dfrac{y_i - y_j}{4\pi\rho R_{ij}^{\,3}} & \dfrac{x_i - x_j}{4\pi\rho R_{ij}^{\,3}} & 0
\end{pmatrix}
\cdot
\begin{pmatrix} \lambda_x \\ \lambda_y \\ \lambda_z \end{pmatrix}
$$

Par exemple, on introduit la matrice de couplage hybride $H^3$ suivante, qui est, avec 2 sources rotationnelles Jx et Jy et une source scalaire :

$$
\dfrac{1}{4\pi\rho}
\begin{pmatrix}
0 & \dfrac{z_i - z_j}{R_{ij}^{\,3}} & \dfrac{x_i - x_j}{R_{ij}^{\,3}} \\[2em]
-\dfrac{z_i - z_j}{R_{ij}^{\,3}} & 0 & \dfrac{y_i - y_j}{R_{ij}^{\,3}} \\[2em]
\dfrac{y_i - y_j}{R_{ij}^{\,3}} & -\dfrac{x_i - x_j}{R_{ij}^{\,3}} & \dfrac{z_i - z_j}{R_{ij}^{\,3}}
\end{pmatrix}
\cdot
\begin{pmatrix} \lambda_x \\ \lambda_y \\ \lambda \end{pmatrix}
= H_{ij}^3 \cdot
\begin{pmatrix} \lambda_x \\ \lambda_y \\ \lambda \end{pmatrix}
$$

La matrice M globale de résolution, comprenant la matrice de couplage, est :

$$
\begin{pmatrix} V_0 \\ V_B^N = 0 \end{pmatrix}
=
\begin{pmatrix} Q_{AA} & H_{AB}^3 \\ Q_{BA} & H_{BB}^3 \end{pmatrix}
\cdot
\begin{pmatrix} \lambda_A \\ \lambda_B \end{pmatrix}
$$

de dimension :

$$
\dim = (3n_A + 3n_B) \times (3n_A + 3n_B)
$$

Ce mode de réalisation est par exemple utilisé pour un fluide incompressible, non visqueux (nombre de Reynolds élevé) avec prise en compte de la vorticité en une seule phase de résolution. Des exemples sont : objet ou cylindre en rotation dans un écoulement avec effet de sol, et éventuellement gradient de vent pour illustrer le fait que le procédé permet des conditions aux limites complexes en chacun des points de la surface des objets.

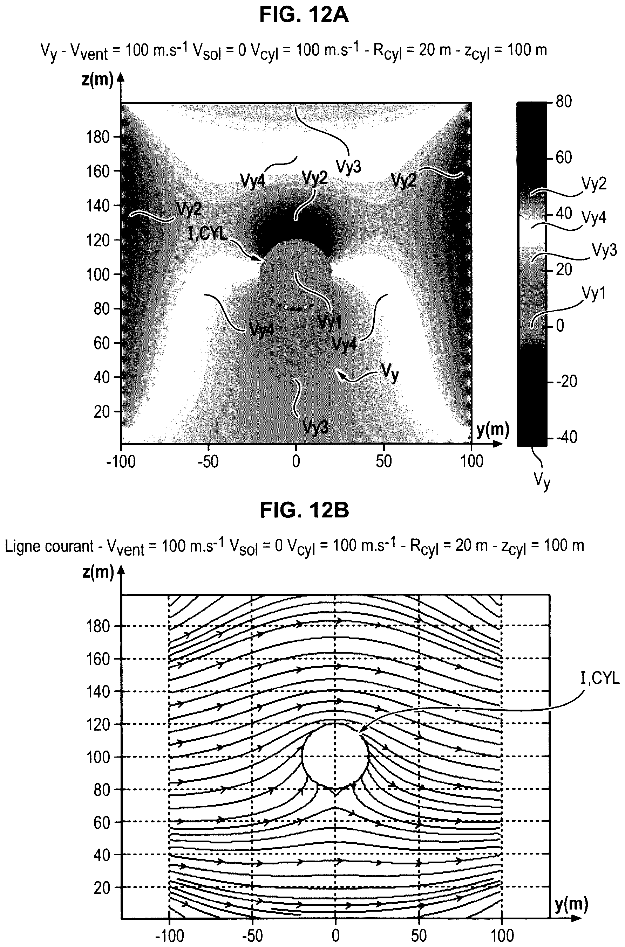

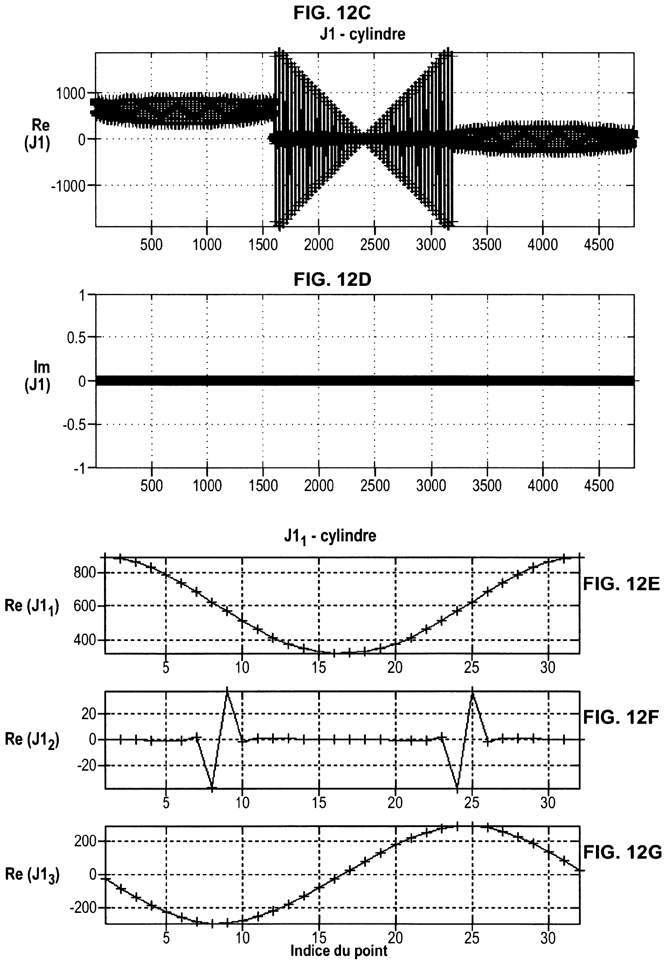

Dans ce mode de réalisation, la figure 12A représente la valeur absolue de la composante $V_y$ de la vitesse de l'écoulement de fluide ayant été calculée selon l'axe y et la figure 12B représente des lignes de courant de cet écoulement de fluide, ayant été calculées, et ce pour une interface I solide, formée par un cylindre CYL en rotation dans le sens horaire autour d'un axe parallèle à la direction x, où les conditions aux limites prévoient que la composante tangentielle du vecteur vitesse de l'écoulement de fluide est égale à une valeur prescrite du vent (par exemple ici 100 m.s$^{-1}$) sur le cylindre. Le ou les cylindres sont des obstacles dans l'écoulement de fluide d'une soufflerie. Cela permet de modéliser l'effet de sol et les effets couplés avec le cylindre. Les figures 12C à 12G représentent les sources (figures 12C et 12D : sources rotationnelles représentées en un vecteur ligne de 3x1600 environ selon X et Y ; figures 12E, 12F, 12G : sources scalaires selon 1 tranche du cylindre en commençant en haut, où l'abscisse est l'indice du point dans le maillage de point sur l'objet correspondant et l'ordonnée est le flux de la source ; les nuages denses des figures 12C et 12D représentent les même courbes condensées des figures 12E, 12F, 12G).

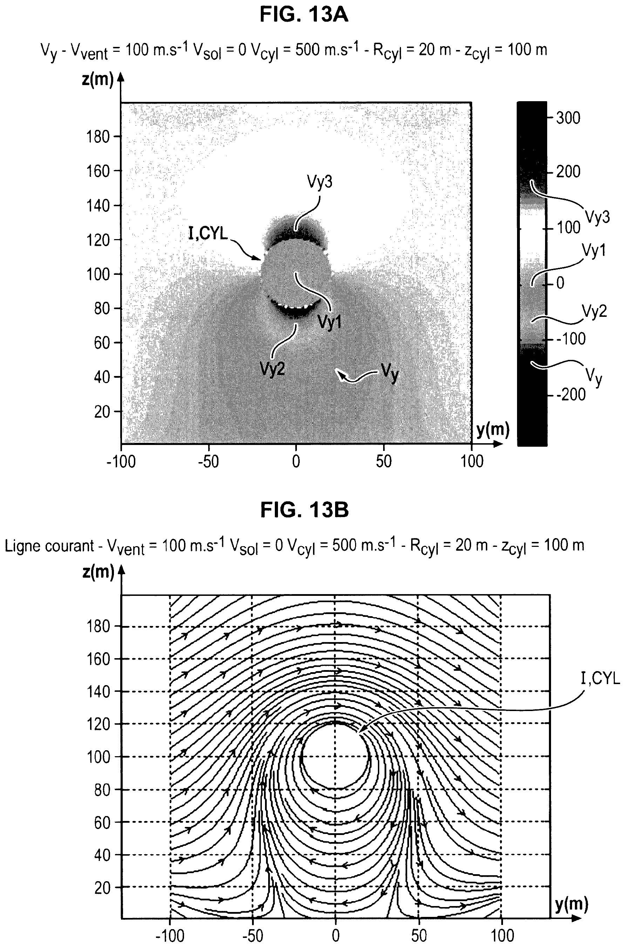

Dans ce mode de réalisation, la figure 13A représente la valeur absolue de la composante $V_y$ de la vitesse de l'écoulement de fluide ayant été calculée selon l'axe y et la figure 13B représente des lignes de courant de cet écoulement de fluide, ayant été calculées, et ce pour une interface I solide, formée par un cylindre CYL en rotation dans le sens horaire autour d'un axe parallèle à la direction x, où les conditions aux limites prévoient que la composante tangentielle du vecteur vitesse de l'écoulement de fluide est égale à cinq fois une valeur prescrite du vent (cette valeur prescrite du vent étant par exemple ici 100 m.s$^{-1}$) sur le cylindre.

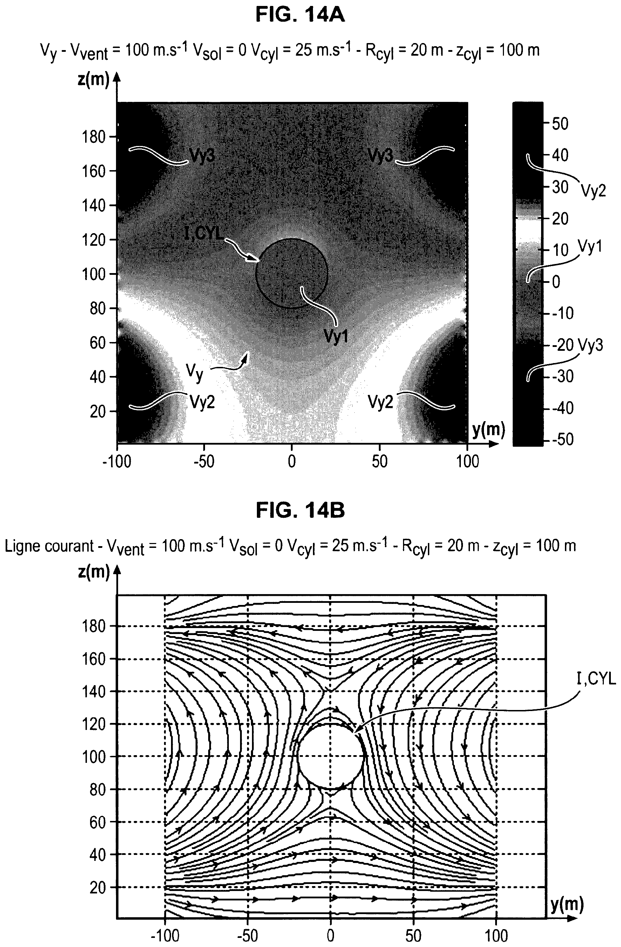

Dans ce mode de réalisation, la figure 14A représente la valeur absolue de la composante $V_y$ de la vitesse de l'écoulement de fluide ayant été calculée selon l'axe y et la figure 14B représente des lignes de courant de cet écoulement de fluide, ayant été calculées, et ce pour une interface I solide, formée par un cylindre CYL en rotation dans le sens horaire autour d'un axe parallèle à la direction x avec un gradient de vent, où les conditions aux limites prévoient que la composante tangentielle du vecteur vitesse de l'écoulement de fluide est égale à un quart d'une valeur prescrite du vent (cette valeur prescrite du vent étant par exemple ici 100 m.s$^{-1}$) sur le cylindre.

Cas 10

Suivant un mode de réalisation, il est prévu comme source de fluide une source S scalaire de débit massique de fluide et trois sources SR rotationnelles de fluide en association à chaque premier point test P1, pour la condition L aux limites ayant au premier point test P1 de l'interface I, une composante normale de vitesse du fluide et une composante tangentielle de vitesse du fluide, qui sont nulles à l'interface I, et une composante normale nulle de vitesse d'un autre point test P5 prescrit d'une surface SCL délimitant une couche limite CL de l'écoulement de fluide par rapport à l'interface I. Ce mode de réalisation est décrit ci-dessous pour trois sources S' scalaires de débit massique de fluide associées à chaque premier point test P1' d'une deuxième interface I' distincte de la première interface I.

Ce mode de réalisation est illustré à la figure 31.

Par exemple, ce mode de réalisation a des conditions aux limites stratifiées à la surface SCL.

Par exemple, la matrice M globale de résolution comporte par exemple la matrice H$^4$ ci-dessous :

$$\begin{pmatrix} 0 & \dfrac{z_i - z_j}{4\pi\rho R_{ij}{}^3} & \dfrac{y_i - y_j}{4\pi\rho R_{ij}{}^3} & \dfrac{x_i - x_j}{4\pi\rho R_{ij}{}^3} \\[2ex] -\dfrac{z_i - z_j}{4\pi\rho R_{ij}{}^3} & 0 & \dfrac{x_i - y_j}{4\pi\rho R_{ij}{}^3} & \dfrac{y_i - y_j}{4\pi\rho R_{ij}{}^3} \\[2ex] \dfrac{y_i - y_j}{4\pi\rho R_{ij}{}^3} & -\dfrac{x_i - x_j}{4\pi\rho R_{ij}{}^3} & 0 & \dfrac{z_i - z_j}{4\pi\rho R_{ij}{}^3} \end{pmatrix} \cdot \begin{pmatrix} \lambda_x \\ \lambda_y \\ \lambda_z \\ \lambda \end{pmatrix} = H_{ij}^4 . \lambda$$

de dimension :

$$\dim = (3n_A \times 3n_B \quad 3n_A \times n_B) = (3n_A \times 4n_B)$$

La matrice M globale de résolution est par exemple :

$$\begin{pmatrix} V_0 \\ V_C^N = 0 \\ V_B^N = 0 \end{pmatrix} = \begin{pmatrix} Q_{AA} & H_{AB}^4 \\ Q_{CA} & H_{CB}^4 \\ Q_{BA} & H_{BB}^4 \end{pmatrix} \cdot \begin{pmatrix} \lambda_A \\ \lambda_{Bh} \end{pmatrix}$$

de dimension :

$$\begin{pmatrix} 3n_A \\ n_C = n_B \\ 3n_B \end{pmatrix} = \begin{pmatrix} 3n_A \times 3n_A & 3n_A \times 4n_B \\ n_C \times 3n_A & n_C \times 4n_B \\ 3n_B \times 3n_A & 3n_B \times 4n_B \end{pmatrix} \cdot \begin{pmatrix} 3n_A \\ 4n_B \end{pmatrix}$$

c'est-à-dire de dimension

$$\dim = (3n_A + 4n_B) \times (3n_A + 4n_B)$$

L'une des variantes des cas 9 et 10 ci-dessus est illustrée ci-dessous.

Cette variante prévoit trois sources S scalaires de débit massique de fluide et une source SR rotationnelle de débit massique de fluide en association avec chaque premier point test P1, pour les conditions L aux limites ayant au premier point test P1 une composante normale de vitesse du fluide et une composante tangentielle de vitesse du fluide, qui sont nulles à l'interface I, et une composante normale nulle de vitesse d'une couche limite CL de l'écoulement de fluide F.

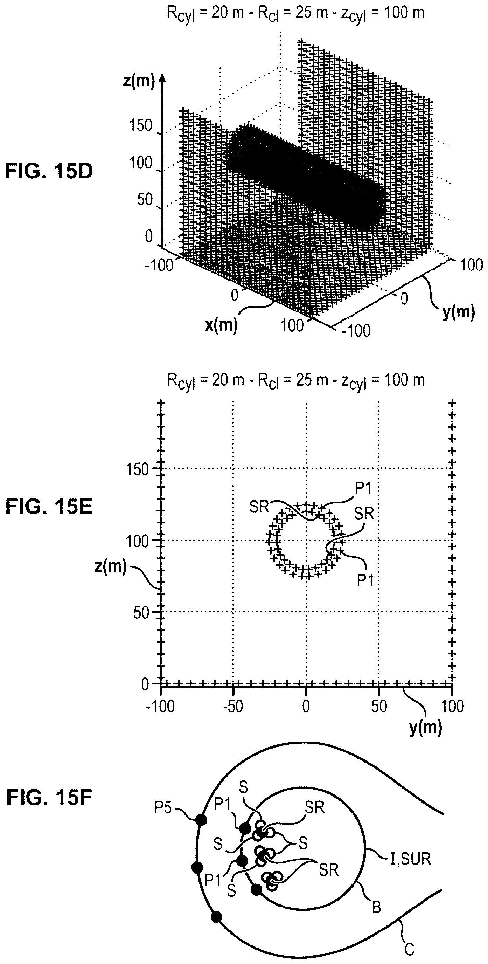

Cette variante est illustrée à la figure 15F.

Cette variante est par exemple utilisée pour un fluide incompressible, non visqueux (nombre de Reynolds élevé), rotationnel, avec des conditions L aux limites imposées en une frontière connue de la couche limite CL, dont la topologie aura été préalablement établie. Des exemples sont : cylindre dans un écoulement avec effet de sol, et zoom au voisinage des parois, pour illustrer le fait que le procédé permet de fixer des conditions aux limites complexes en chacun des points de la surface des objets et en la frontière de la couche limite.

Les figures 15D et 15E représentent un exemple de sources SR rotationnelles associées aux points tests P1 de l'interface I, pour une interface I solide, formée par un cylindre CYL ayant un axe parallèle à la direction x, les sources scalaires étant présentes et n'étant pas représentées.

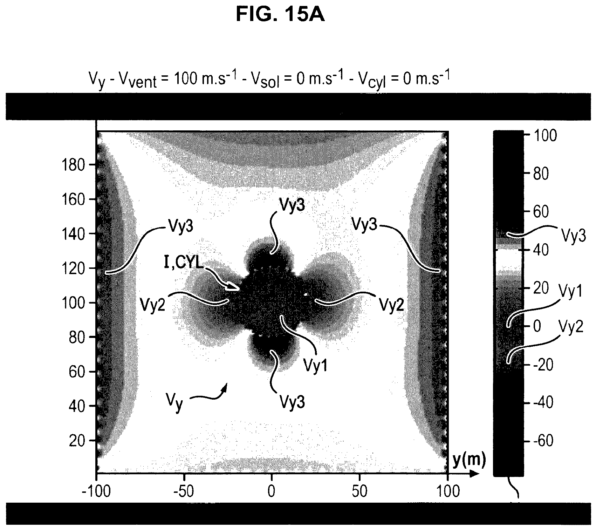

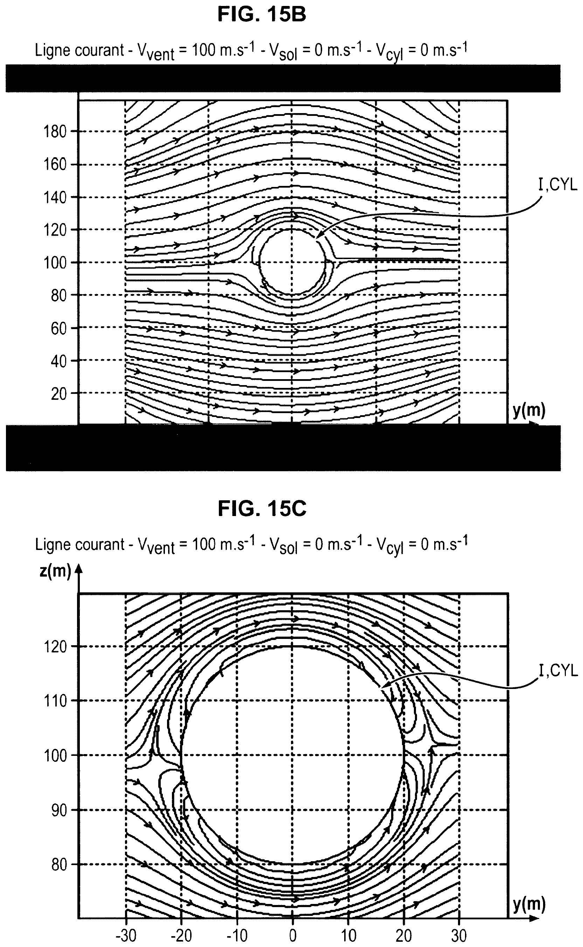

Dans cet exemple, la figure 15A représente la valeur absolue de la composante $V_y$ de la vitesse de l'écoulement de fluide ayant été calculée selon l'axe y, et les figures 15B et 15C représentent des lignes de courant de cet écoulement de fluide, ayant été calculées, et ce pour l'interface I solide, formée par le cylindre CYL ayant un axe parallèle à la direction x, pour les conditions L aux limites ayant une composante normale de vitesse du fluide et une composante tangentielle de vitesse du fluide, qui sont nulles à l'interface I.

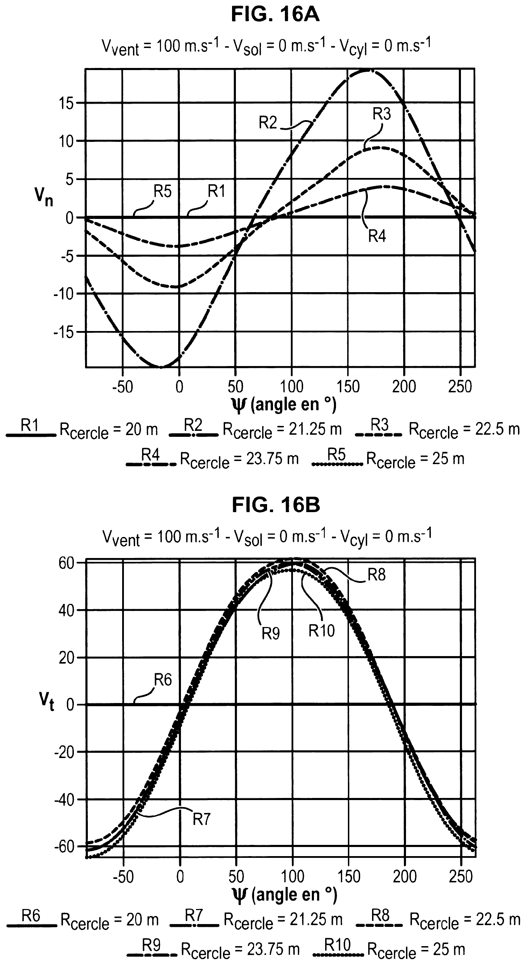

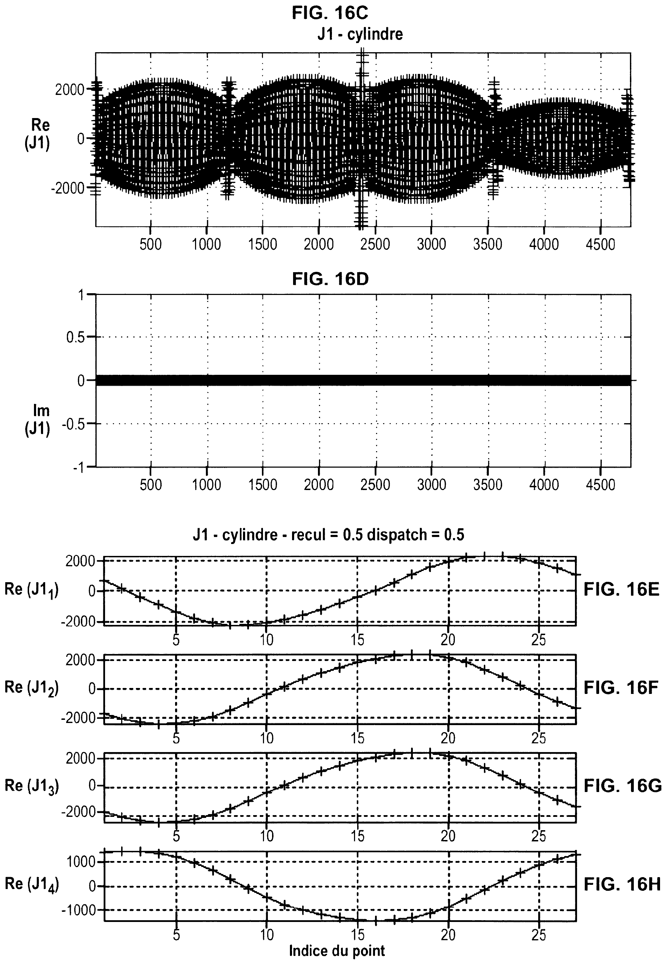

Dans cette variante, la figure 16A illustre des courbes R1, R2, R3, R4, R5 de la vitesse normale $V_n$ calculée de l'écoulement de fluide F des figures 15A, 15B et 15C, et la figure 16B illustre des courbes R6, R7, R8, R9, R10 de la vitesse tangentielle $V_t$ calculée de l'écoulement de fluide F des figures 15A, 15B et 15C, en fonction de l'angle $\psi$ autour de l'axe central du cylindre (parallèle à x) en abscisses, sur un cercle centré sur cet axe ayant respectivement le rayon suivant, pour une vitesse normale nulle et une vitesse tangentielle nulle aux points tests du cylindre et une vitesse normale nulle aux points tests de la couche limite:

- R1 et R6 : cercle de rayon 20 m, qui est le rayon du cylindre CYL,
- R2 et R7: cercle de rayon 21.25 m,
- R3 et R8 : cercle de rayon 22.5 m,
- R4 et R9 : cercle de rayon 23.75 m,
- R5 et R10 : cercle de rayon 25 m.

Les figures 16C à 16H représentent les sources (figures 16C et 16D : sources rotationnelles selon X et Y; figures 12E, 16F, 16G, 16H: sources scalaires selon 1 tranche du cylindre en commençant en haut, où l'abscisse est l'indice du point dans le maillage de point sur l'objet correspondant et l'ordonnée est le flux de la source).

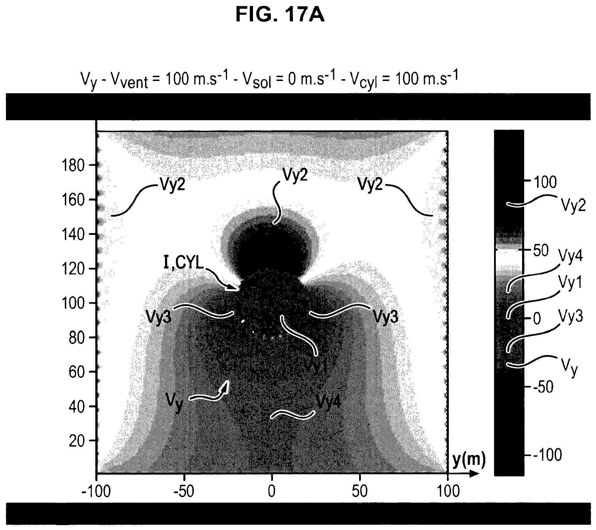

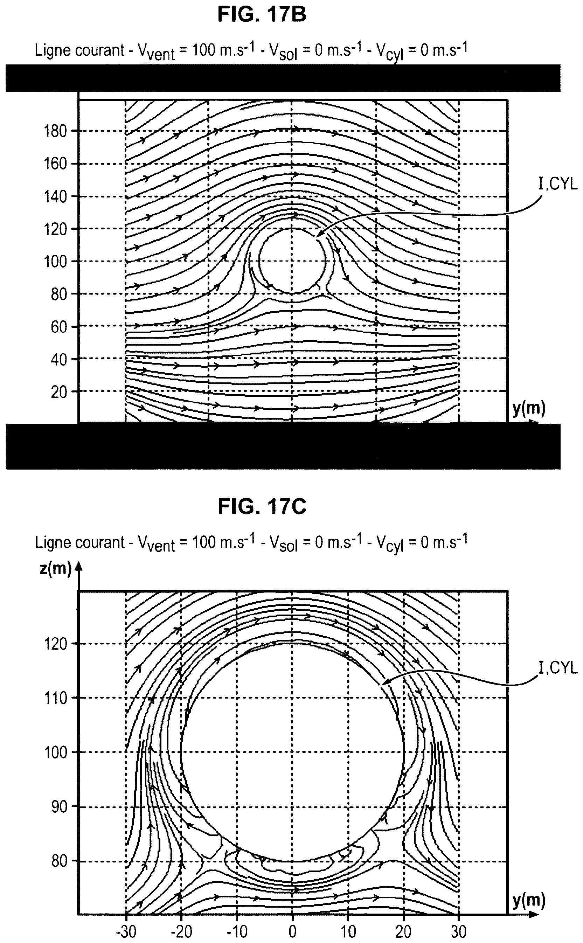

Dans cette variante, la figure 17A représente la valeur absolue de la composante $V_y$ de la vitesse de l'écoulement de fluide ayant été calculée selon l'axe y et les figures 17B et 17C représentent des lignes de courant de cet écoulement de fluide, ayant été calculées, et ce pour une interface I solide, formée par un cylindre CYL en rotation dans le sens horaire autour d'un axe parallèle à la direction x, où les conditions aux limites prévoient que la composante tangentielle du vecteur vitesse de l'écoulement de fluide est égale à une valeur prescrite du vent (par exemple ici 100 m.s$^{-1}$) sur le cylindre.

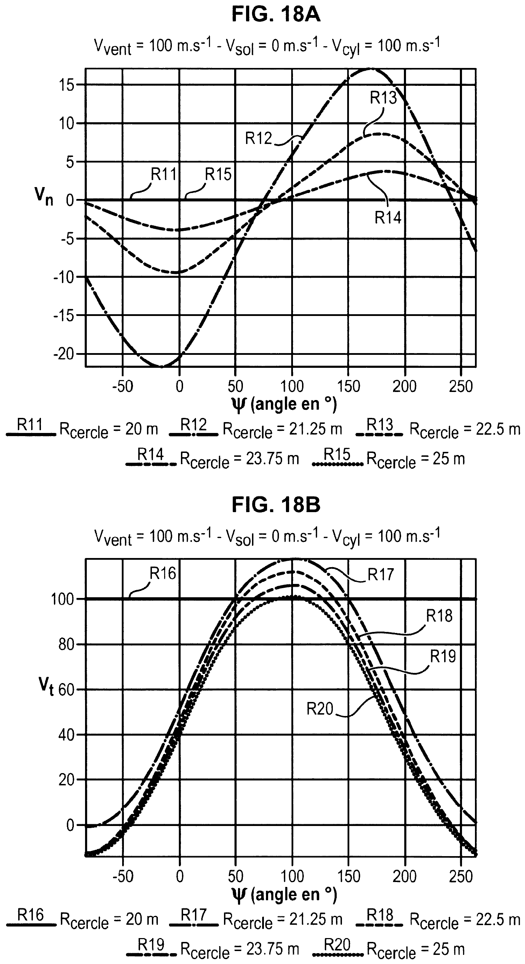

Dans cette variante, les figures 18A et 18B représentent des courbes R11, R12, R13, R14, R15, R16, R17, R18, R19, R20 analogues aux courbes R1, R2, R3, R4, R5, R6, R7, R8, R9, R10 des figures 16A et 16B, pour une vitesse normale nulle, une vitesse tangentielle égale à une valeur prescrite du vent (par exemple ici 100 m.s$^{-1}$) aux points tests du cylindre et une vitesse normale nulle aux points tests de la couche limite.

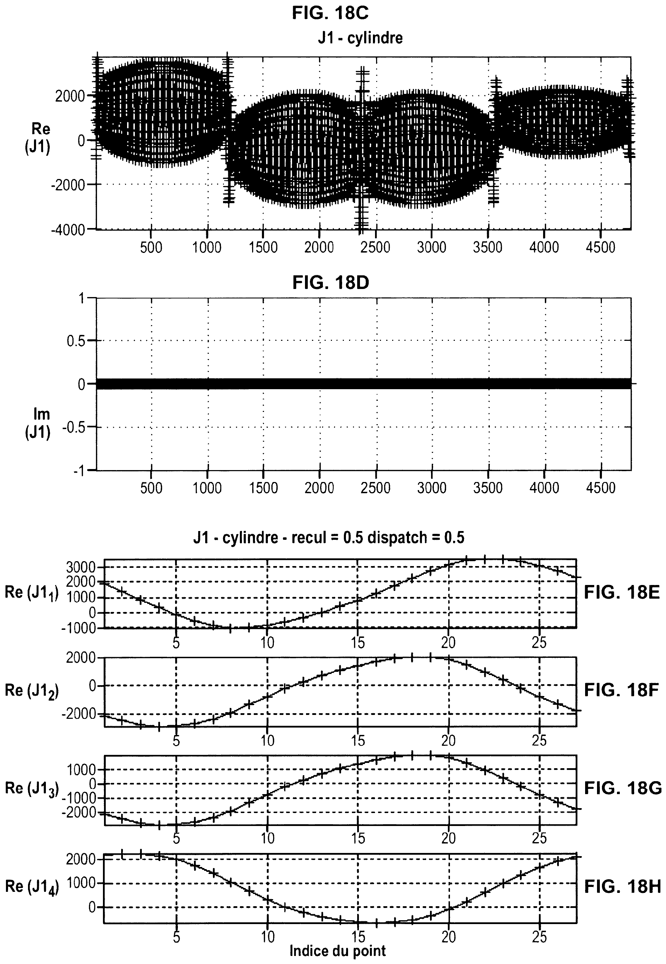

Les figures 18C à 18H représentent les sources (figures 18C et 18D : sources rotationnelles selon X et Y; figures 18E, 18F, 18G, 18H: sources scalaires selon 1 tranche du cylindre en commençant en haut, où l'abscisse est l'indice du point dans le maillage de point sur l'objet correspondant et l'ordonnée est le flux de la source).

Dans une autre variante des cas 9 est 10, il est prévu comme source S de fluide, en association avec chaque premier point test P1 trois sources S scalaires de fluide et une source SR rotationnelle de de fluide, pour les conditions L aux limites ayant au premier point test P1 une composante normale de vitesse du fluide et une composante tangentielle de vitesse du fluide, qui sont nulles à l'interface I, et en au moins un autre point test P5 prescrit de la surface SCL délimitant une couche limite CL de l'écoulement de fluide par rapport à l'interface I une composante normale nulle de vitesse à la surface SCL délimitant la couche limite CL de l'écoulement de fluide F.

Cas 11, 12, 13

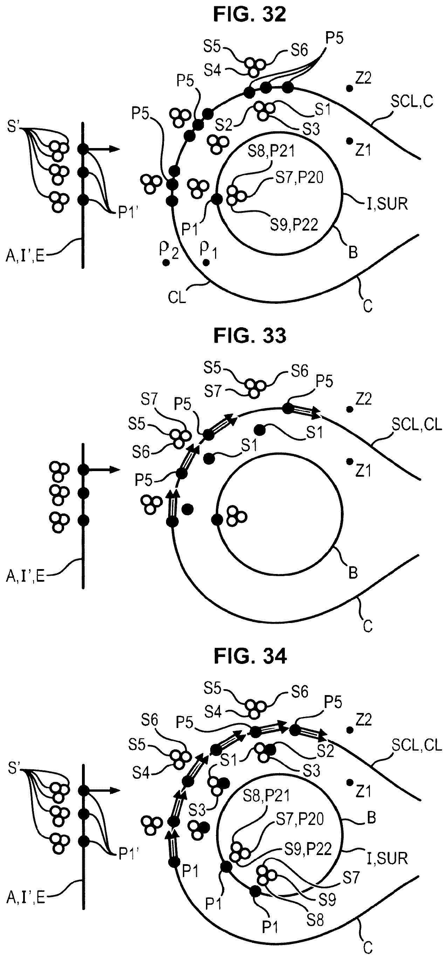

Suivant un mode de réalisation, représenté aux figures 32, 33, 34, il est prévu comme source S de fluide au moins une septième source S7 de force en association à chaque premier point test P1, pour la condition L aux limites ayant à chaque premier point test P1 une composante normale de vitesse du fluide et une composante tangentielle de vitesse du fluide, qui sont nulles à l'interface I.

Chacun des modes de réalisation et des variantes des cas 11, 12 et 13 est par exemple combiné avec le premier mode de réalisation sous-jacent précité (source S7 et/ou S8 et/ou S9 située en dessous de la surface imperméable SUR du solide de l'interface I et de l'autre côté de l'écoulement de fluide F et/ou source S' située en dessous de l'interface I' et de l'autre côté de l'écoulement de fluide F), ce qui est le cas ci-dessous. L'interface I est par exemple un objet B. L'interface I' est par exemple un objet A ou E précité. Dans chacun des modes de réalisation des cas 11, 12 et 13, il peut être prévu une seule, deux ou trois sources de force (S7 et/ou S8 et/ou S9) en association avec chaque premier point test P1.

Il peut être prévu en plus dans chacun de ces mode de réalisation au moins une (par exemple une seule ou deux ou trois) source S' scalaire de débit massique de fluide associée à chaque premier point test P1' d'une deuxième interface I' distincte de la première interface I.

Ces cas 11, 12 et 13 peuvent être utilisés pour un fluide incompressible pour un nombre de Reynolds faible, c'est-à-dire inférieur ou égal à 2000. On prend en compte les termes de viscosité.

Cas 11

Suivant un mode de réalisation, représenté à la figure 32, il est prévu comme source S de fluide:

- en association avec chaque premier point test P1 de l'interface I au moins trois septième, huitième et neuvième sources S7, S8, S9 de force, situées en des deuxième points P20, P21, P22, qui sont distincts de l'interface I,
- en association avec au moins un autre point test P5 prescrit de la surface SCL délimitant une couche limite CL de l'écoulement de fluide par rapport à l'interface I, en dessous de la surface SCL délimitant la couche limite CL du côté de l'interface I, trois première, deuxième et troisième sources S1, S2, S3 de force, et
- en association avec le au moins autre point test prescrit de la surface SCL délimitant une couche limite CL de l'écoulement de fluide par rapport à l'interface I, au-dessus de la surface SCL délimitant la couche limite CL trois quatrième, cinquième et sixième sources S4, S5, S6 de force,

  pour les conditions L aux limites ayant au premier point test P1 une composante normale de vitesse du fluide F et une composante tangentielle de vitesse du fluide F, qui sont nulles à l'interface I, et à l'autre point test P5 une composante normale de vitesse du fluide F nulle à la surface SCL délimitant la couche limite CL de l'écoulement de fluide F et une continuité de la composante tangentielle de la vitesse du fluide F à la surface délimitant la couche limite CL.

La première source S1 de force et/ou la deuxième source S2 de force et/ou la troisième source S3 de force est donc située dans la première zone intérieure Z1. La quatrième source S4 de force et/ou la cinquième source S5 de force et/ou la sixième source S6 de force est donc située dans la deuxième zone extérieure Z2.

Des exemples sont : cylindre en rotation ou fixe dans un écoulement, avec prise en compte de l'effet de sol pour illuster le fait que le procédé permet une analyse des interactions entre objets. Les sources élémentaires S7, S8, S9 sont des triplets vectoriels dont l'unité est homogène à une force (en N), ce qui est logique puisque apparaît la notion de pertes par frottement, donc de traînée.

Par exemple, à nombre de Reynolds faibles,

$$v = \begin{pmatrix} v^x \\ v^y \\ v^z \end{pmatrix} = \frac{1}{8.\pi.\mu} \begin{pmatrix} \frac{(x_i-x_j)}{R_{ij}} & 0 & 0 \\ 0 & \frac{(y_i-y_j)}{R_{ij}} & 0 \\ 0 & 0 & \frac{(z_i-z_j)}{R_{ij}} \end{pmatrix} \begin{pmatrix} \lambda_x \\ \lambda_y \\ \lambda_z \end{pmatrix} + \frac{1}{8.\pi.\mu} \begin{pmatrix} \frac{(x_i-x_j).(x_i-x_j)}{R_{ij}^3} & \frac{(x_i-x_j).(y_i-y_j)}{R_{ij}^3} & \frac{(x_i-x_j).(z_i-z_j)}{R_{ij}^3} \\ \frac{(y_i-y_j).(x_i-x_j)}{R_{ij}^3} & \frac{(y_i-y_j).(y_i-y_j)}{R_{ij}^3} & \frac{(y_i-y_j).(z_i-z_j)}{R_{ij}^3} \\ \frac{(z_i-z_j).(x_i-x_j)}{R_{ij}^3} & \frac{(z_i-z_j).(y_i-y_j)}{R_{ij}^3} & \frac{(z_i-z_j).(z_i-z_j)}{R_{ij}^3} \end{pmatrix} \begin{pmatrix} \lambda_x \\ \lambda_y \\ \lambda_z \end{pmatrix} = k_{ij} \begin{pmatrix} \lambda_x \\ \lambda_y \\ \lambda_z \end{pmatrix}$$

$$p = \frac{1}{4.\pi} \begin{pmatrix} \frac{(x_i-x_j)}{R_{ij}} & \frac{(y_i-y_j)}{R_{ij}} & \frac{(z_i-z_j)}{R_{ij}} \end{pmatrix} . \begin{pmatrix} \lambda_x \\ \lambda_y \\ \lambda_z \end{pmatrix} = p_{ij} \begin{pmatrix} \lambda_x \\ \lambda_y \\ \lambda_z \end{pmatrix}$$

Par exemple, sur chaque point test P5 de la surface SCL, on pose 2 conditions (Egalité de la pression et de la normale).

On a par exemple 3 points test P5 pour chaque bloc de 6 sources S1, S2, S3, S4, S5, S6 de la surface SCL de la couche limite. La matrice M globale de résolution exprimant la pression est P en stokeslets et M en scalaire est :

$$\begin{pmatrix} V_0 \\ \rho_2 V_{Cext}^N - \rho_1 V_{Cint}^N = 0 \\ p_2 - p_1 = 0 \\ V_B = 0 \end{pmatrix} = \begin{pmatrix} Q_{AA} & 0 & K_{ACsi} & 0 \\ \rho_2 Q_{CA}^N & -\rho_1 K_{CCse} & \rho_2 K_{CCsi} & -\rho_1 K_{CB} \\ M_{CA} & P_{CCse} & P_{CCsi} & P_{CB} \\ 0 & K_{BCse} & 0 & K_{BB} \end{pmatrix} . \begin{pmatrix} \lambda_A \\ \lambda_{cse} \\ \lambda_{csi} \\ \lambda_A \end{pmatrix}$$

Cas 12

Suivant un mode de réalisation, représenté à la figure 33, il est prévu comme source S de fluide:

- en association avec chaque premier point test P1 de l'interface I au moins une septième source S7 de force,
- en association avec au moins un autre point test P5 prescrit de la surface SCL délimitant une couche limite CL de l'écoulement de fluide par rapport à l'interface I, en dessous de la surface SCL délimitant la couche limite CL du côté de l'interface I, une première source S1 scalaire de fluide, et
- en association avec le au moins autre point test P5 prescrit de la surface SCL délimitant une couche limite CL de l'écoulement de fluide par rapport à l'interface I, au-dessus de la surface SCL délimitant la couche limite CL au moins une quatrième source S4 de force,
  pour les conditions L aux limites ayant au premier point test P1, une composante normale de vitesse du fluide F et une composante tangentielle de vitesse du fluide F, qui sont nulles à l'interface I, et à l'autre point test P5 une composante normale de vitesse du fluide F nulle à la surface SCL délimitant la couche limite CL de l'écoulement de fluide F et une continuité de la composante tangentielle de la vitesse du fluide F à la surface délimitant la couche limite CL.

Suivant un mode de réalisation, représenté à la figure 33, il est prévu comme source S de fluide:

- en association avec chaque premier point test P1 de l'interface I au moins trois septième, huitième et neuvième sources S7, S8, S9 de force, situées en des deuxième points P20, P21, P22 qui sont distincts de l'interface I,
- en association avec au moins un autre point test P5 prescrit de la surface SCL délimitant une couche limite CL de l'écoulement de fluide par rapport à l'interface I, en dessous de la surface SCL délimitant la couche limite CL du côté de l'interface I, une première source S1 scalaire de fluide, et
- en association avec le au moins autre point test P5 prescrit de la surface SCL délimitant une couche limite CL de l'écoulement de fluide par rapport à l'interface I, au-dessus de la surface SCL délimitant la couche limite CL des quatrième, cinquième et sixième sources S4, S5, S6 de force,

pour les conditions L aux limites ayant au premier point test P1, une composante normale de vitesse du fluide F et une composante tangentielle de vitesse du fluide F, qui sont nulles à l'interface I, et à l'autre point test P5 une composante normale de vitesse du fluide F nulle à la surface SCL délimitant la couche limite CL de l'écoulement de fluide F et une continuité de la composante tangentielle de la vitesse du fluide F à la surface délimitant la couche limite CL.

La première source S1 scalaire de fluide est donc située dans la première zone intérieure Z1. La quatrième source S4 de force et/ou, la cinquième source S5 de force et/ou la sixième source S6 de force sont donc situées dans la deuxième zone extérieure Z2.

Les cas 12 et 13 peuvent être utilisés pour un nombre de Reynolds faible dans la couche limite, c'est-à-dire dans la première zone Z1 située entre la surface SCL et l'interface I, où le nombre de Reynolds est inférieur ou égal à 2000, et un nombre de Reynolds élevé au-delà, c'est-à-dire dans la deuxième zone Z2 située au-dessus de la surface SCL et située de l'autre côté par rapport à l'interface I, où le nombre de Reynolds est supérieur ou égal à 3000. Dans la zone Z1, on peut négliger les termes de viscosité et on prend les fonctions harmoniques en 1/R et leurs dérivées. Dans la zone Z2, on prend en compte les termes de viscosité et on utilise comme fonctions de Green les Stokeslet. On considère par exemple un fluide incompressible. Les conditions de raccord à la frontière SCL de la couche limite sont traitées comme des interfaces classiques en DPSM, avec des séries de sources ponctuelles de part et d'autre de cette surface SCL ou bien comme cela a été réalisé dans les cas précédents, toutes les sources sont à l'intérieur de l'interface I ou profil I.

La matrice M globale de résolution est :

$$
\begin{pmatrix} V_0 \\ V_{Cext}^{4/3} - V_{C\text{int}}^{4/3} = 0 \\ V_B = 0 \end{pmatrix} = \begin{pmatrix} Q_{AA} & 0 & Q_{AC_1} & 0 \\ Q_{CA} & K_{CC} & -Q_{CC_1} & -K_{CB} \\ 0 & K_{BC} & 0 & K_{BB} \end{pmatrix} \cdot \begin{pmatrix} \lambda_A \\ \lambda_{Cs} \\ \lambda_{C1} \\ \lambda_B \end{pmatrix}
$$

de dimension :

$$
\dim = \begin{pmatrix} 3n_A \times 3n_A & 3n_A \times 3n_C & 3n_A \times n_C & 3n_B \times 3n_B \\ 4n_C \times 3n_A & 4n_C \times 3n_C & 4n_C \times n_C & 4n_C \times 3n_B \\ 3n_B \times 3n_A & 3n_B \times 3n_C & 3n_B \times n_C & 3n_B \times 3n_B \end{pmatrix} = (3n_A + 4n_C + 3n_B) \times (3n_A + 3n_C + n_C + 3n_B)
$$

<u>Cas 13</u>

Suivant un mode de réalisation, représenté à la figure 34, il est prévu comme source S de fluide:

- en association avec chaque premier point test P1 de l'interface I au moins une septième source S7 de force,
- en association avec au moins un autre point test prescrit P5 de la surface SCL délimitant une couche limite CL de l'écoulement de fluide par rapport à l'interface I, en dessous de la surface SCL délimitant la couche limite CL du côté de l'interface I, au moins une première source S1 scalaire de fluide et au moins une deuxième source rotationnelle S2 de fluide,
- en association avec le au moins autre point test prescrit P5 de la surface SCL délimitant une couche limite CL de l'écoulement de fluide par rapport à l'interface I, au-dessus de la surface SCL délimitant la couche limite CL des quatrième, cinquième et sixième sources S4, S5, S6 de force,
  pour les conditions L aux limites ayant au premier point test P1 une composante normale de vitesse du fluide F et une composante tangentielle de vitesse du fluide F, qui sont nulles à l'interface I, et à l'autre point test P5 une composante normale de vitesse du fluide F nulle à la surface SCL délimitant la couche limite CL de l'écoulement de fluide F et une continuité de la composante tangentielle de la vitesse du fluide F à la surface SCL délimitant la couche limite CL.

Suivant un mode de réalisation, il est prévu comme source S de fluide:

- en association avec chaque premier point test P1 de l'interface I au moins trois septième, huitième et neuvième sources S7, S8, S9 de force, situées en des deuxième points P20, P21, P22 qui sont distincts de l'interface I,
- en association avec au moins un autre point test P5 prescrit de la surface SCL délimitant une couche limite CL de l'écoulement de fluide par rapport à l'interface I, en dessous de la surface SCL délimitant la couche limite CL du côté de l'interface I, une première source S1 scalaire de fluide, une deuxième source rotationnelle S2 de fluide et une troisième source S3 de fluide, scalaire ou rotationnelle,
- en association avec le au moins autre point test P5 prescrit de la surface SCL délimitant une couche limite CL de l'écoulement de fluide par rapport à l'interface I, au-dessus de la surface SCL délimitant la couche limite CL, trois quatrième, cinquième et sixième sources S4, S5, S6 de force,

pour les conditions L aux limites ayant au premier point test P1 une composante normale de vitesse du fluide F et une composante tangentielle de vitesse du fluide F, qui sont nulles à l'interface I, et à l'autre point test P5 une composante normale de vitesse du fluide F nulle à la surface SCL délimitant la couche limite CL de l'écoulement de fluide F et une continuité de la composante tangentielle de la vitesse du fluide F à la surface SCL délimitant la couche limite CL.

Par exemple, il est représenté à la figure 34 la troisième source S3 de fluide, scalaire.

La première source S1 scalaire de fluide et/ou la deuxième source rotationnelle S2 de fluide et/ou la troisième source S3 de fluide, scalaire ou rotationnelle, est donc située dans la première zone intérieure Z1. La quatrième source S4 de force et/ou la cinquième source S5 de force et/ou la sixième source S6 de force sont donc situées dans la deuxième zone extérieure Z2.

Ainsi, on superpose à un ensemble de conditions limites L pris en un maillage de points test (premier point P1) répartis à la surface SUR de l'interface I, un autre ensemble de conditions aux limites L pris en un maillage de points tests P5 répartis à la surface SCL de la couche limite CL. On appelle cette superposition "conditions aux limites stratifiées". L'introduction de conditions aux limites stratifiées permet de tenir compte du problème de la couche limite CL. Par exemple, au contact d'un profil d'aile, la vitesse normale est nulle (l'aile est une surface SUR imperméable au fluide F), mais la vitesse tangentielle du fluide F s'annule également (à cause de la viscosité). Au-delà de la couche limite CL dans laquelle ce phénomène de viscosité se fait sentir, le fluide F se comporte comme un fluide parfait, et à la surface SCL délimitant la couche limite CL, seule la composante normale de la vitesse est nulle. Ces conditions aux limites L permettent de prendre des conditions aux limites vectorielles à la surface SUR de l'interface I, auxquelles on superpose les conditions aux limites scalaires à la surface SCL de la couche limite CL (exemple : composante normale de la vitesse nulle à la surface SCL de la couche limite CL).

En variante aux cas 11, 12 et 13, il est prévu comme source S de fluide, en association avec chaque premier point test P1, une source S scalaire de fluide et trois sources S7, S8, S9 de force, pour les conditions L aux limites ayant au premier point test P1 une composante normale de vitesse du fluide et une composante tangentielle de vitesse du fluide, qui sont nulles à l'interface I, et en au moins un autre point test P5 prescrit de la surface SCL délimitant une couche limite CL de l'écoulement de fluide par rapport à l'interface I une composante normale nulle de vitesse du fluide à la surface SCL délimitant la couche limite CL de l'écoulement de fluide F et une continuité de la composante tangentielle de la vitesse du fluide à la surface SCL délimitant la couche limite CL.

La matrice M globale de résolution est :

$$\begin{pmatrix} V_0 \\ V_{Cext}^{6/3} - V_{Cint}^{6/3} = 0 \\ V_B = 0 \end{pmatrix} = \begin{pmatrix} Q_{AA} & 0 & H_{AC_h}^3 & 0 \\ Q_{CA} & K_{CC} & -H_{CC_h}^3 & -K_{CB} \\ 0 & K_{BC} & 0 & K_{BB} \end{pmatrix} \cdot \begin{pmatrix} \lambda_A \\ \lambda_{Cs} \\ \lambda_{Ch} \\ \lambda_B \end{pmatrix}$$

Dans les cas 11, 12 et 13, la source S5 et/ou S6 et/ou S7 située dans la zone extérieure Z2 envoie du fluide dans la zone intérieure Z1 au travers de la surface SCL, tandis que la source S1 et/ou S2 et/ou S3 située dans la zone intérieure Z1 envoie du fluide dans la zone extérieure Z2 au travers de la surface SCL.

Dans les cas 11, 12 et 13, les conditions aux limites peuvent comprendre la conservation de la pression de fluide à l'autre point test P5 et la conservation, à l'autre point test P5, de la composante normale de la vitesse modulo la masse volumique.

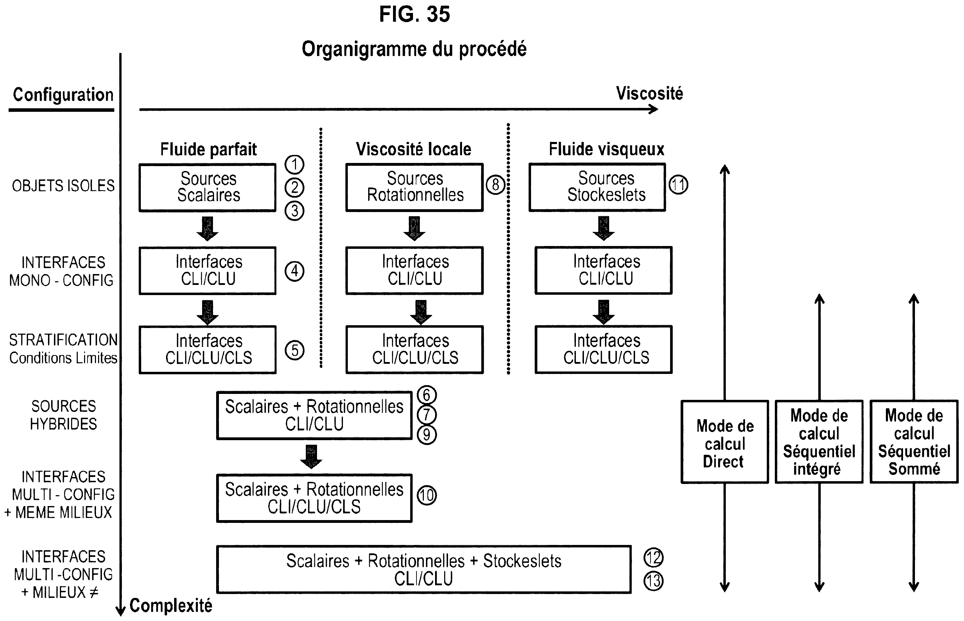

Les 13 cas précités sont récapitulés sur l'organigramme représenté sur la figure 35.

D'une manière générale ci-dessus, le nombre de points tests P1 et/ou P5 et/ou P1' et/ou le nombre de conditions aux limites L est adapté pour que la matrice globale M de résolution soit carrée et pour qu'ainsi le nombre d'équations reste égal au nombre d'inconnues. Par exemple, à la figure 32, on choisit trois points tests P5 pour chaque groupe de sources S1, S2, S3, S4, S5, S6. Par exemple, à la figure 33, il y a un rapport de 4/3 entre le nombre de points tests P5 et le nombre de blocs de sources S5, S6, S7, S1. Par exemple, à la figure 32, on choisit trois points tests P5 pour chaque groupe de sources S1, S2, S3, S4, S5, S6. Par exemple, à la figure 34, il y a un rapport de 6/3 entre le nombre de points tests P5 et le nombre de blocs de sources S5, S6, S7, S1, S2, S3.

En aéronautique, un cas très intéressant est celui dans lequel l'environnement aérologique où la position de l'avion change brutalement (variation d'angle d'incidence avion, rafale latérale ou verticale, gradient de vent, etc). Suivant un mode de réalisation, ce cas est représenté par une simple modification des conditions aux limites L (vecteur C), la matrice inverse de M ne change pas, et on obtient une nouvelle valeur des sources S quasi instantanément. Dans l'exemple précité de l'avion, lorsque ce dernier s'incline, chaque point test P3 placé sur le maillage de l'avion se déplace avec un vecteur différent: la vitesse horizontale de l'avion et la vitesse en chaque point liée au mouvement de roulis deviennnent les nouvelles conditions aux limites de l'avion.

Les applications sont nombreuses:

- Modélisation de tout ou partie d'un avion afin de mieux restituer son comportement en simulateur de vol ou optimiser le fonctionnement des pilotes automatiques ; optimisation des profils aéronautiques en vue de diminuer les trâinées et l'amélioration des algorithmes de fonctionnement des simulateurs de vol et l'entraînement des pilotes ;
- Prise en compte de l'influence mutuelle de plusieurs objets I comme par exemple la modélisation de l'effet de sol éventuellement en présence d'un gradient de vent (en vitesse et en direction), du fuselage ou du couple aile empennage ;
- Optimisation de profils par injection d'écoulements d'air à certains endroits précis, ce qui nécessite une modélisation complexe ;
- Analyse fine des profils d'ailes pour diminuer la trainée et ainsi réduire la consommation de carburant des avions, cette diminution ayant un impact sur le coût d'exploitation et sur le bilan carbone des vols,
- hydrodynamique, domaine maritime.

Les grandeurs peuvent ensuite être calculées facilement dans tout l'espace de travail et les différents objets peuvent être placés en interaction. Par ailleurs, le fait de faire coexister des sources de natures différentes (rotationnelles et scalaires) qui interagissent mutuellement permet de fournir une solution précise aux problèmes traités. Un autre avantage est d'associer des conditions limites supplémentaires, éloignées des points tests P1 positionnés à la surface SUR de l'interface I, ce qui permet de donner une bonne représentation des phénomènes également dans la zone proche de l'interface I (induisant une possible restitution des phénomènes de frottement dans la couche limite CL).

L'invention permet notamment de modéliser tout ou partie d'un avion, afin de mieux restituer son comportement en simulateur de vol ou optimiser le fonctionnement des pilotes automatiques.

Le procédé de mesure et/ou dispositif de mesure peut ainsi être embarqué sur un aéronef, tel que par exemple un avion ou un hélicoptère, ou sur un simulateur de vol, ou sur un navire, ou plus généralement un véhicule de transport automoteur, pour y être mis en œuvre.

Ainsi, un autre objet de l'invention peut être un procédé de commande et ou un dispositif de commande pour commander un aéronef, tel que par exemple un avion ou un hélicoptère, ou un simulateur de vol, ou un navire, ou plus généralement un véhicule de transport automoteur, dans lequel il est prévu une étape de calcul, dans laquelle on calcule à partir de la grandeur physique ayant été calculée par le procédé de mesure et/ou dispositif de mesure, au moins une grandeur de commande par un calculateur embarqué sur l'aéronef, simulateur de vol, navire ou véhicule de transport automoteur. Dans ce qui précède l'actionneur peut être un de ceux de cet aéronef, avion, hélicoptère, simulateur de vol, navire, ou plus généralement d'un véhicule de transport automoteur.

L'invention permet de prendre en compte l'influence mutuelle de plusieurs objets comme, par exemple, la modélisation de l'effet de sol éventuellement en présence d'un gradient de vent (en vitesse et en direction), du fuselage ou du couple aile/empennage.

L'invention permet également une analyse fine des profils d'ailes pour diminuer la traînée et ainsi réduire la consommation de carburant des avions. Cette diminution a un impact sur le coût d'exploitation et sur le bilan carbone des vols.

Suivant un mode de réalisation, les moyens de calculs sont aptes à calculer des grandeurs macroscopiques (portance, traînée) et permettent de tenir compte de non linéarités nécessaires au calcul de courbes polaires au-delà du décollement de la couche limite.

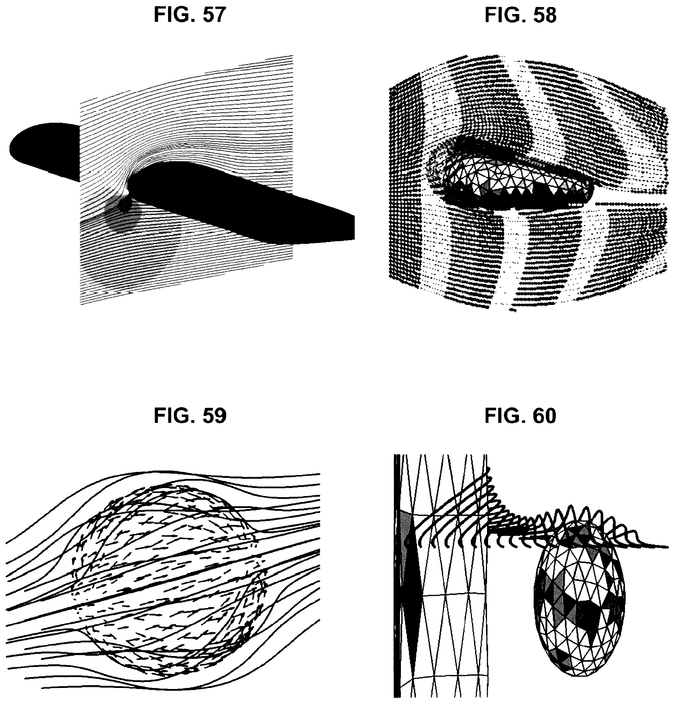

Ainsi, la figure 56 montre un exemple de calcul de portance réalisé par le dispositif de calcul suivant l'invention dans l'exemple 1, et ce pour une surface SUR formée par une aile d'avion du type Naca0012 symétrique. Sa polaire est une quasi-droite s'infléchissant pour des incidences fortes avant d'atteindre le point de décrochage. La portance CZ maximum varie en fonction de l'allongement de l'aile et du nombre de Reynolds. La modélisation DPSM est nativement 3D et permet de modéliser n'importe quelle géométrie en explicitant les conditions aux limites. Il est possible de modéliser un profil d'aile ou un avion complet. Les figures 57 et 58 montrent respectivement la pression et l'écoulement selon le temps autour d'une aile d'avion du type Naca4430, calculés par le dispositif suivant l'invention dans l'exemple 1. Les figures 59 et 60 montrent respectivement la vitesse d'un écoulement tridimensionnel d'air autour d'une sphère isolée et la vitesse de l'air le long d'une paroi (pour illustrer un effet Venturi), calculés par le dispositif suivant l'invention dans l'exemple 1.

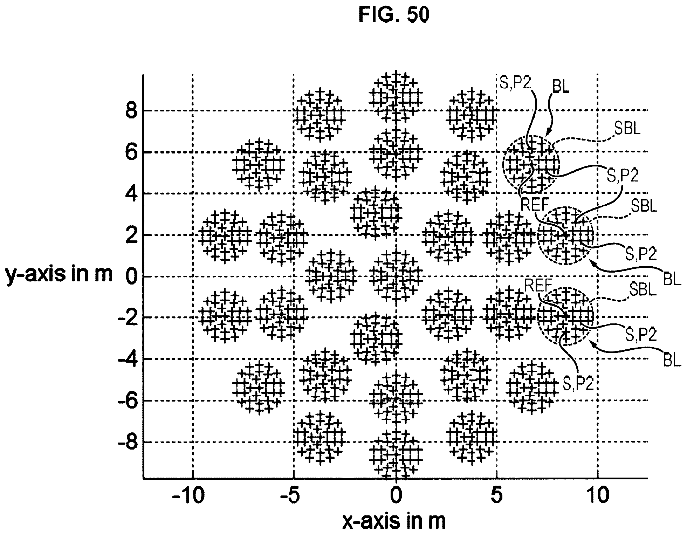

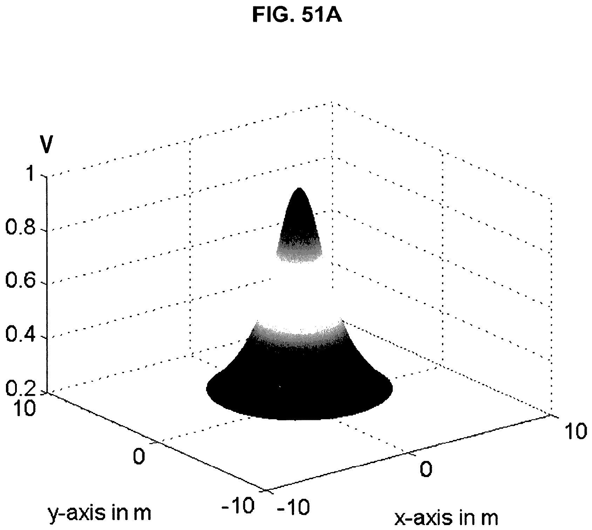

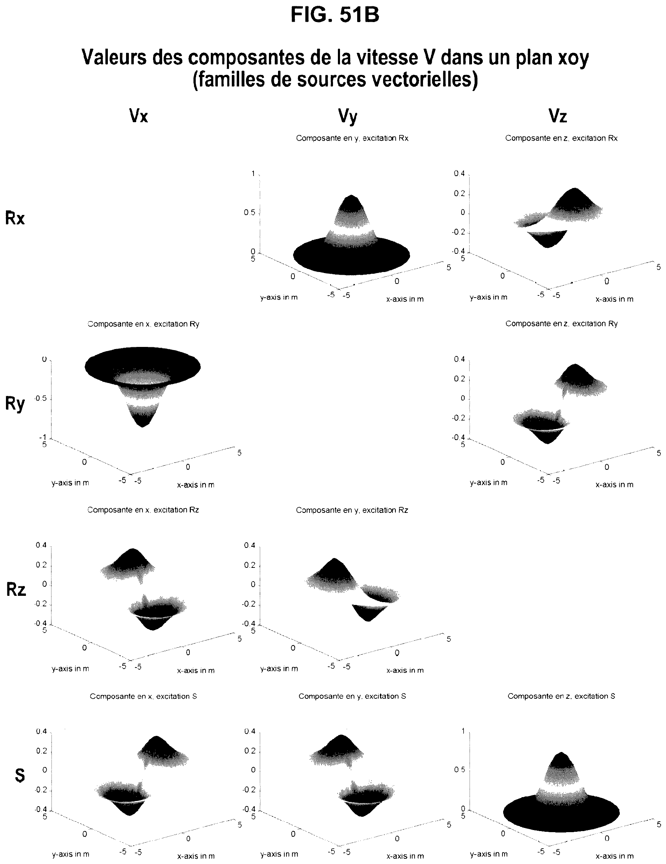

On décrit ci-dessous des modes de réalisation de l'invention en référence aux figures 50 et 51.

Suivant un mode de réalisation, il peut être prévu, en association avec une pluralité de premiers points tests P1, une pluralité de groupes ou blocs BL comprenant chacun une ou plusieurs sources S, situées à distance du premier point test P1 et positionnées dans le bloc BL en des positions P2 distinctes les unes des autres et déterminées. Les sources S sont représentées par des croix à la figure 50. Ces blocs BL de sources S sont par exemple répartis de chaque côté de la surface SUR et/ou SCL. Pour mémoire, ces blocs sources peuvent contenir chacun une source ponctuelle scalaire unique S, un triplet de sources scalaires (Sa, Sb, Sc), un triplet vectoriel (Rx, Ry, Rz), un hybride (Rx, Ry, S), des sources de force (Stoklets), etc...

Suivant un mode de réalisation, chaque bloc BL est défini par une surface SBL associée (ou un volume associé SBL) contenant toutes les sources S du bloc BL, les surfaces ou volumes SBL des bloc BL étant disjoints entre eux. En outre, chaque bloc BL a un point de référence REF associé et déterminé, différent entre les blocs BL et contenu dans sa surface ou volume SBL. La surface SBL peut correspondre à une surface élémentaire de maillage.

Suivant un mode de réalisation, chaque bloc BL de sources contient, dans sa surface ou volume SBL, une famille $A_j$ de sources S, $\lambda_j$ chacune pondérées par un quantum associé $q_f$ prédéterminé, pour f étant un entier naturel allant de 1 à $F \geq 2$, F étant un entier naturel associé à chaque bloc BL.

Les quantums $q_f$ peuvent être égaux d'un bloc à l'autre, c'est-à-dire communs à plusieurs blocs BL. On peut donc avoir dans ce cas un modèle commun de résultante (débit massique de fluide ou force par exemple) de référence, qui est le même pour toutes les familles de sources.

On a donc une famille de quantums $q_f$ pour chaque bloc BL, c'est-à-dire pour chaque surface ou volume SBL. Le vecteur q est composé des F quantums $q_f$, qui sont calculés de manière à fonctionnaliser la résultante (débit massique de fluide ou force par exemple) de chaque famille. Par exemple, la somme des quantums $q_f$ pour f allant de 1 à F est égale à 1.

Par exemple, chaque bloc BL de sources contient une famille $A_j$ de sources S, $\lambda_j$ telle que :

$$A_j = \lambda_j \mathbf{q} = \lambda_j [q_1 \quad q_2 \quad q_3 \quad \cdots \quad q_{(F-1)} \quad q_F]^T.$$

Suivant un mode de réalisation, chaque quantum $q_f$ est une fonction dépendant des coordonnées relatives P2 de chaque source S du bloc BL par rapport au point de référence REF déterminé de ce bloc BL.

La qualité des résultats, notamment la régularité des grandeurs calculées en champ proche dépend du nombre de sources et les temps de calcul augmentent selon le carré de ce nombre. Grâce à la famille de sources, il est possible d'augmenter le nombre total de sources sans augmenter les temps de calcul.

Par exemple, on recherchera une amplitude gaussienne de la grandeur physique (vitesse ou pression) à la surface de l'objet située au-dessus du bloc source BL. On peut donc voir cette famille de sources comme une source équivalente dotée d'un diagramme de flux fluidique ou de force particulier. Le cas d'un module V de la vitesse, qui est gaussien en 2 dimensions est représenté à la figure 51A. Ensuite, la résolution du problème est traitée de façon classique en DPSM : en additionnant l'ensemble des contributions de ces familles, on obtient l'équation ci-dessous. Bien entendu, l'une des composantes du vecteur vitesse pourrait comporter une fonction dépendant des coordonnées relatives P2 de chaque source S du bloc BL par rapport au point de référence REF déterminé de ce bloc BL, pouvant être par exemple une gaussienne.

Par inversion de la matrice de taille F*F (on a évidemment pris F points test pour définir la fonction de référence), on obtient la valeur de chacune des sources élémentaire de la famille. Cette première étape est complètement indépendante du problème résolu ensuite. Tout ce qu'on veut, c'est avoir les valeurs des F quantums de la famille de sources. Dans l'équation suivante, ce sont les (q1,...,qF).

Dans un autre exemple, le quantum $q_f$ pourrait être une fonction gaussienne ou autre de la distance de chaque source S du bloc BL par rapport à son point de référence REF. Cette gaussienne est par exemple centrée sur le point REF de référence.

Le calcul se fait ensuite en calculant les matrices de couplage $m^j_{if}$, qui sont des matrices ligne de F éléments (f varie de 1 à F), entre le point test i et les F sources d'une famille logée au point source j. L'astuce est que la valeur des sources de la famille est leur quantum multiplié par le lambda habituel. Comme l'ensemble des quantums sont les mêmes pour chaque famille de sources, on peut écrire la matrice ainsi, et on n'a donc bien que M inconnues :

$$\begin{Bmatrix} v_{z1} \\ v_{z2} \\ v_{z3} \\ \vdots \\ v_{zM} \end{Bmatrix}$$

$$= \begin{bmatrix} (m_{11}^1 \ \dots \ m_{1F}^1) & (m_{11}^2 \ \dots \ m_{1F}^2) & \dots & (m_{11}^M \ \dots \ m_{1F}^M) \\ (m_{21}^1 \ \dots \ m_{2F}^1) & (m_{21}^2 \ \dots \ m_{2F}^2) & \dots & (m_{21}^M \ \dots \ m_{2F}^M) \\ (m_{31}^1 \ \dots \ m_{3F}^1) & (m_{31}^2 \ \dots \ m_{3F}^2) & \dots & (m_{31}^M \ \dots \ m_{3F}^M) \\ & \vdots & & \vdots \\ (m_{M1}^1 \ \dots \ m_{MF}^1) & (m_{M1}^2 \ \dots \ m_{MF}^2) & \dots & (m_{M1}^M \ \dots \ m_{MF}^M) \end{bmatrix} \begin{Bmatrix} \lambda_1 \begin{pmatrix} q_1 \\ \vdots \\ q_F \end{pmatrix} \\ \lambda_2 \begin{pmatrix} q_1 \\ \vdots \\ q_F \end{pmatrix} \\ \vdots \\ \lambda_M \begin{pmatrix} q_1 \\ \vdots \\ q_F \end{pmatrix} \end{Bmatrix}$$

Cette formulation crée une matrice de dimension $(MxF)^2$. Mais comme les facteurs $q_f$ ont été prédéfinis lors de la fonctionnalisation de la famille, on peut les distribuer dans la matrice de résolution avant de l'inverser. On obtient alors la matrice :

$$\begin{bmatrix} (m_{11}^1 \ \dots \ m_{1F}^1) \begin{pmatrix} q_1 \\ \vdots \\ q_F \end{pmatrix} & (m_{11}^2 \ \dots \ m_{1F}^2) \begin{pmatrix} q_1 \\ \vdots \\ q_F \end{pmatrix} & \dots & (m_{11}^M \ \dots \ m_{1F}^M) \begin{pmatrix} q_1 \\ \vdots \\ q_F \end{pmatrix} \\ (m_{21}^1 \ \dots \ m_{2F}^1) \begin{pmatrix} q_1 \\ \vdots \\ q_F \end{pmatrix} & (m_{21}^2 \ \dots \ m_{2F}^2) \begin{pmatrix} q_1 \\ \vdots \\ q_F \end{pmatrix} & \dots & (m_{21}^M \ \dots \ m_{2F}^M) \begin{pmatrix} q_1 \\ \vdots \\ q_F \end{pmatrix} \\ (m_{31}^1 \ \dots \ m_{3F}^1) \begin{pmatrix} q_1 \\ \vdots \\ q_F \end{pmatrix} & (m_{31}^2 \ \dots \ m_{3F}^2) \begin{pmatrix} q_1 \\ \vdots \\ q_F \end{pmatrix} & \dots & (m_{31}^M \ \dots \ m_{3F}^M) \begin{pmatrix} q_1 \\ \vdots \\ q_F \end{pmatrix} \\ & \vdots & & \vdots \\ (m_{M1}^1 \ \dots \ m_{MF}^1) \begin{pmatrix} q_1 \\ \vdots \\ q_F \end{pmatrix} & (m_{M1}^2 \ \dots \ m_{MF}^2) \begin{pmatrix} q_1 \\ \vdots \\ q_F \end{pmatrix} & \dots & (m_{M1}^M \ \dots \ m_{MF}^M) \begin{pmatrix} q_1 \\ \vdots \\ q_F \end{pmatrix} \end{bmatrix} \begin{Bmatrix} \lambda_1 \\ \lambda_2 \\ \vdots \\ \vdots \\ \lambda_M \end{Bmatrix}$$

On calcule préliminairement les produits internes de la matrice et on se retrouve avec une matrice de la même dimension que dans le cas du DPSM standard :

$$\begin{Bmatrix} v_{z1} \\ v_{z2} \\ v_{z3} \\ \vdots \\ v_{zM} \end{Bmatrix} = \begin{bmatrix} M_{11} & M_{12} & \dots & M_{1M} \\ M_{21} & M_{22} & \dots & M_{2M} \\ M_{31} & M_{32} & \dots & M_{3M} \\ & \vdots & & \vdots \\ M_{M1} & M_{M2} & \dots & M_{MM} \end{bmatrix} \begin{Bmatrix} \lambda_1 \\ \lambda_2 \\ \vdots \\ \vdots \\ \lambda_M \end{Bmatrix}$$

L'avantage est que le calcul en champ proche est beaucoup plus précis et cette méthode réduit considérablement les fluctuations des paramètres observés entre les points test de la surface. Le calcul en champ lointain reste inchangé par rapport au DPSM classique, la famille de source étant normalisée (somme des $q_f$ =1).

Familles de sources vectorielles : Il est à noter que, en lieu et place de chacun des quantums, on peut positionner tout type de sources plus complexe tel que rappelé ci-dessus. Chaque quantum $q_f$ de la famille est alors constitué de plusieurs sources élémentaires dont chacune reste pondérée par le même $q_f$. Le principe de résolution reste inchangé et on bénéficie toujours du lissage des grandeurs au voisinage des surfaces, ce qui est très intéressant pour le calcul dans les couches limites. La figure 51B donne un exemple des composantes de vitesse Vx, Vy, Vz obtenues avec des familles de sources Rx, Ry, Rz et S, fonctionnalisées pour que le module de leur vitesse soit gaussien telle que la figure 51A.

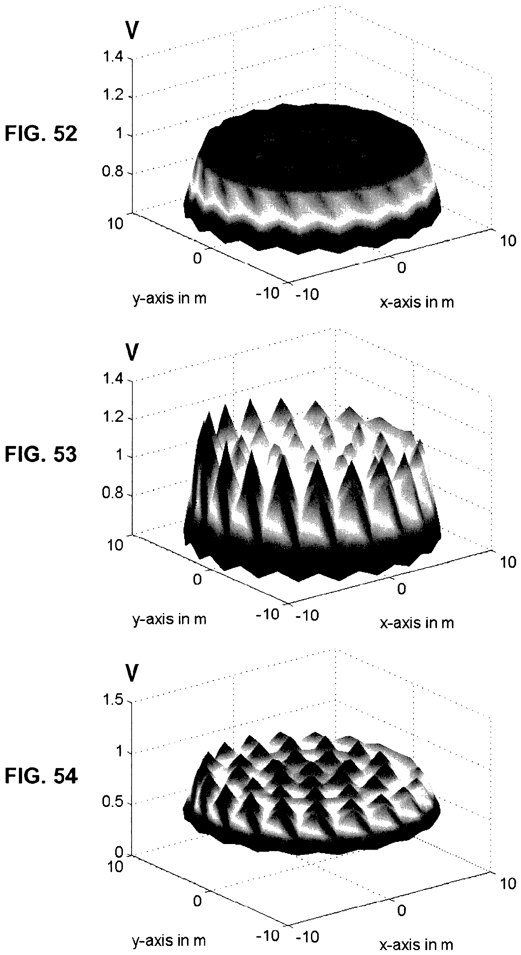

Une fois le problème résolu et les $\lambda_j$ calculés, on peut calculer les champs partout. Voici des exemples de calcul en module de la vitesse V. En champ proche : on applique la méthode et on tient compte de toutes les sources : les M*F sources rayonnent sur les M points de visualisation selon la figure 52. Le résultat est intéressant, surtout comparé aux figures 53 et 54.

En champ lointain, à la figure 53, on prend une source équivalente par famille N°j, de valeur $\lambda_j$ fois la somme des quantums. A comparer avec la figure 54, en DPSM classique.

La figure 52 montre donc qu'il y a beaucoup moins de discontinuités de la grandeur V calculée qu'aux figures 53 et 54.

Dans un autre mode de réalisation, la première source et la deuxième source ne sont pas différentes l'une de l'autre.

Dans un autre mode de réalisation, la ou les sources et/ou l'une des sources ou certaines sources, et/ou la première source ou plusieurs premières sources ou les premières sources, et/ou la deuxième source ou plusieurs deuxièmes sources ou les deuxièmes sources, ne sont pas distinctes de l'interface. Dans un autre mode de réalisation, lors de la deuxième étape E2, on prescrit la position d'au moins un troisième point P2 non distinct de l'interface I, en lequel se trouve au moins une source S de fluide.

Bien entendu, les modes de réalisation décrits ci-dessus peuvent être prévus en combinaison l'un avec l'autre ou peuvent être sélectionnés l'un indépendamment de l'autre.

## Revendications

1. Dispositif de mesure d'au moins une première grandeur physique (V, P) d'au moins un écoulement de fluide (F) dans un espace tridimensionnel ayant au moins une interface (I) prédéterminée, située entre au moins deux milieux (M1, M2), **caractérisé en ce que** le dispositif comporte :

   au moins un calculateur ayant des moyens (E) de prescription d'au moins deux première et deuxième conditions (L) aux limites concernant la première grandeur physique (V, P) de l'écoulement de fluide (F) prise au moins en un premier point test prédéterminé (P1) de l'interface (I), associées à respectivement au moins une première source et au moins une deuxième source, différentes l'une de l'autre et réparties respectivement en des positions prescrites, distinctes de l'interface (I),
   la première source et la deuxième source étant choisies parmi des sources ponctuelles de débit massique de fluide et/ou de force, le calculateur (CAL) ayant des moyens de calcul configurés pour calculer, par méthode de calcul des sources ponctuelles réparties, une première valeur de la première grandeur physique à partir de la première condition (L) aux limites et d'au moins la première source et au moins une deuxième valeur de la première grandeur physique à partir d'au moins la deuxième condition aux limites et d'au moins la deuxième source, en au moins un deuxième point (P) de l'espace, différent du premier point test (P1), puis pour combiner les valeurs obtenues respectivement à partir des conditions aux limites et sources afin de calculer la première grandeur physique.

2. Dispositif de mesure suivant la revendication 1, **caractérisé en ce que** l'interface (I) comprend au moins une surface (SUR) d'au moins un solide, imperméable au fluide (F), au moins une des sources (S) associée au premier point test (P1) étant située à distance du premier point test (P1) en dessous de la surface (SUR) du solide, de l'autre côté de l'écoulement de fluide (F), la source étant modélisée pour envoyer du fluide ou une force au travers de l'interface (I).

3. Dispositif de mesure suivant la revendication 1, **caractérisé en ce que** les moyens de prescription sont prévus pour prescrire en outre au moins une autre condition aux limites de l'écoulement de fluide en au moins un autre point éloigné d'une distance prescrite de l'interface (I) et un sens d'écoulement global prescrit de l'écoulement de fluide de ce point éloigné vers l'interface (I).

4. Dispositif de mesure suivant l'une quelconque des revendications précédentes, **caractérisé en ce que** la première source a une première orientation d'émission de fluide ou de force, et la deuxième source a une deuxième orientation d'émission de fluide ou de force qui est différente de la première orientation d'émission de fluide.

5. Dispositif de mesure suivant l'une quelconque des revendications précédentes, **caractérisé en ce que** la première source est ou comprend au moins une source ponctuelle de débit massique radial de fluide.

6. Dispositif de mesure suivant l'une quelconque des revendications précédentes, **caractérisé en ce que** la deuxième source est ou comprend au moins une source ponctuelle de débit massique rotationnel de fluide autour d'une direction déterminée.

7. Dispositif de mesure suivant l'une quelconque des revendications précédentes, **caractérisé en ce que** la deuxième source est ou comprend au moins une source ponctuelle de force.

8. Dispositif suivant l'une quelconque des revendications précédentes, **caractérisé en ce que** dans les moyens de calcul est enregistrée une matrice globale de résolution M, comportant au moins un coefficient ($M_{ij}$) dépendant à la fois d'une valeur prescrite caractérisant le fluide ($\rho$, $\mu$) et de la distance ($R_{ij}$) entre la première et/ou deuxième source (S) et un quatrième point (P) de l'espace,
le produit de la matrice globale de résolution M, prise aux premiers points test (P1) comme quatrième point (P) de l'espace, multipliée par un premier vecteur J des paramètres de la première et/ou deuxième source (S), étant égal à un deuxième vecteur C des conditions aux limites concernant la première grandeur physique (V) de l'écoulement de fluide prise aux premiers points test (P1), selon l'équation

$$C = M * J,$$

où $*$ désigne la multiplication,
il est prévu parmi les moyens de calcul :

- un moyen d'inversion de la matrice globale de résolution M, prise aux premiers points test (P1) comme quatrième point (P) de l'espace, pour calculer la matrice inverse $M^{-1}$,
- un moyen de calcul du premier vecteur J des paramètres de la première et/ou deuxième source (S) par multiplication de la matrice inverse $M^{-1}$ par le deuxième vecteur C des conditions aux limites de la première grandeur physique (V) de l'écoulement de fluide prise aux premiers points test (P1), selon l'équation

$$J = M^{-1} * C$$

- un moyen de calcul de la première grandeur physique (V, P) de l'écoulement de fluide (F) au deuxième point (P) de l'espace ayant une position déterminée, en multipliant la matrice globale de résolution M, calculée à ladite position déterminée du deuxième point (P) comme quatrième point (P), par le premier vecteur J des paramètres de la première et/ou deuxième source (S),
la valeur prescrite caractérisant le fluide étant la masse volumique $\rho$ du fluide et/ou la viscosité cinématique $\mu$ du fluide.

9. Dispositif de mesure suivant la revendication 8, **caractérisé en ce que** la matrice globale (M) de résolution comporte plusieurs coefficients, dont au moins un est égal à, pour au moins une source ponctuelle de débit massique de fluide comme première et/ou deuxième source (S) :

$$\pm(x_i-x_j)/(4.\pi.\rho.R_{ij}),$$

ou à

$$\pm(y_i-y_j)/(4.\pi.\rho.R_{ij})$$

ou à

$$\pm(z_i-z_j)/(4.\pi.\rho.R_{ij}),$$

ou à

$$\pm(x_i-x_j)/(4.\pi.\rho.R_{ij}^{3}),$$

ou à

$$\pm(y_i\text{-}y_j)/(4.\pi.\rho.R_{ij}^{3})$$

ou à

$$\pm(z_i\text{-}z_j)/(4.\pi.\rho.R_{ij}^{3}),$$

ou à

$1/(4.\pi.\rho.R_{ij})$, ou à l'un de ceux-ci, multiplié par une constante prescrite, par laquelle est divisée le premier vecteur (J) des paramètres de la sources (Sj) ponctuelle de débit massique de fluide, où $R_{ij}$ est la distance entre la source (Sj) ponctuelle de débit massique de fluide située au troisième point (P2) de position prescrite $x_j$, $y_j$, $z_j$ selon trois directions non coplanaires x, y et z de l'espace et le quatrième point (P) de l'espace ayant des coordonnées $x_i$, $y_i$, $z_i$ selon les trois directions x, y et z.

**10.** Dispositif de de mesure suivant la revendication 8 ou 9, **caractérisé en ce que** la matrice globale (M) de résolution comporte plusieurs coefficients, dont au moins un est égal à l'un parmi, pour au moins une source ponctuelle de force comme première et/ou deuxième source (S):

$$(x_i\text{-}x_j)/(8.\pi.\mu.R_{ij}),\ (y_i\text{-}y_j)/(8.\pi.\mu.R_{ij}),\ (z_i\text{-}z_j)/(8.\pi.\mu.R_{ij}),$$

$$(x_i\text{-}x_j)^{2}/(8.\pi.\mu.R_{ij}),\ (y_i\text{-}y_j)^{2}/(8.\pi.\mu.R_{ij}),(z_i\text{-}z_j)^{2}/(8.\pi.\mu.R_{ij}),$$

$$(x_i\text{-}x_j).(y_i\text{-}y_j)/(8.\pi.\mu.R_{ij}^{3}),\ (x_i\text{-}x_j).(z_i\text{-}z_j)/(8.\pi.\mu.R_{ij}^{3}),\ (z_i\text{-}z_j).(y_i\text{-}y_j)/(8.\pi.\mu.R_{ij}^{3}),$$

ou à l'un de ceux-ci, multiplié par une constante prescrite, par laquelle est divisée le premier vecteur (J) des paramètres de la source ponctuelle (Sj) de force, où $R_{ij}$ est la distance entre la source ponctuelle (Sj) de force située au troisième point (P2) de position prescrite $x_j$, $y_j$, $z_j$ selon trois directions non coplanaires x, y et z de l'espace et le quatrième point (P) de l'espace ayant des coordonnées $x_i$, $y_i$, $z_i$ selon les trois directions x, y et z.

**11.** Dispositif de mesure suivant l'une quelconque des revendications précédentes, **caractérisé en ce que** l'écoulement de fluide se situe dans l'air.

**12.** Dispositif de mesure suivant l'une quelconque des revendications précédentes, **caractérisé en ce que** le calculateur (CAL) comporte des troisièmes moyens de calcul d'une deuxième grandeur de commande d'un actionneur à partir au moins de la première grandeur physique (V, P) ayant été calculée.

**13.** Dispositif de mesure suivant l'une quelconque des revendications précédentes, **caractérisé en ce que** la première source est ou comprend au moins une source (S) ponctuelle de débit massique radial de fluide pour la première condition (L) aux limites ayant au premier point test (P1) une composante normale de vitesse du fluide au premier point test (P1), qui est nulle à l'interface (I) et/ou pour une autre condition aux limites prescrite ayant en au moins un autre point éloigné d'une distance prescrite de l'interface (I) une composante de vitesse prescrite.

**14.** Dispositif de mesure suivant la revendication 12, **caractérisé en ce que** la deuxième source est ou comprend au moins une source ponctuelle de débit massique rotationnel de fluide autour d'une direction déterminée, pour la deuxième condition (L) aux limites ayant au premier point test (P1) une composante de vitesse du fluide au premier point test (P1), qui est prescrite en étant non nulle et tangentielle à l'interface (I) et/ou pour une autre condition aux limites prescrite ayant en au moins un autre point éloigné d'une distance prescrite de l'interface (I) une composante de vitesse prescrite.

**15.** Dispositif de mesure suivant l'une quelconque des revendications précédentes, **caractérisé en ce que** le calculateur (CAL) comporte des deuxièmes moyens de calcul, à partir de la première grandeur physique (V, P) ayant été calculée, d'une propriété de l'interface (I) dans l'écoulement de fluide (F), différente de la première grandeur physique (V, P), la propriété étant la traînée induite par l'interface (I) dans l'écoulement de fluide (F) et/ou la portance de l'interface (I) dans l'écoulement de fluide (F) et/ou une force de frottement de l'interface (I) dans l'écoulement de fluide (F).

16. Dispositif de mesure suivant l'une quelconque des revendications précédentes, **caractérisé en ce que** la première condition aux limites est différente de la deuxième condition aux limites.

17. Dispositif de mesure suivant l'une quelconque des revendications précédentes, **caractérisé en ce que** les moyens de calcul sont configurés pour combiner la première valeur et la deuxième valeur par addition fournissant la première grandeur physique.

18. Dispositif de mesure suivant l'une quelconque des revendications précédentes, **caractérisé en ce que** les moyens de calcul sont configurés pour calculer la deuxième valeur à partir de la première source et de la deuxième source, et pour calculer la première grandeur physique comme étant la deuxième valeur.

19. Procédé de mesure d'au moins une première grandeur physique (V, P) d'au moins un écoulement de fluide (F) dans un espace tridimensionnel ayant au moins une interface (I) prédéterminée, située entre au moins deux milieux (M1, M2), **caractérisé en ce que**
au cours d'une première itération on prescrit par au moins un calculateur au moins une première condition (L) aux limites concernant la première grandeur physique (V, P) de l'écoulement de fluide (F) prise en au moins un premier point test prédéterminé (P1) de l'interface (I), associée à respectivement au moins une première source située en une position associée, prescrite et distincte de l'interface (I), on calcule par le calculateur (CAL) par méthode de calcul de la source ponctuelle répartie, en au moins un deuxième point (P) de l'espace, différent du premier point test (P1), une première valeur de la première grandeur physique à partir de la première condition (L) aux limites et d'au moins la première source,
au cours d'une deuxième itération, on prescrit par le calculateur au moins une deuxième condition (L) aux limites concernant la première grandeur physique (V, P) de l'écoulement de fluide (F) prise au premier point test prédéterminé (P1) de l'interface (I), associée à respectivement au moins une deuxième source située en une position associée, prescrite et distincte de l'interface (I), on calcule par le calculateur (CAL) par méthode de calcul des sources ponctuelles réparties, une deuxième valeur de la première grandeur physique en le deuxième point (P) de l'espace à partir de la deuxième condition (L) aux limites et d'au moins la deuxième source,
la première source et la deuxième source étant différentes l'une de l'autre et et étant choisies parmi des sources ponctuelles de débit massique de fluide et/ou de force,
on calcule la première grandeur physique en combinant par le calculateur la première valeur et la deuxième valeur.

20. Programme d'ordinateur, comportant des instructions pour la mise en œuvre du procédé de mesure selon la revendication 19, lorsqu'il est mis en œuvre sur un calculateur.

**Patentansprüche**

1. Vorrichtung zur Messung mindestens einer ersten physikalischen Größe (V, P) mindestens einer Fluidströmung (F) in einem dreidimensionalen Raum mit mindestens einer vorbestimmten, zwischen mindestens zwei Medien (M1, M2) gelagerten Schnittstelle (I), **dadurch gekennzeichnet, dass** die Vorrichtung enthält:

mindestens einen Rechner mit Einrichtungen (E) zur Festsetzung mindestens zweier ersten und zweiten Grenzbedingungen (L) bezüglich der ersten physikalischen, mindestens an einem ersten vorbestimmten Testpunkt (P1) der Schnittstelle (I) betrachteten Größe (V, P) der Fluidströmung (F), welche Grenzbedingungen jeweils mindestens einer ersten Quelle und mindestens einer zweiten Quelle zugeordnet sind, die unter einander verschieden sind und jeweils an festgesetzten, von der Schnittstelle (I) unterschiedlichen Positionen verteilt sind, wobei die erste Quelle und die zweite Quelle aus Punktquellen von Fluidmassenstrom und/oder von Kraft ausgewählt sind, wobei der Rechner (CAL) Recheneinrichtungen aufweist, die dazu eingerichtet sind, mittels der Berechnungsmethode der verteilten Punktquellen einen ersten Wert für die erste physikalische Größe anhand der ersten Grenzbedingung (L) und mindestens der ersten Quelle und mindestens einen zweiten Wert für die erste physikalische Größe anhand wenigstens der zweiten Grenzbedingung und mindestens der zweiten Quelle an mindestens einem zweiten, vom ersten Testpunkt (P1) abweichenden Punkt (P) des Raums zu berechnen, und anschließend die jeweils anhand der Grenzbedingungen und Quellen gewonnenen Werte zur Berechnung der ersten physikalischen Größe zu kombinieren.

2. Messvorrichtung nach Anspruch 1, **dadurch gekennzeichnet, dass** die Schnittstelle (I) mindestens eine Oberfläche (SUR) mindestens eines gegenüber dem Fluid (F) undurchlässigen Festkörpers umfasst, wobei mindestens eine der Quellen (S), die dem ersten Testpunkt (P1) zugeordnet ist, vom ersten Testpunkt (P1) beabstandet, unterhalb der Oberfläche (SUR) des Festkörpers, der Fluidströmung (F) abgewandt gelagert ist, wobei die Quelle derart modelliert ist, um Fluid oder eine Kraft durch die Schnittstelle (I) zu befördern.

3. Messvorrichtung nach Anspruch 1, **dadurch gekennzeichnet, dass** die Festsetzungseinrichtungen dazu vorgesehen sind, außerdem mindestens eine weitere Grenzbedingung für die Fluidströmung an mindestens einem weiteren, mit einem festgesetzten Abstand von der Schnittstelle (I) beabstandeten Punkt und eine gesamte, festgesetzte Richtung der Fluidströmung von diesem beabstandeten Punkt hin zu der Schnittstelle (I) festzusetzen.

4. Messvorrichtung nach einem der vorhergehenden Ansprüche, **dadurch gekennzeichnet, dass** die erste Quelle eine erste Richtung der Fluid- oder Kraftausgabe aufweist, und die zweite Quelle eine zweite Richtung der Fluid- oder Kraftausgabe aufweist, die von der ersten Richtung der Fluidausgabe abweicht.

5. Messvorrichtung nach einem der vorhergehenden Ansprüche, **dadurch gekennzeichnet, dass** die erste Quelle mindestens eine Punktquelle von radialem Fluidmassenstrom ist bzw. umfasst.

6. Messvorrichtung nach einem der vorhergehenden Ansprüche, **dadurch gekennzeichnet, dass** die zweite Quelle mindestens eine Punktquelle von einem um eine bestimmte Richtung drehbeweglichen Fluidmassenstrom ist bzw. umfasst.

7. Messvorrichtung nach einem der vorhergehenden Ansprüche, **dadurch gekennzeichnet, dass** die zweite Quelle mindestens eine Kraftpunktquelle ist bzw. umfasst.

8. Vorrichtung nach einem der vorhergehenden Ansprüche, **dadurch gekennzeichnet, dass** in den Recheneinrichtungen eine Gesamtlösungsmatrix M gespeichert ist, wobei mindestens ein Koeffizient ($M_{ij}$) enthalten ist, der zugleich von einem festgesetzten, das Fluid ($\rho$, $\mu$) darstellenden Wert und von dem Abstand ($R_{ij}$) zwischen der ersten und/oder zweiten Quelle (S) und einem vierten Punkt (P) des Raums abhängig ist, wobei das Ergebnis aus der Multiplikation der an den ersten Testpunkten (P1) als vierten Punkt (P) des Raums betrachteten Gesamtlösungsmatrix M mit einem ersten Vektor J der Parameter der ersten und/oder zweiten Quelle (S) gleich einem zweiten Vektor C der Grenzbedingungen bezüglich der ersten physikalischen, an den ersten Testpunkten (P1) betrachteten Größe (V) der Fluidströmung gemäß der Gleichung ist

$$CC = M * J,$$

wo * die Multiplikation ist,
und unter den Recheneinrichtungen sind wie folgt vorgesehen:

- eine Einrichtung zur Umkehr der an den ersten Testpunkten (P1) als vierten Punkt (P) des Raums betrachteten Gesamtlösungsmatrix M, um die Kehrmatrix $M^{-1}$ zu berechnen,
- eine Einrichtung zur Berechnung des ersten Vektors J der Parameter der ersten und/oder zweiten Quelle (S) durch Multiplikation der Kehrmatrix $M^{-1}$ mit dem zweiten Vektor C der Grenzbedingungen für die erste physikalische, an den ersten Testpunkten (P1) betrachtete Größe (V) der Fluidströmung gemäß der Gleichung

$$J = M^{-1} * C$$

- eine Einrichtung zur Berechnung der ersten physikalischen Größe (V, P) der Fluidströmung (F) am zweiten Punkt (P) des Raums mit einer bestimmten Position, wobei die Gesamtlösungsmatrix M, welche an der bestimmten Position des zweiten Punkts (P) als vierten Punkt (P) berechnet wird, mit dem ersten Vektor J der Parameter der ersten und/oder zweiten Quelle (S) multipliziert wird, wobei der festgesetzte, das Fluid darstellende Wert die Massendichte $\rho$ des Fluids und/oder die kinematische Viskosität $\mu$ des Fluids ist.

9. Messvorrichtung nach Anspruch 8, **dadurch gekennzeichnet, dass** die Gesamtlösungsmatrix (M) mehrere Koeffizienten enthält, wovon mindestens einer, für mindestens eine Punktquelle von Fluidmassenstrom als erste und/oder zweite Quelle (S) gleich ist:

$$\pm(x_i-x_j)/(4.\pi.\rho.R_{ij}),$$

oder

$$\pm(y_i-x_j)/(4.\pi.\rho.R_{ij})$$

oder

$$\pm(z_i-z_j)/(4.\pi.\rho.R_{ij}),$$

oder

$$\pm(x_i-x_j)/(4.\pi.\rho.R_{ij}^3)$$

oder

$$\pm(y_i-x_j)/(4.\pi.\rho.R_{ij}^3)$$

oder

$$\pm(z_i-z_j)/(4.\pi.\rho.R_{ij}^3),$$

oder

$1/(4.\pi.\rho.R_{ij})$, oder einem dieser, multipliziert mit einer festgesetzten Konstante, durch welche der erste Vektor (J) der Parameter für die Punktquelle (Sj) von Fluidmassenstrom geteilt wird, wo $R_{ij}$ der Abstand zwischen der an dem dritten Punkt (P2) mit festgesetzter Position $x_j$, $y_j$, $z_j$ gemäß drei nicht koplanaren Richtungen x, y und z des Raums gelagerten Punktquelle (Sj) von Fluidmassenstrom und dem vierten Punkt (P) des Raums mit Koordinaten $x_i$, $y_i$, $z_i$ gemäß den drei Richtungen x, y und z ist.

**10.** Messvorrichtung nach Anspruch 8 oder 9, **dadurch gekennzeichnet, dass** die Gesamtlösungsmatrix (M) mehrere Koeffizienten enthält, wovon mindestens einer, für mindestens eine Punktquelle von Kraft als erste und/oder zweite Quelle (S) gleich einem aus:

$$(x_i-x_j)/(8.\pi.\mu.R_{ij}), \ (y_i-y_j)/(8.\pi.\mu.R_{ij}), \ (z_i-z_j)/(8.\pi.\mu.R_{ij}),$$

$$(x_i-x_j)^2/(8.\pi.\mu.R_{ij}), \ (y_i-y_j)^2/(8.\pi.\mu.R_{ij}), \ (z_i-z_j)^2/(8.\pi.\mu.R_{ij}),$$

$$(x_i-x_j).(y_i-y_j)/(8.\pi.\mu.R_{ij}^3), \ (x_i-x_j).(z_i-z_j)/(8.\pi.\mu.R_{ij}^3), \ (z_i-z_j).(y_i-y_j)/(8.\pi.\mu.R_{ij}^3)$$

ist,

oder einem dieser, multipliziert mit einer festgesetzten Konstante, durch welche der erste Vektor (J) der Parameter der Punktquelle (Sj) von Kraft geteilt wird, wo $R_{ij}$ der Abstand zwischen der an dem dritten Punkt (P2) mit festgesetzten Position $x_j$, $y_j$, $z_j$ gemäß drei nicht koplanaren Richtungen x, y und z des Raums gelagerten Punktquelle (Sj) von Kraft und dem vierten Punkt (P) des Raums mit Koordinaten $x_i$, $y_i$, $z_i$ gemäß den drei Richtungen x, y und z ist.

**11.** Messverfahren nach einem der vorhergehenden Ansprüche, **dadurch gekennzeichnet, dass** die Fluidströmung in der Luft erfolgt.

**12.** Messvorrichtung nach einem der vorhergehenden Ansprüche, **dadurch gekennzeichnet, dass** der Rechner (CAL) dritte Recheneinrichtungen einer zweiten Steuergröße eines Aktors anhand mindestens der ersten berechneten physikalischen Größe (V, P) enthält.

**13.** Messvorrichtung nach einem der vorhergehenden Ansprüche, **dadurch gekennzeichnet, dass** die erste Quelle mindestens eine Punktquelle (S) von radialem Fluidmassenstrom ist bzw. umfasst, die bei der ersten Grenzbedingung (L) an dem ersten Testpunkt (P1) eine normale Komponente von Fluidgeschwindigkeit am ersten Testpunkt (P1) aufweist, welche an der Schnittstelle (I) gleich Null ist, und/oder bei einer anderen, festgesetzten Grenzbedingung an mindestens einem weiteren, mit einem festgesetzten Abstand von der Schnittstelle (I) beabstandeten Punkt eine festgesetzte Geschwindigkeitskomponente aufweist.

**14.** Messvorrichtung nach Anspruch 12, **dadurch gekennzeichnet, dass** die zweite Quelle eine Punktquelle von um eine bestimmte Richtung drehbeweglichem Fluidmassenstrom ist bzw. umfasst, die bei der zweiten Grenzbedingung (L) an dem ersten Testpunkt (P1) eine Komponente der Fluidgeschwindigkeit am ersten Testpunkt (P1) aufweist, welche festgesetzt und dabei an der Schnittstelle (I) nicht gleich Null und tangential ist, und/oder die bei einer weiteren, festgesetzten Grenzbedingung an mindestens einem weiteren, mit einem festgesetzten Abstand von der Schnittstelle (I) beabstandeten Punkt eine festgesetzte Geschwindigkeitskomponente aufweist.

**15.** Messvorrichtung nach einem der vorhergehenden Ansprüche, **dadurch gekennzeichnet, dass** der Rechner (CAL) zweite Einrichtungen zur Berechnung einer von der ersten physikalischen Größe (V, P) abweichenden Eigenschaft der Schnittstelle (I) in der Fluidströmung (F) anhand der ersten, berechneten physikalischen Größe (V, P) enthält, wobei die Eigenschaft der durch die Schnittstelle (I) in der Fluidströmung (F) induzierte Streifen und/oder die Tragfähigkeit der Schnittstelle (I) in der Fluidströmung (F) und/oder eine Reibkraft in der Schnittstelle (I) in der Fluidströmung (F) ist.

**16.** Messvorrichtung nach einem der vorhergehenden Ansprüche, **dadurch gekennzeichnet, dass** die erste Grenzbedingung von der zweiten Grenzbedingung abweicht.

**17.** Messvorrichtung nach einem der vorhergehenden Ansprüche, **dadurch gekennzeichnet, dass** die Recheneinrichtungen derart eingerichtet sind, um den ersten Wert mit dem zweiten Wert durch Summierung zu kombinieren, woraus sich die erste physikalische Größe ergibt.

**18.** Messvorrichtung nach einem der vorhergehenden Ansprüche, **dadurch gekennzeichnet, dass** die Recheneinrichtungen derart eingerichtet sind, um den zweiten Wert anhand der ersten Quelle und der zweiten Quelle zu berechnen, und um die erste physikalische Größe als zweiten Wert zu berechnen.

**19.** Verfahren zur Messung mindestens einer ersten physikalischen Größe (V, P) mindestens einer Fluidströmung (F) in einem dreidimensionalen Raum mit mindestens einer vorbestimmten, zwischen mindestens zwei Medien (M1, M2) gelagerten Schnittstelle (I), **dadurch gekennzeichnet, dass**
bei einer ersten Iteration mindestens eine erste Grenzbedingung (L) bezüglich der ersten physikalischen, an mindestens einem ersten vorbestimmten Testpunkt (P1) der Schnittstelle (I) betrachteten Größe (V, P) der Fluidströmung (F) durch mindestens einen Rechner festgesetzt wird, welche jeweils mindestens einer ersten, an einer zugeordneten, festgesetzten und von der Schnittstelle (I) abweichenden Position gelagerten Quelle zugeordnet ist, ein erster Wert der ersten physikalischen Größe anhand der ersten Grenzbedingung (L) und mindestens der ersten Quelle, durch den Rechner (CAL) mittels der Berechnungsmethode der ersten verteilten Punktquelle an mindestens einem zweiten, von dem ersten Testpunkt (P1) abweichenden Punkt (P) des Raums berechnet wird,
bei einer zweiten Iteration mindestens eine zweite Grenzbedingung (L) bezüglich der ersten physikalischen, an dem ersten vorbestimmten Testpunkt (P1) der Schnittstelle (I) betrachteten Größe (V, P) der Fluidströmung (F) durch den Rechner festgesetzt wird, welche jeweils mindestens einer zweiten, an einer zugeordneten, festgesetzten und von der Schnittstelle (I) abweichenden Position gelagerten Quelle zugeordnet wird, ein zweiter Wert der ersten physikalischen Größe an dem zweiten Punkt (P) des Raums anhand der zweiten Grenzbedingung (L) und mindestens der zweiten Quelle, durch den Rechner (CAL) mittels der Berechnungsmethode der verteilten Punktquellen berechnet wird,
wobei die erste Quelle und die zweite Quelle unter einander verschieden sind und aus Punktquellen von Fluidmassenstrom und/oder von Kraft ausgewählt sind,
die erste physikalische Größe dadurch berechnet wird, dass der Rechner den ersten Wert mit dem zweiten Wert kombiniert.

20. Computerprogramm, umfassend Anweisungen zur Verarbeitung des Messverfahrens nach Anspruch 19, wenn es in einem Rechner eingesetzt wird.

**Claims**

1. A device for measuring at least a first physical quantity (V, P) of at least one fluid flow (F) in a three-dimensional space having at least one predetermined interface (I), situated between at least two media (M1, M2), **characterized in that** the device comprises:

   at least one computer having means (E) for prescribing at least two first and second boundary conditions (L) concerning the first physical quantity (V, P) of the fluid flow (F) taken at least at a first predetermined test point (P1) of the interface (I), associated respectively with at least one first source and with at least one second source, different to one another and distributed respectively at prescribed positions, distinct from the interface (I), the first source and the second source being selected from point sources of mass flow of fluid and/or force, the computer (CAL) having calculation means configured to calculate, by distributed point source calculation method, a first value of the first physical quantity from the first boundary condition (L) and from at least the first source and at least one second value of the first physical quantity from at least the second boundary condition and from at least the second source, in at least one second point (P) of the space, different from the first test point (P1), then to combine the values obtained respectively from the boundary conditions and sources in order to calculate the first physical quantity.

2. The measurement device as claimed in claim 1, **characterized in that** the interface (I) comprises at least one surface (SUR) of at least one solid, impermeable to the fluid (F), at least one of the sources (S), associated with the first test point (P1), being situated at a distance from the first test point (P1) below the surface (SUR) of the solid, on the other side of the fluid flow (F), the source being modeled to send fluid or a force through the interface (I).

3. The measurement device as claimed in claim 1, **characterized in that** the prescribing means are provided to further prescribe at least one other boundary condition of the fluid flow in at least one other point at a prescribed distance away from the interface (I) and a prescribed global direction of flow of the fluid flow from this distant point to the interface (I).

4. The measurement device as claimed in any one of the preceding claims, **characterized in that** the first source has a first fluid or force emission orientation, and the second source has a second fluid or force emission orientation which is different from the first fluid emission orientation.

5. The measurement device as claimed in any one of the preceding claims, **characterized in that** the first source is or comprises at least one point source of radial mass flow of fluid.

6. The measurement device as claimed in any one of the preceding claims, **characterized in that** the second source is or comprises at least one point source of rotational mass flow of fluid about a determined direction.

7. The measurement device as claimed in any one of the preceding claims, **characterized in that** the second source is or comprises at least one point source of force.

8. The device as claimed in any one of the preceding claims, **characterized in that** the calculation means store a global resolution matrix M, comprising at least one coefficient ($M_{ij}$) dependent on both a prescribed value characterizing the fluid ($\rho$, $\mu$) and the distance ($R_{ij}$) between the first and/or second source (S) and a fourth point (P) of the space,
the product of the global resolution matrix M, taken at the first test points (P1) as fourth point (P) of the space, multiplied by a first vector J of the parameters of the first and/or second source (S), being equal to a second vector C of the boundary conditions concerning the first physical quantity (V) of the fluid flow taken at the first test points (P1), according to the equation

$$C = M * J,$$

where * designates multiplication,

the calculation means include:

- a means for inverting the global resolution matrix M, taken at the first test points (P1) as fourth point (P) of the space, to calculate the inverse matrix M$^{-1}$,
- a means for calculating the first vector J of the parameters of the first and/or second source (S) by multiplying the inverse matrix M$^{-1}$ by the second vector C of the boundary conditions of the first physical quantity (V) of the fluid flow taken at the first test points (P1), according to the equation

$$J = M^{-1} * C$$

- a means for calculating the first physical quantity (V, P) of the fluid flow (F) at the second point (P) of the space having a determined position, by multiplying the global resolution matrix M, calculated at said determined position of the second point (P) as fourth point (P), by the first vector J of the parameters of the first and/or second source (S),
the prescribed value characterizing the fluid being the density $\rho$ of the fluid and/or the kinematic viscosity $\mu$ of the fluid.

9. The measurement device as claimed in claim 8, **characterized in that** the global resolution matrix (M) comprises several coefficients, of which at least one is equal to, for at least one point source of mass flow of fluid as first and/or second source (S):

$$\pm(x_i-x_j)/(4.\pi.\rho.R_{ij}),$$

or to

$$\pm(y_i-y_j)/(4.\pi.\rho.R_{ij})$$

or to

$$\pm(z_i-z_j)/(4.\pi.\rho.R_{ij}),$$

or to

$$\pm(x_i-x_j)/(4.\pi.\rho.R_{ij}^{3}),$$

or to

$$\pm(y_i-y_j)/(4.\pi.\rho.R_{ij}^{3})$$

or to

$$\pm(z_i-z_j)/(4.\pi.\rho.R_{ij}^{3}),$$

or to
$1/(4.\pi.\rho.R_{ij})$, or to one thereof, multiplied by a prescribed constant, by which the first vector (J) of the parameters of the point source (Sj) of mass flow rate of fluid is divided, where $R_{ij}$ is the distance between the point source (Sj) of mass flow rate of fluid situated at the third point (P2) of prescribed position $x_j$, $y_j$, $z_j$ according to three non-coplanar directions x, y and z of the space and the fourth point (P) of the space having coordinates $x_i$, $y_i$, $z_i$ according to the three directions x, y and z.

10. The measurement device as claimed in claim 8 or 9, **characterized in that** the global resolution matrix (M) comprises several coefficients, of which at least one is equal to one out of, for at least one point source of force as first and/or second source (S):

$$(x_i-x_j)/(8.\pi.\mu.R_{ij}), \ (y_i-y_j)/(8.\pi.\mu.R_{ij}), \ (z_i-z_j)/(8.\pi.\mu.R_{ij}),$$

$$(x_i-x_j)^2/(8.\pi.\mu.R_{ij}), \ (y_i-y_j)^2/(8.\pi.\mu.R_{ij}), (z_i-z_j)^2/(8.\pi.\mu.R_{ij}),$$

$$(x_i-x_j).(y_i-y_j)/(8.\pi.\mu.R_{ij}^3), \ (x_i-x_j).(z_i-z_j)/(8.\pi.\mu.R_{ij}^3), \ (z_i-z_j).(y_i-y_j)/(8.\pi.\mu.R_{ij}^3),$$

or to one thereof, multiplied by a prescribed constant, by which the first vector (J) of the parameters of the point source (Sj) of force is divided, where $R_{ij}$ is the distance between the point source (Sj) of force situated at the third point (P2) of prescribed position $x_j$, $y_j$, $z_j$ according to three non-coplanar directions x, y and z of the space and the fourth point (P) of the space having coordinates $x_i$, $y_i$, $z_i$ according to the three directions x, y and z.

11. The measurement device as claimed in any one of the preceding claims, **characterized in that** the fluid flow is situated in air.

12. The measurement device as claimed in any one of the preceding claims, **characterized in that** the computer (CAL) comprises third means for calculating a second actuator control quantity from at least the first physical quantity (V, P) having been calculated.

13. The measurement device as claimed in any one of the preceding claims, **characterized in that** the first source is or comprises at least one point source (S) of radial mass fluid flow for the first boundary condition (L) having, at the first test point (P1), a normal component of fluid velocity at the first test point (P1), which is zero at the interface (I) and/or for another prescribed boundary condition having, in at least one other point at a prescribed distance away from the interface (I), a prescribed velocity component.

14. The measurement device as claimed in claim 12, **characterized in that** the second source is or comprises at least one point source of rotational mass flow of fluid about a determined direction, for the second boundary condition (L) having, at the first test point (P1), a fluid velocity component at the first test point (P1), which is prescribed as being non-zero and tangential to the interface (I) and/or for another prescribed boundary condition having, in at least one other point at a prescribed distance away from the interface (I), a prescribed velocity component.

15. The measurement device as claimed in any one of the preceding claims, **characterized in that** the computer (CAL) comprises second means for calculating, from the first physical quantity (V, P) having been calculated, a property of the interface (I) in the fluid flow (F), different from the first physical quantity (V, P), the property being the drag induced by the interface (I) in the fluid flow (F) and/or the lift of the interface (I) in the fluid flow (F) and/or a friction force of the interface (I) in the fluid flow (F).

16. The measurement device as claimed in any one of the preceding claims, **characterized in that** the first boundary condition is different from the second boundary condition.

17. The measurement device as claimed in any one of the preceding claims, **characterized in that** the calculation means are configured to combine the first value and the second value by addition supplying the first physical quantity.

18. The measurement device as claimed in any one of the preceding claims, **characterized in that** the calculation means are configured to calculate the second value from the first source and from the second source, and to calculate the first physical quantity as being the second value.

19. A method for measuring at least one first physical quantity (V, P) of at least one fluid flow (F) in a three-dimensional space having at least one predetermined interface (I), situated between at least two media (M1, M2), **characterized in that**
during a first iteration, there is prescribed, by at least one computer, at least one first boundary condition (L) concerning the first physical quantity (V, P) of the fluid flow (F) taken in at least one first predetermined test point (P1) of the interface (I), associated respectively with at least one first source situated at an associated position, prescribed and distinct from the interface (I), there is calculated, by the computer (CAL) by distributed point source calculation method, in at least one second point (P) of the space, different from the first test point (PI), a first value of the first physical quantity from the first boundary condition (L) and from at least the first source,

during a second iteration, there is prescribed, by the computer, at least one second boundary condition (L) concerning the first physical quantity (V, P) of the fluid flow (F) taken at the first predetermined test point (P1) of the interface (I), associated respectively with at least one second source situated at an associated position, prescribed and distinct from the interface (I), and there is calculated, by the computer (CAL) by distributed point source calculation method, a second value of the first physical quantity at the second point (P) of the space from the second boundary condition (L) and from at least the second source,

the first source and the second source being different to one another and being chosen from point sources of mass flow of fluid and/or of force,

the first physical quantity is calculated by combining, by the computer, the first value and the second value.

20. A computer program, comprising instructions for implementing the measurement method as claimed in claim 19 when it is implemented on a computer.

## FIG. 1A

## FIG. 1B

## FIG. 2

ME     CAL5   CAL7     CAL4   SD

$\underline{V,P}$

CAL

CAL1    CAL6     CAL2     CAL3

## FIG. 3

E1

E2

E3

## FIG. 4A

## FIG. 4B

## FIG. 5A

$V_y - V_{vent} = 100 \text{ m.s}^{-1}$ $V_{sol} = 0$ $V_{cyl}^n = 0$ - $R_{cyl} = 20 \text{ m}$ - $z_{cyl} = 100 \text{ m}$

## FIG. 5B

Ligne courant - $V_{vent} = 100 \text{ m.s}^{-1}$ $V_{sol} = 0$ $V_{cyl}^n = 0$ - $R_{cyl} = 20 \text{ m}$ - $z_{cyl} = 100 \text{ m}$

## FIG. 6A

$V_y$ - $R_1$ = 40 m $z_1$ = 130 m - $R_2$ = 20 m $z_2$ = 40 m

## FIG. 6B

Ligne courant - $R_1$ = 40 m $z_1$ = 130 m - $R_2$ = 20 m $z_2$ = 40 m

## FIG. 7A

$V_y$ - $V_{vent}$ = 100 m.s$^{-1}$ $V_{sol}$ = 0 $V_{cyl}$ = 0 m.s$^{-1}$ - $R_{cyl}$ = 20 m - $z_{cyl}$ = 100 m

## FIG. 7B

Ligne courant - $V_{vent}$ = 100 m.s$^{-1}$ $V_{sol}$ = 0 $V_{cyl}$ = 0 m.s$^{-1}$ - $R_{cyl}$ = 20 m - $z_{cyl}$ = 100 m

## FIG. 8

$R_{cylindre} = 20\ m - z_{cylindre} = 100\ m$

C4  C2

C3

C1

C3

C1

C4

C2

$V_y$

z(m)

$\underline{\ C1\ }$ $V_{sol}^n = 0$  $V_{cyl}^n = 0$  $\underline{\ C2\ }$ $V_{sol}^n = 0$  $V_{cyl}^n = 0$

$\underline{\ C3\ }$ $V_{sol}^n = 0$  $V_{cyl} = 0$  $\underline{\ C4\ }$ $V_{sol} = 0$  $V_{cyl} = 0$

## FIG. 9

$R_{cylindre} = 20\ m - z_{cylindre} = 100\ m$

C3  C4

C2

C1

$V_y$

z(m)

$\underline{\ C1\ }$ $V_{sol}^n = 0$  $V_{cyl}^n = 0$  $\underline{\ C2\ }$ $V_{sol}^n = 0$  $V_{cyl}^n = 0$

$\underline{\ C3\ }$ $V_{sol}^n = 0$  $V_{cyl} = 0$  $\underline{\ C4\ }$ $V_{sol} = 0$  $V_{cyl} = 0$

# FIG. 10

$R_{cylindre} = 20 \text{ m} - z_{cylindre} = 100 \text{ m}$

C1 $V_{sol}^{n} = 0$ $V_{cyl}^{n} = 0$   C2 $V_{sol} = 0$ $V_{cyl}^{n} = 0$

C3 $V_{sol}^{n} = 0$ $V_{cyl} = 0$   C4 $V_{sol} = 0$ $V_{cyl} = 0$

## FIG. 11A

$V_y$ - $V_{vent}$ = 100 m.s$^{-1}$ $V_{sol}$ = 0 $V_{cyl}$ = 100 m.s$^{-1}$ - $R_{cyl}$ = 20 m - $z_{cyl}$ = 100 m

## FIG. 11B

Ligne courant - $V_{vent}$ = 100 m.s$^{-1}$ $V_{sol}$ = 0 $V_{cyl}$ = 100 m.s$^{-1}$ - $R_{cyl}$ = 20 m - $z_{cyl}$ = 100 m

## FIG. 12A

$V_y - V_{vent} = 100 \text{ m.s}^{-1} \; V_{sol} = 0 \; V_{cyl} = 100 \text{ m.s}^{-1} - R_{cyl} = 20 \text{ m} - z_{cyl} = 100 \text{ m}$

## FIG. 12B

$\text{Ligne courant} - V_{vent} = 100 \text{ m.s}^{-1} \; V_{sol} = 0 \; V_{cyl} = 100 \text{ m.s}^{-1} - R_{cyl} = 20 \text{ m} - z_{cyl} = 100 \text{ m}$

## FIG. 12C
### J1 - cylindre

## FIG. 12D

### J1$_1$ - cylindre

FIG. 12E

FIG. 12F

FIG. 12G

Indice du point

## FIG. 13A

$V_y - V_{vent} = 100 \text{ m.s}^{-1} \ V_{sol} = 0 \ V_{cyl} = 500 \text{ m.s}^{-1} - R_{cyl} = 20 \text{ m} - z_{cyl} = 100 \text{ m}$

## FIG. 13B

Ligne courant - $V_{vent} = 100 \text{ m.s}^{-1} \ V_{sol} = 0 \ V_{cyl} = 500 \text{ m.s}^{-1} - R_{cyl} = 20 \text{ m} - z_{cyl} = 100 \text{ m}$

## FIG. 14A

$V_y - V_{vent} = 100\ m.s^{-1}\ V_{sol} = 0\ V_{cyl} = 25\ m.s^{-1} - R_{cyl} = 20\ m - z_{cyl} = 100\ m$

## FIG. 14B

Ligne courant - $V_{vent} = 100\ m.s^{-1}\ V_{sol} = 0\ V_{cyl} = 25\ m.s^{-1} - R_{cyl} = 20\ m - z_{cyl} = 100\ m$

## FIG. 15A

$V_y - V_{vent} = 100 \text{ m.s}^{-1} - V_{sol} = 0 \text{ m.s}^{-1} - V_{cyl} = 0 \text{ m.s}^{-1}$

## FIG. 15B

Ligne courant - $V_{vent}$ = 100 m.s$^{-1}$ - $V_{sol}$ = 0 m.s$^{-1}$ - $V_{cyl}$ = 0 m.s$^{-1}$

## FIG. 15C

Ligne courant - $V_{vent}$ = 100 m.s$^{-1}$ - $V_{sol}$ = 0 m.s$^{-1}$ - $V_{cyl}$ = 0 m.s$^{-1}$

$$R_{cyl} = 20 \text{ m} - R_{cl} = 25 \text{ m} - z_{cyl} = 100 \text{ m}$$

**FIG. 15D**

$$R_{cyl} = 20 \text{ m} - R_{cl} = 25 \text{ m} - z_{cyl} = 100 \text{ m}$$

**FIG. 15E**

**FIG. 15F**

## FIG. 16A

$V_{vent} = 100 \ m.s^{-1} - V_{sol} = 0 \ m.s^{-1} - V_{cyl} = 0 \ m.s^{-1}$

R1 $R_{cercle} = 20 \ m$   R2 $R_{cercle} = 21.25 \ m$   R3 $R_{cercle} = 22.5 \ m$

R4 $R_{cercle} = 23.75 \ m$   R5 $R_{cercle} = 25 \ m$

## FIG. 16B

$V_{vent} = 100 \ m.s^{-1} - V_{sol} = 0 \ m.s^{-1} - V_{cyl} = 0 \ m.s^{-1}$

R6 $R_{cercle} = 20 \ m$   R7 $R_{cercle} = 21.25 \ m$   R8 $R_{cercle} = 22.5 \ m$

R9 $R_{cercle} = 23.75 \ m$   R10 $R_{cercle} = 25 \ m$

## FIG. 16C
### J1 - cylindre

## FIG. 16D

### J1 - cylindre - recul = 0.5 dispatch = 0.5

FIG. 16E

FIG. 16F

FIG. 16G

FIG. 16H

Indice du point

## FIG. 17A

$V_y - V_{vent} = 100$ m.s$^{-1}$ - $V_{sol} = 0$ m.s$^{-1}$ - $V_{cyl} = 100$ m.s$^{-1}$

## FIG. 17B

Ligne courant - $V_{vent}$ = 100 m.s$^{-1}$ - $V_{sol}$ = 0 m.s$^{-1}$ - $V_{cyl}$ = 0 m.s$^{-1}$

## FIG. 17C

Ligne courant - $V_{vent}$ = 100 m.s$^{-1}$ - $V_{sol}$ = 0 m.s$^{-1}$ - $V_{cyl}$ = 0 m.s$^{-1}$

## FIG. 18A

$V_{vent} = 100 \text{ m.s}^{-1}$ - $V_{sol} = 0 \text{ m.s}^{-1}$ - $V_{cyl} = 100 \text{ m.s}^{-1}$

R11 $R_{cercle}$ = 20 m   R12 $R_{cercle}$ = 21.25 m   R13 $R_{cercle}$ = 22.5 m

R14 $R_{cercle}$ = 23.75 m   R15 $R_{cercle}$ = 25 m

## FIG. 18B

$V_{vent} = 100 \text{ m.s}^{-1}$ - $V_{sol} = 0 \text{ m.s}^{-1}$ - $V_{cyl} = 100 \text{ m.s}^{-1}$

R16 $R_{cercle}$ = 20 m   R17 $R_{cercle}$ = 21.25 m   R18 $R_{cercle}$ = 22.5 m

R19 $R_{cercle}$ = 23.75 m   R20 $R_{cercle}$ = 25 m

## FIG. 18C

**J1 - cylindre**

## FIG. 18D

**J1 - cylindre - recul = 0.5 dispatch = 0.5**

FIG. 18E

FIG. 18F

FIG. 18G

FIG. 18H

**Indice du point**

## FIG. 19A

**FIG. 19B**

**FIG. 19C**

**Entrée d'air - $S_{1E}$ - $V_0 = 100$ m.s$^{-1}$**

FIG. 19D

FIG. 19E

FIG. 19F

**Sol - $S_{1B}$ - $V = 0$**

FIG. 19G

FIG. 19H

FIG. 19I

## FIG. 19J

### Objet- $S_{1A}$

Indice du point

### Entrée d'air - $S_{1S}$ - $V_0 = 100$ m.s$^{-1}$

Source 1

**FIG. 19K**

Source 2

**FIG. 19L**

Source 3

**FIG. 19M**

Indice du point

FIG. 19N — Plan YOZ - $V_x$

FIG. 19P — Plan XOY - $V_x$

FIG. 19O — Plan YOZ - $V_y$

FIG. 19Q — Plan XOY - $V_y$

FIG. 19T — Plan XOY - V_z

FIG. 19R — Plan YOZ - V_z

FIG. 19S — Plan YOZ - M

## FIG. 19U

Plan YOZ - Lignes courant

I,CYL

z(m)

y(m)

## FIG. 19V

Plan XOY - Lignes courant

z(m)

I,CYL

y(m)

EP 3 146 306 B1

# FIG. 20

# FIG. 21

# FIG. 22

# FIG. 23

## FIG. 24

## FIG. 25

## FIG. 26

## FIG. 27A

## FIG. 27B

## FIG. 27C

## FIG. 28A

## FIG. 28B

## FIG. 28C

## FIG. 29

## FIG. 30

## FIG. 31

## FIG. 32

## FIG. 33

## FIG. 34

# FIG. 35

## Organigramme du procédé

Configuration        Viscosité →

|  | Fluide parfait | Viscosité locale | Fluide visqueux |
|---|---|---|---|
| OBJETS ISOLES | Sources Scalaires ①②③ | Sources Rotationnelles ⑧ | Sources Stockeslets ⑪ |
| INTERFACES MONO - CONFIG | Interfaces CLI/CLU ④ | Interfaces CLI/CLU | Interfaces CLI/CLU |
| STRATIFICATION Conditions Limites | Interfaces CLI/CLU/CLS ⑤ | Interfaces CLI/CLU/CLS | Interfaces CLI/CLU/CLS |
| SOURCES HYBRIDES | Scalaires + Rotationnelles CLI/CLU ⑥⑦⑨ | | |
| INTERFACES MULTI - CONFIG + MEME MILIEUX | Scalaires + Rotationnelles CLI/CLU/CLS ⑩ | | |
| INTERFACES MULTI -CONFIG + MILIEUX ≠ | Scalaires + Rotationnelles + Stockeslets CLI/CLU ⑫⑬ | | |

↓ Complexité

Mode de calcul Direct

Mode de calcul Séquentiel intégré

Mode de calcul Séquentiel Sommé

EP 3 146 306 B1

**FIG. 36A**

**FIG. 36B**

**FIG. 36C**

**FIG. 36D**

FIG. 37A

Module vitesse

FIG. 37C

Module vitesse

FIG. 37E

Module vitesse

FIG. 37B

Lignes de courant

FIG. 37D

Lignes de courant

FIG. 37F

Lignes de courant

FIG. 37G

FIG. 38A — Vecteur vitesse sur les surfaces

FIG. 38B — Vecteur vitesse sur les surfaces

FIG. 38C — Vecteur vitesse sur les surfaces

EP 3 146 306 B1

## FIG. 39

FIG. 40A — Lignes de courant : 1

FIG. 40B — Lignes de courant : 2

FIG. 40C — Lignes de courant : 1+2

FIG. 41A — Module vitesse

FIG. 41B — Module vitesse

FIG. 41C — Module vitesse

## FIG. 42A
### SB1

## FIG. 42B
### SB2

## FIG. 42C

## FIG. 42D

## FIG. 42E
### J3 - sol

## FIG. 42F

**FIG. 42G**

J1 - aile

**FIG. 42H**

**FIG. 43A**

SB1

**FIG. 43B**

SB2

**FIG. 43C**

**FIG. 43D**

## FIG. 43E
### J3 - sol

## FIG. 43F

## FIG. 43G
### J1 - aile

## FIG. 43H

FIG. 44A — Lignes de courant : 1

FIG. 44B — Lignes de courant : 2

FIG. 44C — Lignes de courant : 1+2

FIG. 45A — Module vitesse

FIG. 45B — Module vitesse

FIG. 45C — Module vitesse

**FIG. 46A**
SB1

**FIG. 46B**
SB2

**FIG. 46C**

**FIG. 46D**

**FIG. 46E**
J3 - sol

**FIG. 46F**

## FIG. 46G
### J1 - aile

## FIG. 46H

## FIG. 47A
### SB1

## FIG. 47B
### SB2

## FIG. 47C

## FIG. 47D

## FIG. 47E
### J3 - sol

## FIG. 47F

## FIG. 47G
### J1 - aile

## FIG. 47H

FIG. 48A — Lignes courant : 1+2

FIG. 48B — Lignes courant : 1+2

FIG. 48C — Lignes courant : 1+2

FIG. 48D — Lignes courant : 1+2

EP 3 146 306 B1

FIG. 49A  FIG. 49B  FIG. 49C  FIG. 49D

Module vitesse

EP 3 146 306 B1

FIG. 50

## FIG. 51A

# FIG. 51B

## Valeurs des composantes de la vitesse V dans un plan xoy
## (familles de sources vectorielles)

FIG. 52

FIG. 53

FIG. 54

FIG. 55A         FIG. 55B         FIG. 55C

FIG. 56

CZ selon incidence

EP 3 146 306 B1

FIG. 57

FIG. 58

FIG. 59

FIG. 60

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2011092210 A1

- FR 2895544 A1

**Littérature non-brevet citée dans la description**

- **CAC MINH DAO ; SAMIK DAS ; SOURAV BANERJEE ; TRIBIKRAM KUNDU.** Wave propagation in a fluid wedge over a solid half-space - Mesh-free analysis with experimental verification. *International Journal of Solids and Structures,* 01 Juin 2009, vol. 46 (11-12), 2486-2492
- Mesh-free distributed point source method for modeling viscous fluid motion between disks vibrating at ultrasonic frequency. **YUJI WADA ; TRIBIKRAM KUNDU ; KENTARO NAKAMURA.** The Journal of the Acoustical Society of America. American Institute of Physics for the Acoustical Society of America, Août 2014, vol. 136, 466-474
- **TAMAKI YANAGITA ; TRIBIKRAM KUNDU ; DOMINIQUE PLACKO.** Ultrasonic field modeling by distributed point source method for different transducer boundary conditions. *The Journal of the Acoustical Society of America,* Novembre 2009, vol. 126 (5), 2331

- **SOURAV BANERJEE ; TRIBIKRAM KUNDU.** Ultrasonic field modeling in plates immersed in fluid. *International Journal of Solids and Structures,* 2007, vol. 44 (18-19), 6013-6029
- Ultrasonic field modeling : a comparison of analytical, semi-analytical, and numerical techniques. **TRIBIKRAM KUNDU ; DOMINIQUE PLACKO ; EHSAN KABIRI RAHANI ; TAMAKI YANAGITA ; CAC MINH DAO.** IEEE Transactions on Ultrasonics, Ferroelectrics and Frequency Control. IEEE, Décembre 2010, vol. 57, 2795-2807
- **SOURAV BANERJEE ; TRIBIKRAM KUNDU ; DOMINIQUE PLACKO.** *Ultrasonic field modeling in multilayered fluid structures using the distributed point source method technique,* Juillet 2006, vol. 73 (4), 598-609
- **RAGHU RAM TIRUKKAVALLURI ; DR. ABHIJIT MUKHERJEE ; SANDEEP SHARMA.** Ultrasonic Field Modeling of Transient Wave Propagation in Homogenous and Non-Homogenous Fluid Media Using Distributed Point Source Method (DPSM). *Internet Citation,* 2008, 1-113